(19) Europäisches Patentamt

European Patent Office

Office européen des brevets

(11) **EP 0 694 852 B1**

(12) **EUROPEAN PATENT SPECIFICATION**

(45) Date of publication and mention
of the grant of the patent:
**26.06.2002 Bulletin 2002/26**

(51) Int Cl.$^7$: **G06F 15/80**, G06K 9/66

(21) Application number: **94480067.1**

(22) Date of filing: **28.07.1994**

(54) **Innovative neuron circuit architectures**

Innovative Neuronalschaltungsarchitektur

Architectures de circuit neuronal innovatrices

(84) Designated Contracting States:
**DE FR GB**

(43) Date of publication of application:
**31.01.1996 Bulletin 1996/05**

(73) Proprietors:
• **International Business Machines Corporation
Armonk, N.Y. 10504 (US)**
• **Paillet, Guy
34000 Montpellier (FR)**

(72) Inventors:
• **Boulet, Jean Yves
F-91610 Ballancourt Sur Essonne (FR)**
• **Godefroy, Catherine
F-91100 Corbeil Essonnes (FR)**
• **Steimle, André
F-91000 Evry (FR)**

• **Louis, Didier
F-77300 Fontainebleau (FR)**
• **Paillet, Guy
F-3400 Montpellier (FR)**
• **Tannhof, Pascal
F-77930 Cely en Bière (FR)**

(74) Representative: **Klein, Daniel Jacques Henri
Compagnie IBM France
Département de Propriété Intellectuelle
06610 La Gaude (FR)**

(56) References cited:
**EP-A- 0 295 876**          **US-A- 5 239 594**

• IJCNN INTERNATIONAL JOINT CONFERENCE
ON NEURAL NETWORKS, vol.4, 7 June 1992,
BALTIMORE , USA pages 228 - 234 IWATA
'Hand-written alpha-numeric recognition by a
self-growing neural network "combNET-II"'

EP 0 694 852 B1

**EP 0 694 852 B1**

**Description**

The present invention relates to neural network systems and more particularly to innovative neuron circuit architectures that are designed to generate local (or neuron) result signals, e.g. of the fire type, and a local output signal essentially of the distance or category type at the neuron circuit level. These architectures do not require any supervisor or any software programs for their operation. Finally, these architectures are well adapted for integration in VLSI semiconductor chips.

CO-PENDING EUROPEAN PATENT APPLICATIONS

EP-A-0 694 854: Improved Neural Semiconductor Chip Architectures And Neural Networks Incorporated Therein;
EP-A-0 694 856: Daisy chain circuit for serial connection of neuron circuits;
EP-A-0 0694 855: Search/sort circuit for efficient searching/sorting of data in neural networks; and
EP-A-0 0694 853; Circuit for precharging the input vector components in a free neuron circuit during the recognition phase.

BACKGROUND OF THE INVENTION

In the field of optical character recognition, a state of the art recognition technique comprises the use of a photohead essentially consisting of a matrix of photosensitive elements. In the READ mode, the said elements are scanned successively to generate signals that are illustrative of a certain parameter of the scanned character. Subsequently, the signals that are obtained during each scan are sampled and processed in a processing unit to identify the character under scan. The identification process is generally based upon a comparison between the character under scan and a prototype model stored in a memory.

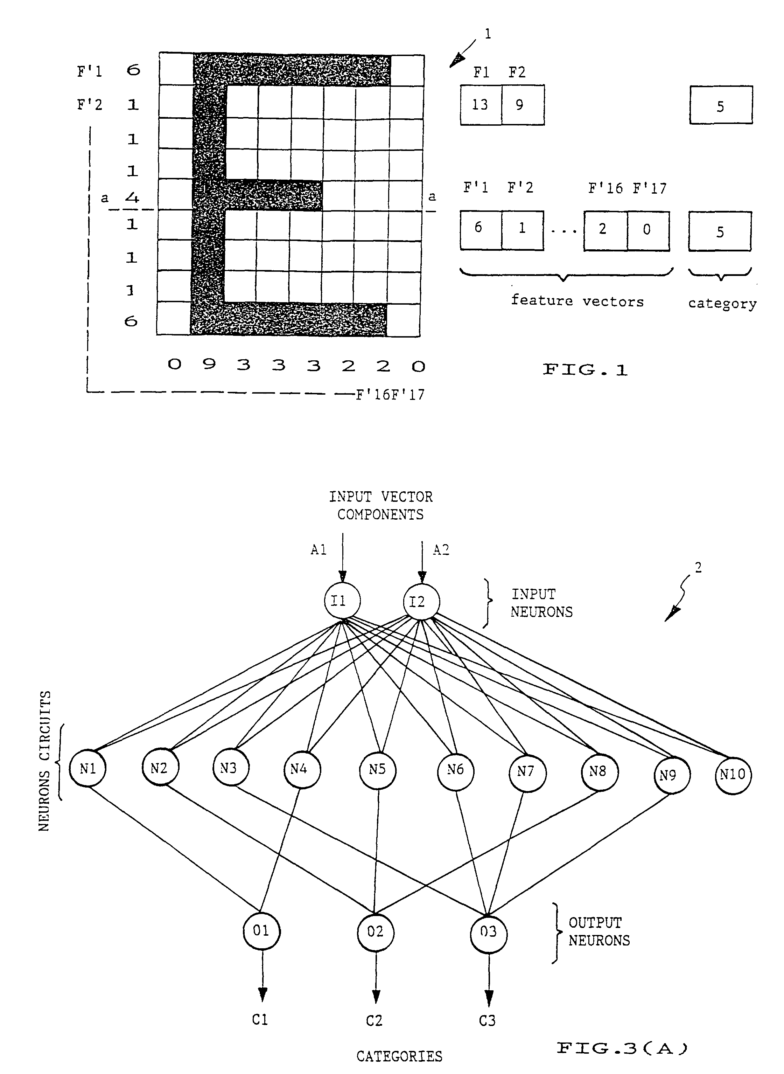

Now turning to Fig. 1, which illustrates the capital letter "E" embedded in a 9 x 8 matrix of pixels, a first parameter representative of letter E could consist in counting vertical and horizontal numbers of dark pixels. One can then define a feature vector F' representing letter "E" comprised of 17 components (or entries) : F'1, F'2, ... , F'16, F'17 wherein F'1 = 6, F'2 = 1, ..., F'16 = 2, and F'17 = 0. A category (or class) C defined by the user may be associated to this feature vector F to represent letter "E", for instance the order number in the alphabet, i.e. in this case the category C will be equal to 5. A second parameter that could be used as well would be the number of dark pixels above and below line aa shown in Fig. 1. In this very simple case, the new feature vector F is now only comprised of two components F1 = 13 and F2 = 9 instead of seventeen, but still with the same category C = 5. Note also that although the capital letter "E" and the lower case letter "e" are represented by two different feature vectors (and even more, should these letters be printed according to various type fonts) they may be considered to belong to the same category C. Thus, it can be established a certain relation or link between a feature vector F and a determined category C.

Let us consider the representation of capital letter "E" shown in Fig. 1 as the ideal model of this letter. One can imagine that during a preliminary phase of learning, the two-component feature vector F of Fig. 1 is presented as an input vector to a conventional character recognition system by a user and its two components stored therein in a memory. As soon as the components of the input vector F have been stored and a category C associated thereto (in the present instance C = 5), input vector F is then referred to as a prototype vector P.

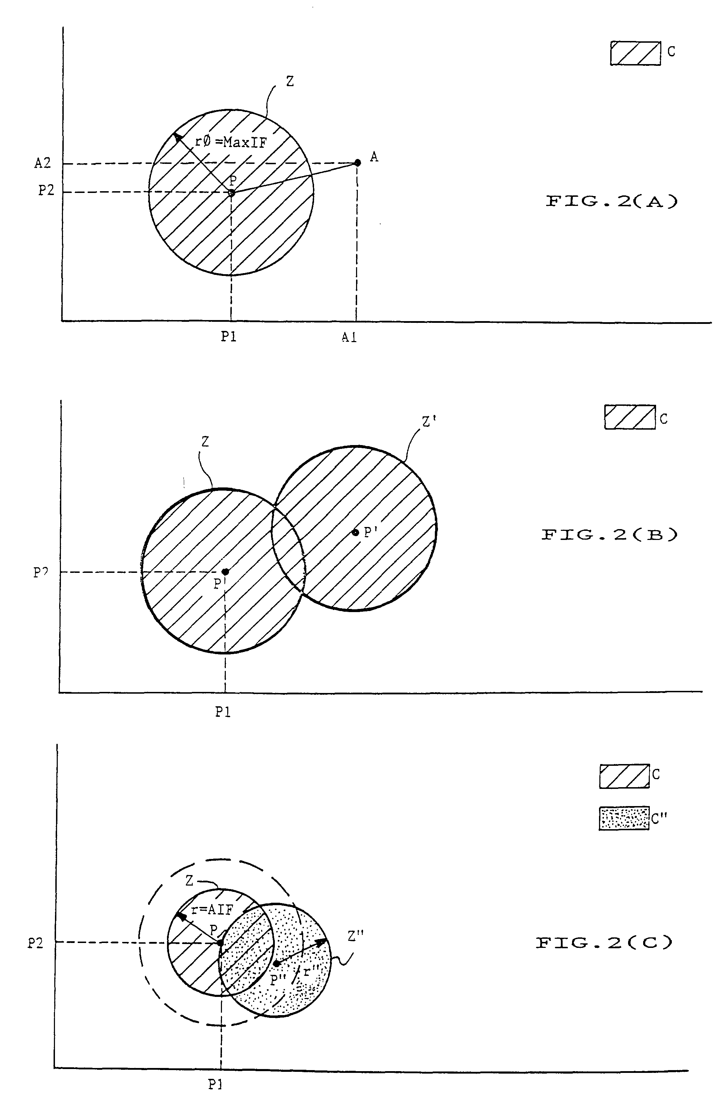

Now turning to Fig. 2(A), the stored prototype vector P is represented by point P with its two components P1 and P2 in a two dimension space. This space is usually referred to as the feature (or characteristic) space. Encompassing point P illustrative of prototype vector P, one may then define a zone Z (or domain) that will be used as a discriminating criteria by the system to appreciate the degree of similitude between the prototype vector and any input (or incoming) vector (or pattern) representing the character under scan that will be presented to the system during the recognition phase. The system will then perform a comparison between the input vector A and the stored prototype vector P in order to appreciate their degree of similitude. This degree of similitude may be determined in a variety of manners, a classic one is essentially based on a notion of distance. Still referring to Fig. 2(A), let us assume an input vector A comprised of two components A1 and A2 for consistency with the prototype vector P described above, this comparison can be made for instance using the mere criteria of the Euclidian distance AP, i.e. $AP^2 = (P1-A1)^2 + (P2-A2)^2$. In this case, the said zone Z will be simply represented by a circle whose center is P and radius r. Radius r is commonly referred to as the influence field (or threshold) value of the prototype vector P. At initialization, i.e. during said preliminary phase of learning, the value of radius r is generally given by a default value r0 referred to as the maximum influence field MaxIF as illustrated in Fig. 2(A), which is generally defined arbitrarily and empirically. However, other distance calculation methods are available, for instance the so-called Manhattan or city block distance (L1 norm) and the square distance (Lsup norm), which would produce zones of different shapes. The L1 norm would result in a lozenge while the Lsup norm would result in a square in the two dimension feature space of Fig. 2(A) instead of a circle.

If we still consider prototype vector P illustrated in Fig. 2(A), let us assume that an input vector A still representing the same capital letter "E" but printed with a different type font is now presented to the system user for recognition. If input vector A falls within circle Z, it will be thus considered as "similar" to prototype vector P, and in turn, will be labelled with the same category C. It is important to notice that the assignment of the category to the input vector by the system is performed during the recognition phase. If now, input vector A falls outside the circle Z, it will be'considered as " not similar" with regard to the prototype vector P. In this case, the category C cannot be assigned (or associated) to it by the system. It is then recommended to have input vector A stored by the user as a new prototype vector with the same category C. To that end, in a subsequent learning phase of the system, the user presents again the input vector A with its category C to the system. The system stores input vector A as a new prototype vector P' with the same category C assigned thereto, to provide the extended zone illustrated in Fig. 2(B), comprised of circles Z and Z', which now delineates the category C.

Let us assume now that an input vector A representing capital letter "F" is presented to the system and falls within circle Z of prototype vector P. Because, letter "F" obviously belongs to another category according to the definition thereof given above, the category C of prototype vector P cannot be assigned to it by the system. As a consequence, circle Z as originally drawn has now to be retracted not to cover this point A. In others words, the radius $r0$ of the circle encompassing prototype vector P needs to be reduced if the user decides to store this input vector A as a new prototype vector P". This step of retraction is part of the so-called "reduction process" which is an essential aspect of such a conventional character recognition system. Once input vector A has been stored as prototype vector P", the new radius of circle Z is obtained by reducing the initial radius $r0 = MaxIF$ to a value r inferior or equal to distance PP". This value r also constitutes the radius of circle Z" ($r" = = r$). This new or current radius value r of prototype vector P is usually referred to as the actual influence field AIF. The two prototype vectors P and P" with their respective associated categories C and C" and influence fields r and r" are illustrated in Fig. 2(C). It is to be noted that a minimal value of the influence field, referred to as the minimum influence field MinIF, is also defined. Under no circumstances, the actual influence field (AIF) of a prototype vector may have a value lower than MinIF.

Fig. 2(D) shows a two dimension feature space comprising three prototype vector P, P' and P" with their respective influence fields r, r,' and r" and associated categories C, C', and C". Let us consider now an input vector A is presented to the system for recognition, the system is able to calculate the distances $AP = D$, $AP' = D'$ and $AP" = D"$ and then to determine the minimum distance Dmin among them. If input vector A falls within one circle, e.g. circle Z ($Dmin < r$), it will be recognized by the system and the category C will be associated to it. Assuming now input vector A falls in none of the circles Z, Z' and Z", as illustrated in Fig. 2(D), the input vector is not recognized and the category is not assigned. If the user decides to store input vector A as a new prototype vector, he will present it again to the system with the adequate category during a subsequent learning phase. As a matter of fact, the user decides which category will be assigned to the new prototype vector, for instance any of category C, C' or C", or a new one. If the user decides to assign the category of the closest prototype vector (based on the calculation of the minimum distance Dmin), the influence field of the new stored prototype vector will be a value inferior or equal to Dmin if $Dmin < MaxIF$ and MaxIF if $Dmin >= MaxIF$. In the case shown in Fig. 2(D), this minimum distance Dmin corresponds to distance $D = AP$. Finally, if input vector A falls within an overlapping zone, i.e. a common zone between two circles (not shown), the user will not only determine the right category to be assigned to the new prototype vector, but may have to perform the adequate reduction of their respective influence fields, so that one prototype vector (or the two prototype vectors P' and P") is excluded from the recognition.

Note that, although Figs. 2(A) to 2(D) show an input vector A comprised of two components A1 and A2, it must be understood that for generalization, an input (or prototype) vector will be considered as being comprised of n components. As a matter of fact, components A1, A2, ..., An represent the most general definition of the input vector A. In this assumption, the circle Z illustrated in Fig. 2(A) may be then represented by an hypersphere in a n-dimension feature space. The computed distance will be the distance separating the center of the hypersphere representing the stored prototype vector and the point representing the input vector. The MaxIF value will correspond to the largest radius of the hypersphere at initialization. Similarly, the MinIF value will correspond to the smallest radius of the hypersphere that is allowed in the course of the reduction process. For distance calculation methods that are different of the Euclidian method mentioned above, the equidistant points are no longer placed on an hypershere but on a polyhedral volume. However, said polyhedral volume will be referred to as an hypersphere for sake of simplicity.

On the other hand, any component of the input vector, which represents a certain analog value, is coded on m bits, i.e. it may be depicted by a binary word of the type $a0 ... am-1$. For instance, referring again to the two component input vector A representing capital letter "E" of Fig. 1, wherein the first component A1 is equal to 13 and assuming $m = 4$, A1 would be then represented by the binary word consisting of $a0 = 1$, $a1 = 1$, $a2 = 0$, and $a3 = 1$, i.e. $A1 = 1101$.

As a final result, one can imagine a computer-based character recognition system that would be designed to automatically proceed to that comparison of an input vector with the prototype vectors of the feature space, in order to determine the appropriate category or class (if any) that must be assigned to it. So far, the common manner to implement in hardware the above described classification methodology has been to use Von Neuman processor based computers, but the more recent trends in the technology to date is to execute neural algorithms on such processors (software emulation).

Neural computers use neural networks constructed by assembling a limited number of electronic neuron circuits to mimic the nervous systems of living bodies. A biological neural network utilizes nerve cells or synapses as the units thereof and it is constructed by interconnecting an extremely high number of these synapses. In biological neural networks, the synapses execute calculations in a parallel fashion, so that the overall processing time is very short. Furthermore, the functions of biological neural networks are realized by changing the behavior of synapses and connection states therebetween during the learning. Neural computers are capable of pattern processing, such as character or voice recognition, process optimization, robot control and the like. However, because the calculation processus is conducted sequentially in accordance with the instructions of a software program the processing time is large. Neural computers have the special characteristic of being able to realize functions in cases of problems which have processing procedures which are difficult to place in formal rules. When such neural computers are operated while conducting normal learning, even if the functions which are desirable change over time, they are capable of following such changes. In addition, neural networks that are implemented in such neural computers are constructed by interconnecting identical base neuron circuits, should a failure occur in one of them, it is easy to fix the neural network by simply replacing the failed neuron circuit with another normally functioning. As a result, it is possible to realize neural networks offering a high resistance to flaws, an aspect of significant importance in cases when VLSI semiconductor chips are used.

Different neural network architectures may be envisioned. According the standard Radial Basic Function (RBF) technique, such as described in the article "A high performance adaptive classifier using radial basis functions" by M Holler et al, Microcircuit Applications Conference Nov. 9-12, 1992, Las Vegas, USA (Ref. D1), a preferred neural network of the RBF type consists of a three layer structure. The first layer which comprises the input terminals is called the input layer or input neuron layer. The second or hidden layer is formed by the neuron circuits themselves. The third layer or neuron output layer utilizes the outputs of the neuron circuits of the second layer as inputs. Each neuron circuit has weight coefficients (currently designated in the literature as the synaptic weights) which are related to the components of the stored prototype vector. The input signals available on the input terminals of the first layer are applied in parallel to all the neuron circuits of the second layer for processing. The processing thus consists in the comparison mentioned above to determine the distances between the input vector and all the prototype vectors of the neural network and to have certain neuron circuits to react or not. The signal that is generated by each neuron circuit of the second layer is inputted into only one output neuron of a determined category.

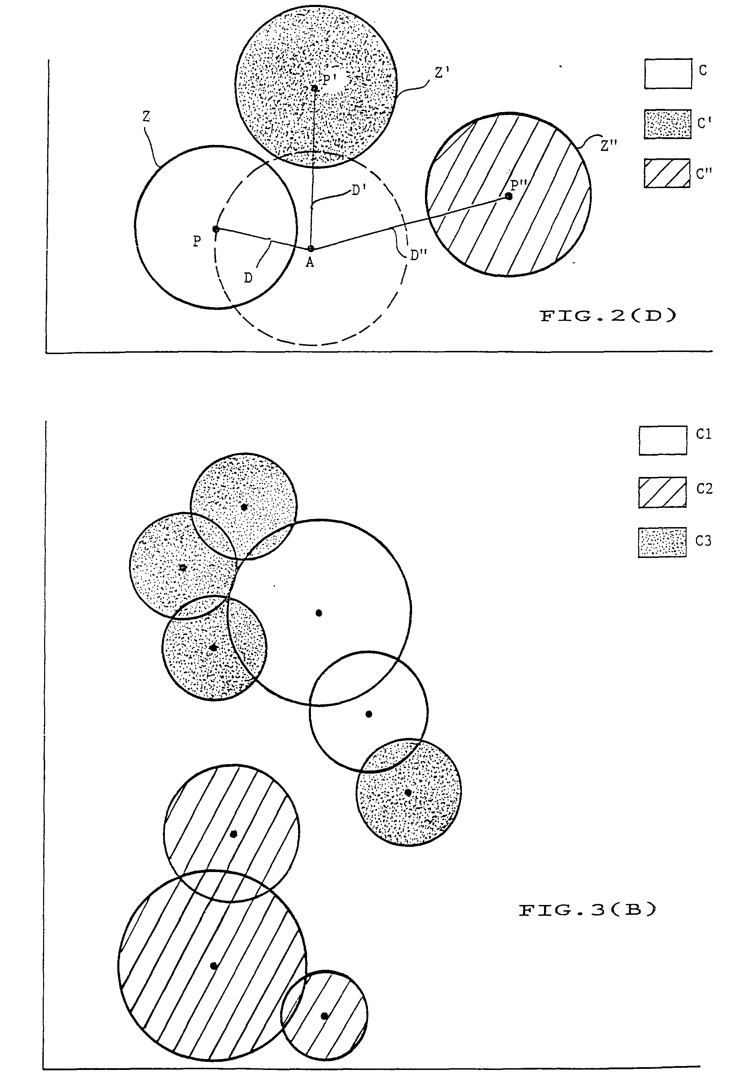

Fig. 3(A) shows such a conventional three layer neural network referenced 2 comprised of ten neuron circuits N1 to N10 of the RBF type. The first layer consists of two input neurons I1 and I2 adapted to receive an input vector A comprised of two components A1 and A2. This first layer totally interconnects with each neuron circuit N1 to N10 of the second layer. Each neuron circuit of the second layer can be potentially related to only one output neuron of the third layer. During the learning phase, the neuron circuits of the second layer are used to store the prototype vectors (one prototype vector stored per neuron circuit) in a R/W memory usually referred to as the weight memory. When the neural network 2 is used for the first time, all the weight memories have a contents at random. The neuron circuits are said to be "free". As soon as a prototype vector is stored in a neuron circuit and a connection is established between such a neuron circuit of the second layer and an output neuron of the third layer, i.e. a determined category has been assigned to it, this neuron circuit which has thus "learned" is considered to be no longer free and is said "engaged". For instance, neuron circuits N2, N5 and N8 (which are associated to the same category C2 through single output neuron O2), are engaged. Similar reasoning applies to other neuron circuits associated to categories C1 and C3. On the other hand, it has been mentioned above that the value of the influence field of a determined neuron circuit could be reduced in the course of the reduction process during the learning phase. However, under no circumstances it is allowed to reach a value equal to or less than the MinIF value, and if this happens in the course of the reduction process, this neuron circuit is said to be "degenerated". Neuron circuit N10 is still free and because it has not learned so far, none category has been associated to it. In conclusion, in a neural network, the state of a determined neuron circuit is either free or engaged.

The feature space depicted in Fig. 3(B) has been designed to substantially match with the neural network 2 of Fig. 3(A) for illustration purposes (only neuron circuit N10 is not illustrated). Fig. 3(B) shows an example of a two-dimension feature space illustrating the influence fields of the nine prototype vectors that have been stored in neuron circuits N1 to N9. They are organized in three groups of 2, 3 and 4 neuron circuits, respectively pertaining to categories C1, C2 and C3. In addition, as apparent from Fig. 3(B), the actual influence fields associated to the prototype vectors of a same category may be different. A determined category may be represented by one or by several prototype vectors, that are adjacent or not, overlapped or not. Depending upon how the input vector is mapped in the two-dimension feature space of Fig. 3(B) during the recognition phase, the comparison with all the stored prototype vectors obviously result in different cases that will be now discussed.

During the recognition phase where an input vector is presented to the neural network 2 for comparison with all the prototype vectors of the feature space, each neuron circuit calculates the distance between the said input vector and its stored prototype vector, as discussed by reference to Fig. 2(D). If the input vector falls within the influence field of a determined prototype vector, the category attached to this determined prototype vector is assigned to the input vector. The same reasoning applies if the input vector falls within the influence fields of several prototype vectors pertaining to the same category. In both cases, the input vector which has been recognized by the neural network with a single category is said "identified". If the input vector falls within the influence fields of at least two prototype vectors belonging to different categories which overlap, the input vector is at least twice recognized but it is not identified and the input vector is said "undefined" or "uncertain", because the category to be assigned (or associated) thereto cannot be determined. In all the above cases, the corresponding neuron circuits which have recognized the input vector are said to have "fired" or "triggered", and a fire signal F is set active (F = 1). If the input vector falls within the influence field of none prototype vector, none neuron circuit of the neural network fires (each fire signal F is inactive (F = 0). It is worthwhile to distinguish between data that are generated at the neuron circuit level labelled "local" or "neuron" data and data generated at the neural network level that are labelled "global" or "neural" data. Local data first include result data (e.g. a neuron circuit which fires generates a local result fire signal) and status data (e.g. a degenerated neuron circuit holds a degenerate status) referred to hereinbelow as result data. Local data further include output data (e.g. distance or category data). Likewise, global data include global result data (e.g. a neural network which identifies an input vector generates a global result identified signal) and global output data (e.g. the minimum distance Dmin). Local data which are representative of the local reaction of an individual neuron circuit to the presentation of the input vector are therefore "consolidated" at the output neuron level to produce said global data.

Neural networks of the type illustrated in Fig. 3(A) have been extensively used in the industry so far. However, none of the neuron circuit architectures known to date appears to be really satisfactory and generally exhibit a lot of limitations and/or inconveniences.

First of all, conventional neural networks have none or limited cascadability. By cascadability, there is meant the capability to connect an unlimited number of neuron circuits to form a complex neural network incorporating as many neuron circuits as required by the application. Because neural networks are usually implemented in VLSI semiconductor chips, consequently it would be therefore highly desirable to cascade as much neural chips as desired with the minimal additional circuitry, to finally produce such a complex neural network. Unfortunately, this flexibility has not been made possible so far. As a result, the cascadability of standard neural chips/modules is very limited, because assembling large quantities of the same is not an easy task and generally requires a significant number of external components. Moreover, should such external components be required, the number of neuron circuits in a complex neural network would not be transparent for the user any longer. This transparency is a factor of paramount importance, in particular in the learning phase.

Next, conventional neural networks that have been designed to date are not autonomous, i.e. the obtainment of any global result at the neural network level, mandatorily requires the supervision of a digital computer, typically a micro-controller or a dedicated micro-processor for overall data management. For instance, one may refer to US-A-5165010 (Ref. D2) and more particularly to Fig. 23, which illustrates a micro-controller providing the supervision to a plurality of neuron circuits which all together form the neural network. The neural system described therein is organized with the same parallel architecture as in conventional micro-controller. Between the neuron circuits and the micro-controller, the data are exchanged via the data bus while the addresses are circulating on the address bus as standard. In conventional neural networks, the neuron circuits are thus totally passive and communicate only with the micro-controller. In other words, there is no data communication or exchange between the different neuron circuits which form the neural network. In addition, because said computers are software operated, either the recognition or the learning phase results in a lengthy and complex operation. Still another consequence is that with conventional neural chips, the number of input/output pads is dependent of the number of neuron circuits integrated therein because of addressing requirements. Same reasoning applies to the input/output pins of the electronic neural modules incorporating such neural chips.

On the other hand, the number of categories that are available in such conventional neural networks is limited. For instance if we now refer to the neural network described in US-A-4326259 (Ref. D3), the neuron circuits are arranged in a column to feed the horizontal lines of a PLA, whose vertical lines supply the categories. As apparent from Fig. 8 of that reference, it is clear that for many reasons, the number of categories cannot be extensively increased, in particular because the result must be interpreted by the user. The global information relating to the formal identification of the input vector by the neural network is not directly generated. If several neuron circuits fire, the user has to interpret the results.

Likewise, if we consider a category as a label attached to each output neuron of the neural network 2 of Fig. 3(A), it is to be noted that a similar label does not exist at the neuron circuit level. This is another limitation of conventional neuron circuit architectures, should certain neuron circuits need to be prevented to participate to the recognition phase of a determined family of input vectors. This approach would also permit to organize the neural network either as a single network or as subsets thereof that would be programmable by the user.

Finally, the learning is not self-made, but generally the weights are determined separately by the micro-controller and subsequently loaded in the neuron circuits when the micro-controller estimates the learning phase completed. As a consequence, the recognition and the learning phases are clearly distinct periods. In conventional neural networks, training is accomplished by adjusting the weights, which usually are randomly set at initialization. Signals are inputted through the neural network and the output signals observed. If the output signal is erroneous, then a mathematical computation will determine how the weights should be adjusted. Input signals are then re-applied and the output signal is again re-evaluated until the output signal is correct. In the prior art systems, such as taught in US-A-5222193 (Ref. D4) training a neural network requires a personal computer personal programmer (PCPP) which is connected to a host computer via a generic universal programmer interface (GUPI).

All these drawbacks will be simply illustrated by reference to the neural network 2 of Fig. 3(A). Let us first consider an example related to the determination of the minimum distance Dmin between an input vector and the prototype vectors stored in neuron circuits N1 to N9. Typically, the micro-controller interrogates the first neuron circuit to get the distance it has computed, then it interrogates the second neuron circuit and makes the comparison between the two distances to hold the lowest value. The polling process is continued in sequence by successive iterations until the last neuron circuit has been interrogated. The minimum distance value between the input vector and all the prototype vectors is thus only determined at the end of the process, significantly delaying thereby the reduction process mentioned above. A similar technique is applied during the reduction process. Successive iterations are conducted to exclude the neuron circuits which have wrongly fired until it remains only the correct neuron circuit with the adequate category. In all cases, a dedicated software program based upon a complex sorting algorithm and thus including a number of lines of instructions, is required to perform the total sequence of interrogation and comparison steps. As such, the sort process is really time consuming. Because of the lack of communication between all the neuron circuits of the neural network 2 of Fig. 3(A), the potential correlations which exist between all the local result signals at the neuron circuit level and the global result signals at the neural network level, have not been fully tapped so far. As a consequence, the conventional neural network of Fig. 3(A) only provides limited information to the user as to the global data. In addition, the number of categories that are available at the output neuron level is obviously limited by the output neuron hardware construction. Most, if not all limitations and/or inconveniences recited above can be obviated by using the improved neural semiconductor chip architectures and the neural networks incorporated therein in accordance with the present invention.

## SUMMARY OF THE INVENTION

In a neural network comprised of a plurality of neuron circuits, an improved neuron circuit architecture that generates local (or neuron) result signals, e.g. of the fire type, and a local (or neuron) output signal essentially of the distance or category type is disclosed hereunder. First of all, a multi-norm distance evaluation circuit calculates the distance D between the input vector A and the prototype vector B stored in a R/W (weight) memory circuit. An IF circuit is adapted to store or transmit the distance D signal, the actual influence field AIF of the stored prototype vector and the lower and upper limits thereof (respectively referred to as the minimum influence field MinIF and the maximum influence field MaxIF) or a feedback signal. A distance compare circuit compares the distance D signal with the signal outputted from the IF circuit to generate first and second intermediate signals, wherein said first signal is active in the recognition mode if D < AIF and said second signal is active in the learning mode if D <= MinIF. A category register stores the local category C signal assigned to the stored prototype vector. An identification circuit receives the said intermediate result signals, the input category signal CAT, the local category signal C and the feedback signal OR to generate the local result signals which represent the response of the neuron circuit to the presentation of an input vector. A minimum distance determination circuit which receives the local category signal, the distance D signal and the feedback signal is adapted to determine the minimum distance Dmin (category Cmin) among all the distances (categories) calculated by the neuron circuits of the neural network to generate a local output signal of the distance (or category) type. The feed-back signal is collectively generated by all the neuron circuits of the neural network. Typically, the feed-back signal is the result of ORing all the local distances or categories. A daisy chain circuit connected to the corresponding daisy chain circuits of the two adjacent neuron circuits is adapted to determine the neuron circuit state: free or engaged. Moreover, it identifies the first free neuron circuit, which is the ready to learn neuron circuit by construction. Finally, a context circuitry is also implemented in the neuron circuit architecture that is capable to allow the neuron circuit to participate or not with the other neuron circuits of the neural network in the generation of the said feedback signal.

## OBJECTS OF THE INVENTION

Therefore, it is primary object of the present invention to provide innovative neuron circuit architectures that generate both local result signals e.g. of the fire type and a local output signal of the distance or category type.

**EP 0 694 852 B1**

It is another object of the present invention to provide innovative neuron circuit architectures that are well adapted for integration in VLSI semiconductor chips.

It is another object of the present invention to provide innovative neuron circuit architectures including a multi-norm distance evaluator circuit in each neuron circuit for calculating the distance between the input and the prototype vector associated thereto according to a norm that is user selectable.

It is another object of the present invention to provide innovative neuron circuit architectures including a R/W memory circuit in each neuron circuit for storing the components of the prototype vector associated thereto.

It is another object of the present invention to provide innovative neuron circuit architectures including a pre-charge circuit in each neuron circuit for storing the input vector components in the R/W memory circuit of the ready to learn neuron circuit during the recognition phase.

It is still another object of the present invention to provide innovative neuron circuit architectures including an identification circuit in each neuron circuit that is designed to generate the local result signals for each neuron circuit.

It is still another object of the present invention to provide innovative neuron circuit architectures including a daisy chain circuit in each neuron circuit that is designed to distinguish between the two states of a neuron circuit, i.e. engaged or free.

It is still another object of the present invention to provide innovative neuron circuit architectures including a minimum determination circuit in each neuron circuit that is designed to cooperate with similar circuits of other neuron circuits to determine the minimum distance Dmin and then to sort the remaining distances in an increasing order.

It is still another object of the present invention to provide innovative neuron circuit architectures including a minimum determination circuit in each neuron circuit that is designed to cooperate with similar circuits of other neuron circuits to determine the minimum category Cmin and then to sort the remaining categories in an increasing order.

It is still another object of the present invention to provide innovative neuron circuit architectures including a context circuitry in each neuron circuit that is designed to allow or not the selection of the neuron circuit.

It is still another object of the present invention to provide innovative neuron circuit architectures including a category register in each neuron circuit that is designed to store a category number which, as least theoretically, is not limited.

It is still another further object of the present invention to provide innovative neuron circuit architectures whose granularity is of one neuron circuit, so that said architectures are perfectly adapted to build full growable macros in semiconductor chips.

The novel features believed to be characteristic of this invention are set forth in the appended claims. The invention itself, however, as well as other objects and advantages thereof, may be best understood by reference to the following detailed description of an illustrated preferred embodiment to be read in conjunction with the accompanying drawings.

BRIEF DESCRIPTION OF THE DRAWINGS

Fig. 1 shows the capital letter "E" embedded in a 9x8 matrix of pixels.

Fig. 2 which is comprised of Fig. 2(A) to Fig. 2(D) aims to show different examples of the implementation of a prototype vector in a two dimension feature space. Fig. 2(A) shows a single prototype vector and its influence field illustrated by a circle; Fig. 2(B) shows two prototype vectors having the same category C; Fig. 2(C) shows two prototype vectors pertaining to different categories to illustrate the principles at the base of the reduction technique; Fig. 2(D) shows three different prototype vectors pertaining to different categories to illustrate the notion of distance.

Fig. 3 is comprised of Figs. 3(A) and 3(B). Fig. 3(A) shows a conventional RBF three layer neural network architecture comprising ten neuron circuits adapted to process two-component input vectors for their classification into three categories. Fig. 3(B) shows an example of what could be the feature space corresponding to the neural network of Fig. 3(A).

Fig. 4(A) schematically shows the block diagram of a first architecture variant of the neural semiconductor chip when the latter is designed only for stand-alone usage and the neural network that is incorporated therein according to the present invention.

Fig. 4(B) schematically shows the block diagram of the preferred architecture of the base neural semiconductor chip when the latter is designed for operating either for stand-alone usage or with other similar neural chips in a multi-chip environment and the base neural network incorporated therein according to the preferred embodiment of the present invention.

Fig. 5 shows the schematic block diagram of the preferred architecture of the innovative neuron circuit of Figs. 4(A) and 4(B) still according to the present invention to illustrate its essential constituting functional blocks and main interconnections therebetween.

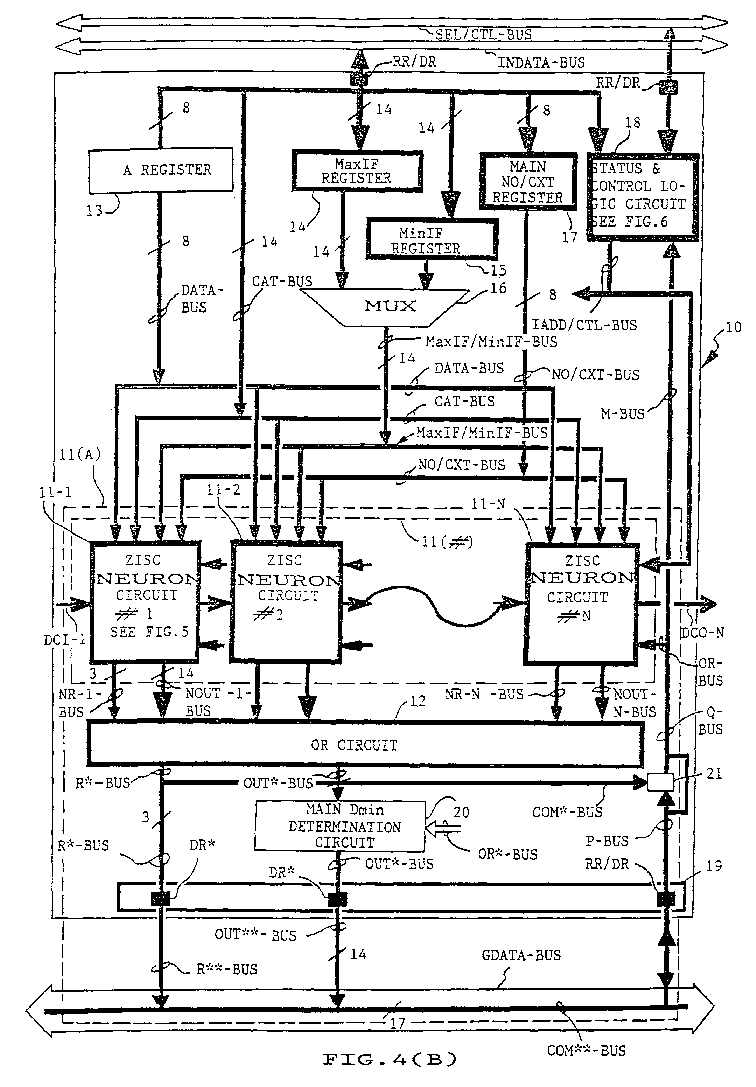

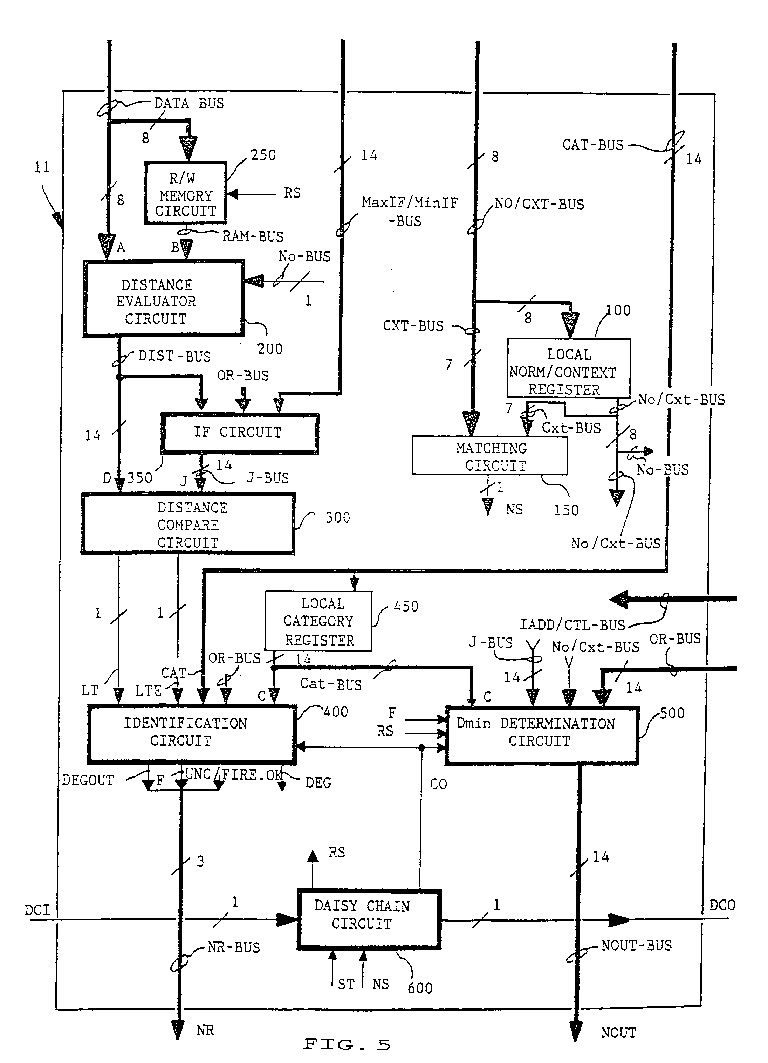

Fig. 6 shows the schematic block diagram of the status and control logic circuit 18 of Figs. 4(A) and 4(B) which generates the internal control, selection and address signals that are required for the operation of all the blocks

7

of Fig. 5.

Fig. 7 shows the schematic block diagram of the IF circuit 350 of Fig. 5 which is comprised of a register and a multiplexer.

Fig. 8 shows the schematic block diagram of the Dmin determination circuit 500 of Fig. 5 which is comprised of a multiplexer, a logic circuit and an innovative search/sort circuit.

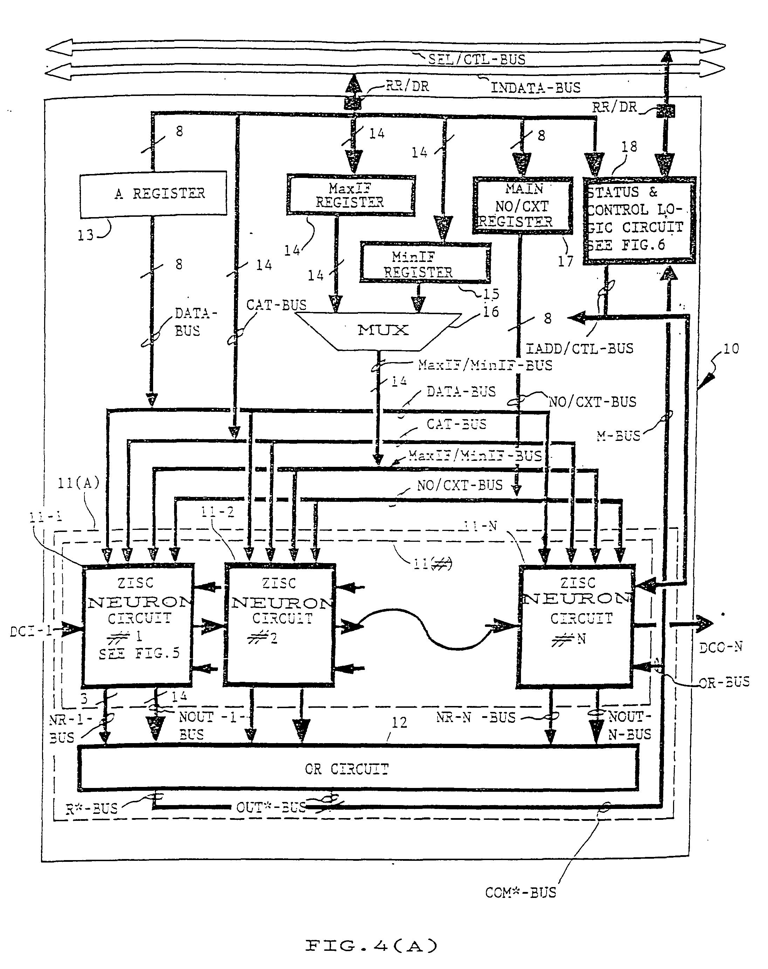

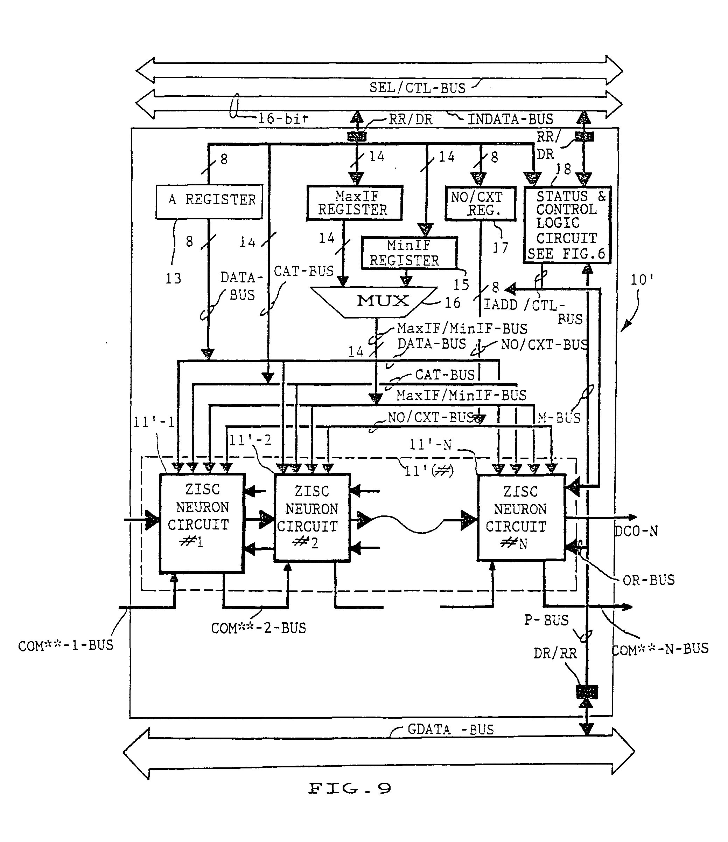

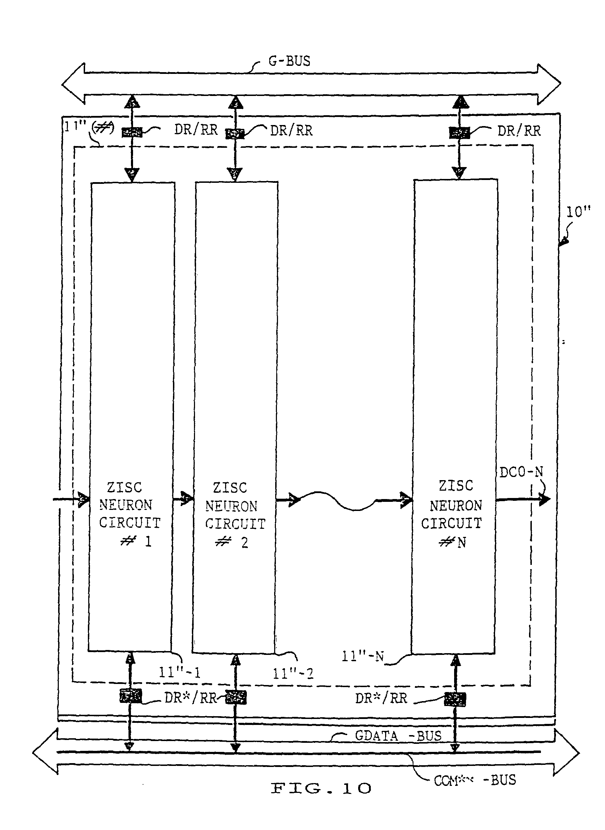

Figs. 9 and 10 show two architecture variants of the base neural chip of Fig. 4(B).

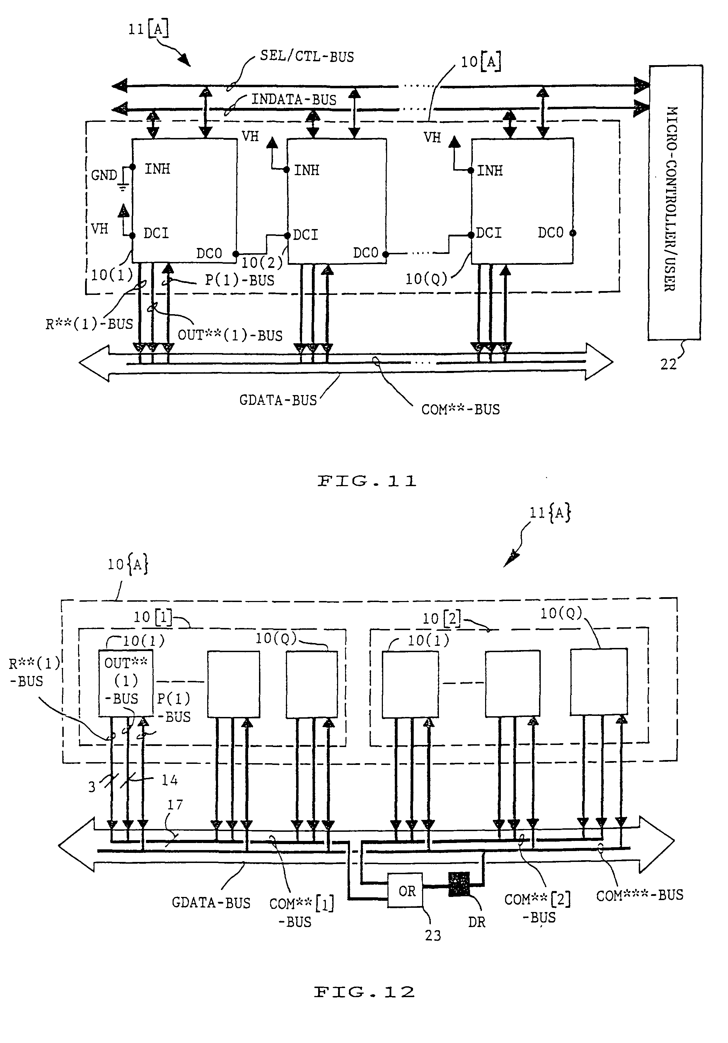

Fig. 11 shows the elementary module formed by assembling a plurality of the Fig. 4(B) base neural semiconductor chips connected in series to illustrate the full cascadability capability of said neural chips of the present invention within the limit number permitted by the semiconductor technology.

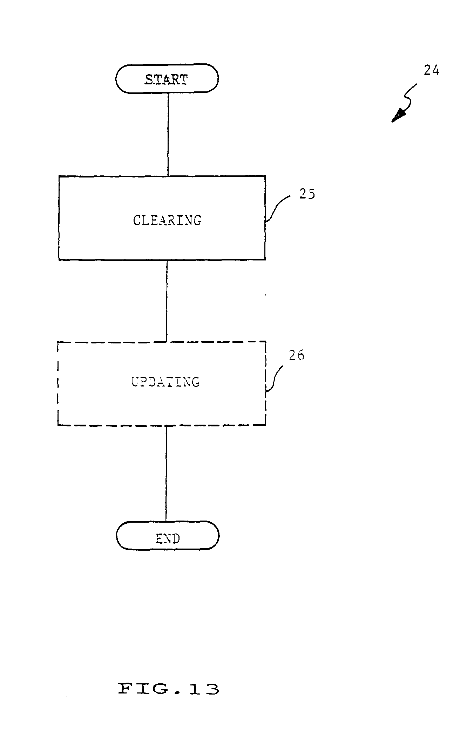

Fig. 12 shows the complex module formed by assembling two elementary modules of Fig. 11 at the cost of only a very small additional circuitry.

Fig. 13 shows the flow-chart of the essential steps of the initialization phase of the base neural network.

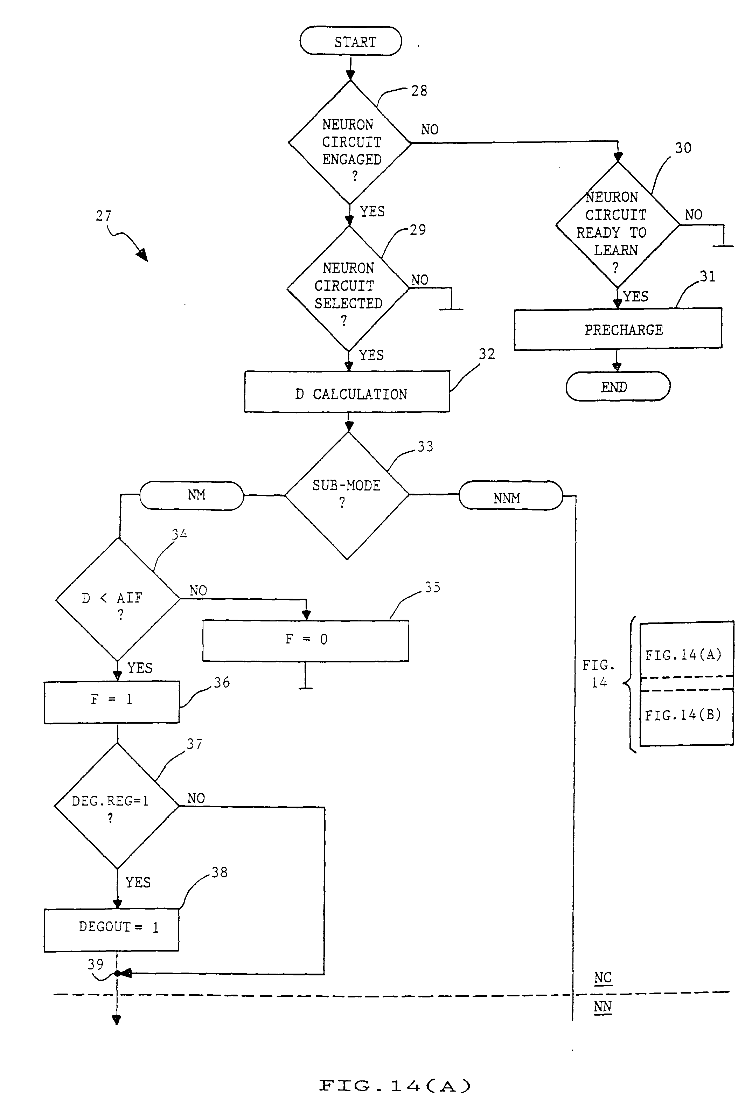

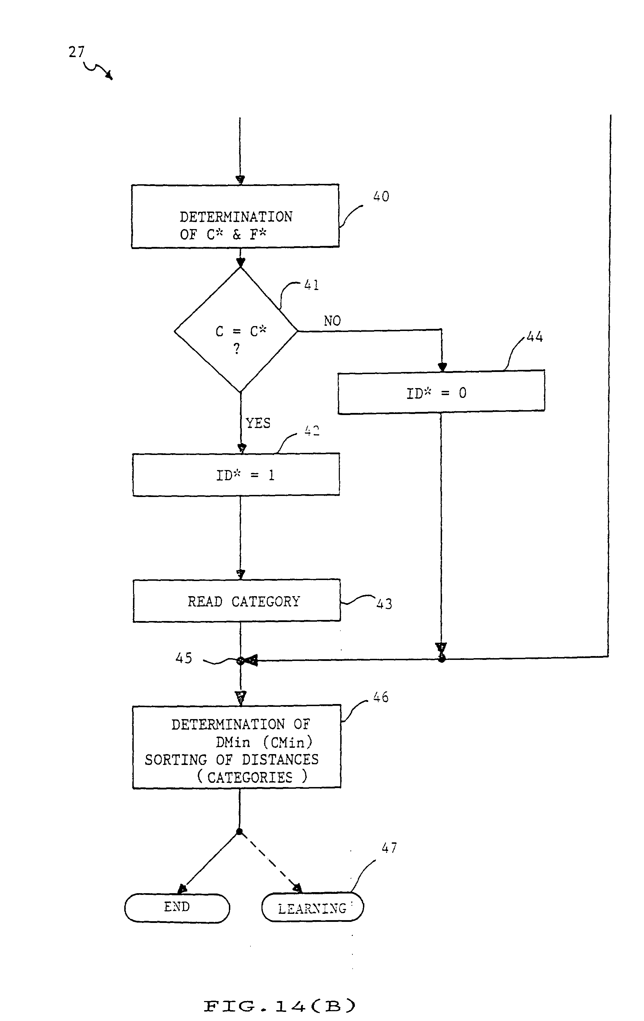

Fig. 14 that is comprised of Figs. 14(A) and (B) shows the flow-chart of the essential steps of the recognition phase of the base neural network.

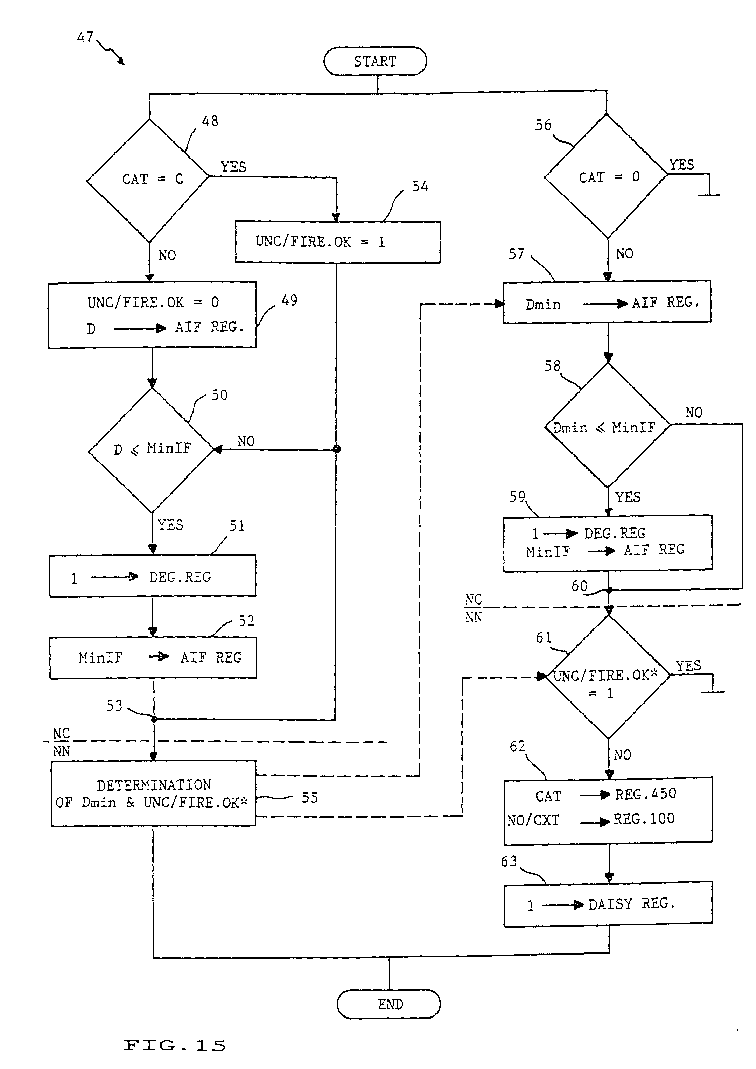

Fig. 15 shows the flow-chart of the essential steps of the learning phase of the base neural network which comprises the reduction process and the engagement process .

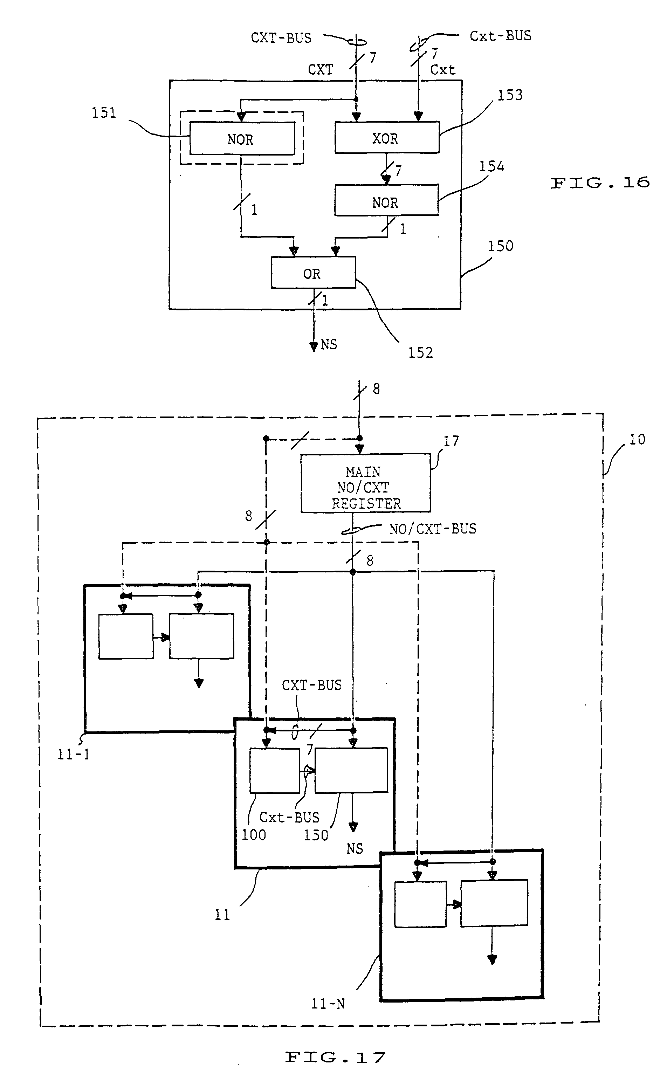

Fig. 16 shows the schematic circuit construction of the matching circuit 150 of Fig. 5.

Fig. 17 illustrates how the use of the context approach allows to define different subsets in the base neural network of Fig. 4(B).

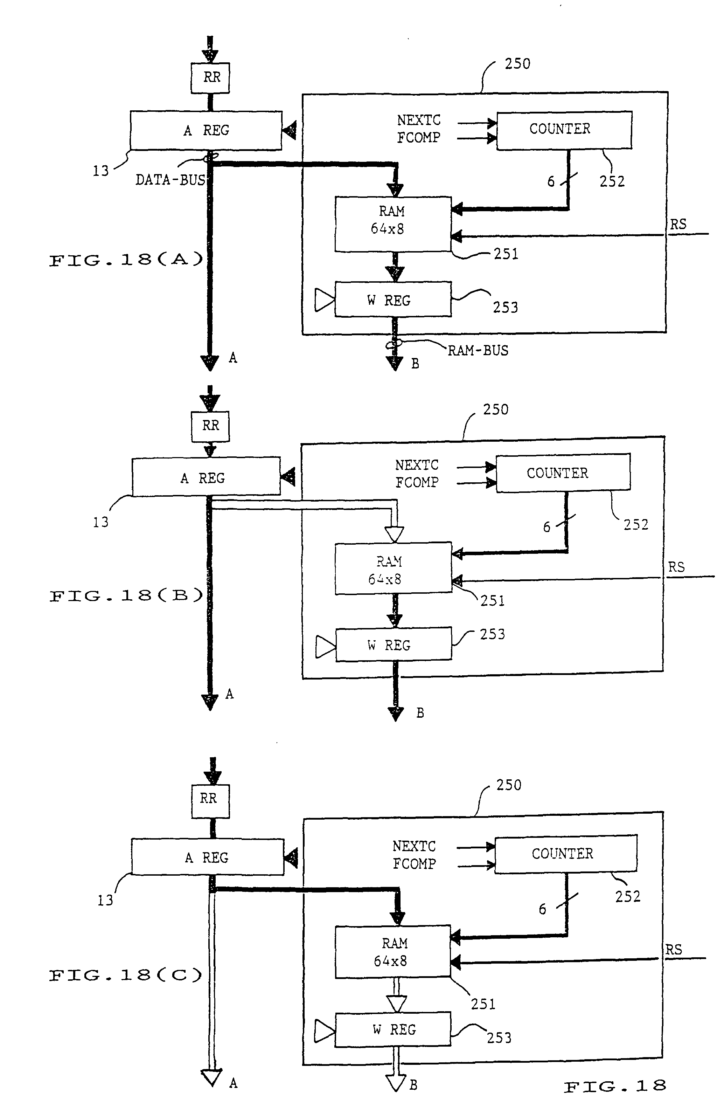

Fig. 18 is comprised of Figs. 18 (A), (B) and (C). Fig. 18(A) is a detailed view of R/W memory circuit 250 of Fig. 5 which is basically organized around a RAM memory. Fig. 18(B) illustrates the data flow in said circuit 250 during the recognition phase for an engaged neuron circuit. Fig. 18(C) illustrates the data flow during the recognition phase for the first free neuron circuit, which includes the step of pre-charging the RAM memory with the input vector components.

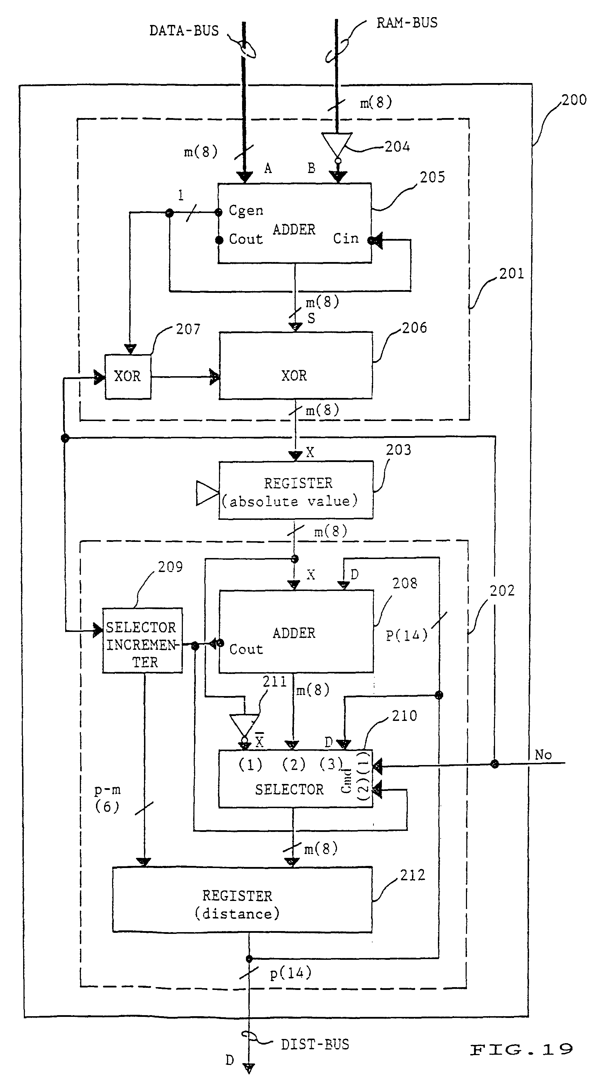

Fig. 19 shows the schematic circuit diagram of the distance evaluator circuit 200 of Fig. 5 which basically consists of two sub-blocks each including an adder and whose role is to calculate the distance between the input and prototype vector stored in the neuron circuit according to a norm selected by the user.

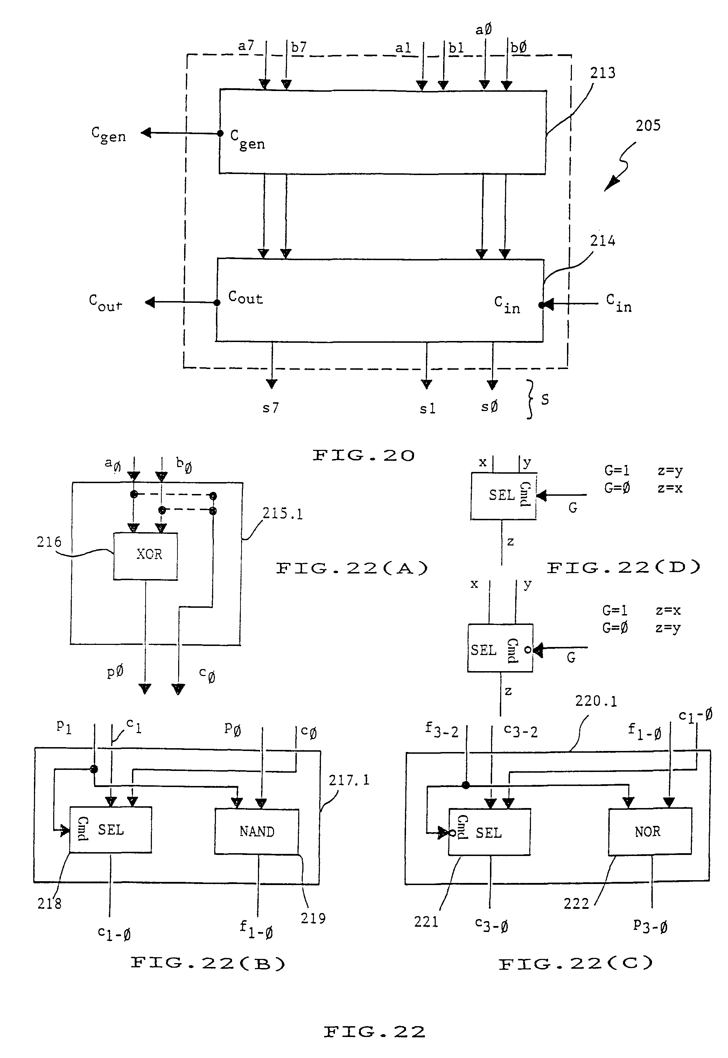

Fig. 20 shows the simplified two-part structure of the adder implemented in the first sub-block of the distance evaluator circuit 200.

Fig. 21 shows the detailed construction of the first part of the adder of Fig. 20 which generates intermediate bit signals to be used in the second part thereof.

Fig. 22 is comprised of Figs. 22(A) to 22(D). Fig. 22(A) shows the detailed circuit construction of a XOR circuit with different types of connections. Fig. 22(B) shows the detailed circuit construction of a selector/NAND combined circuit. Fig. 22(C) shows the detailed circuit construction of a selector/NOR combined circuit. Finally, Fig. 22(D) shows the detailed circuit construction of the two types of selectors (SEL) that are used in circuits of Figs. 22(B) and (C). All the circuits shown in Fig. 18 are extensively used in the said first part of the adder of Fig. 20.

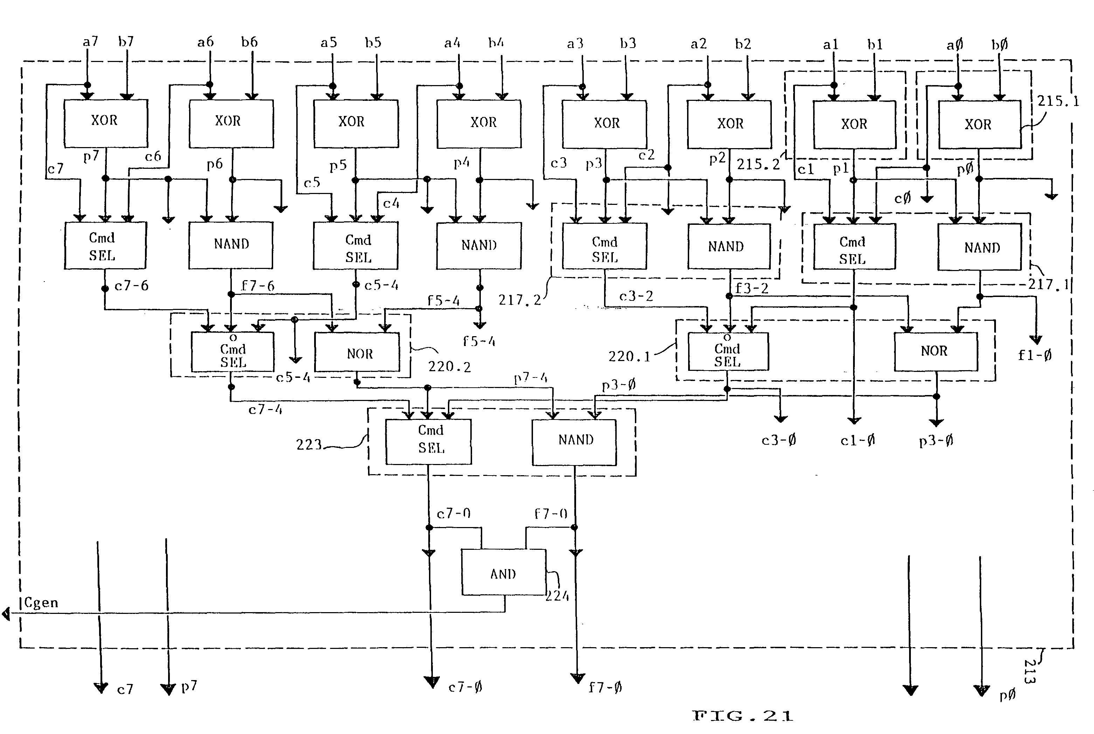

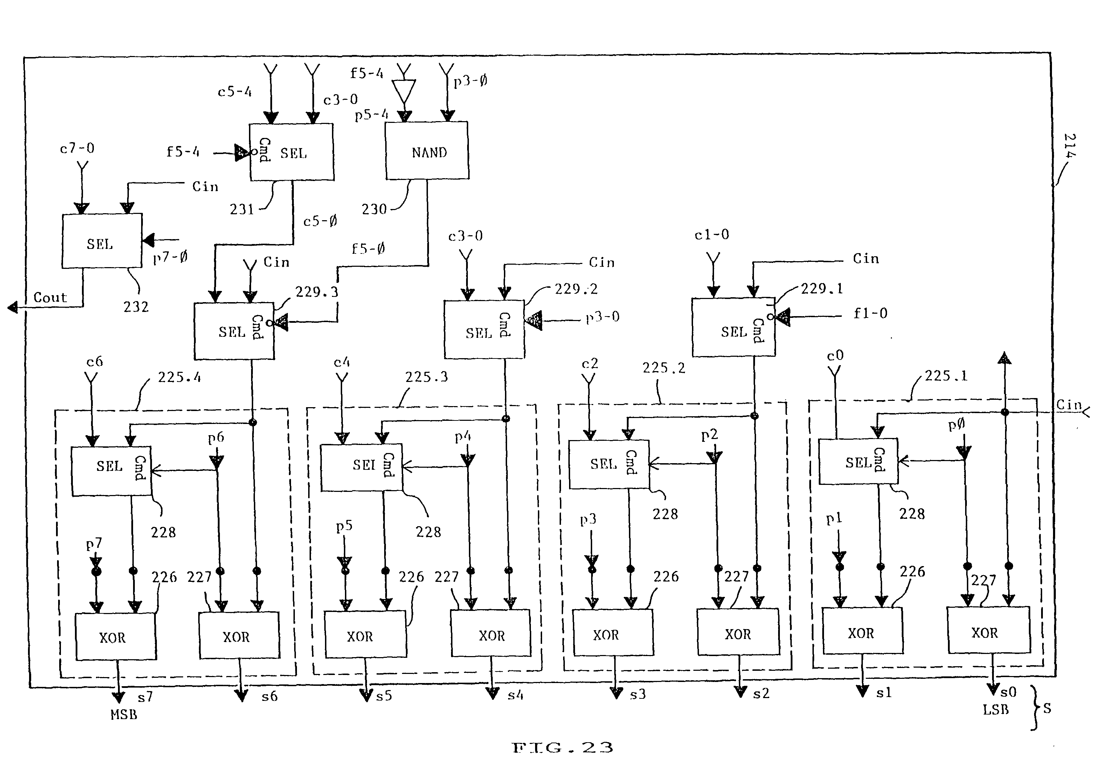

Fig. 23 shows the detailed construction of the second part of the adder of Fig. 20 which generates the sum bit signals.

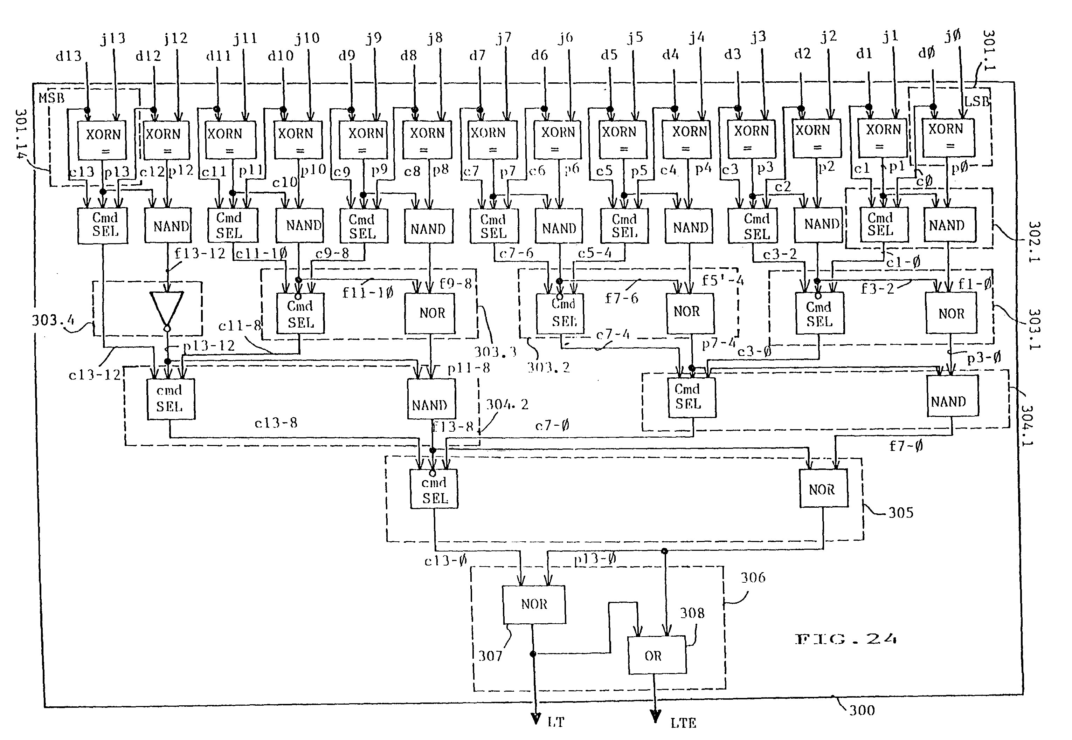

Fig. 24 is the detailed view of compare circuit 300 of Fig. 5 which generates intermediate LT and LTE signals for subsequent processing in the identification circuit 400.

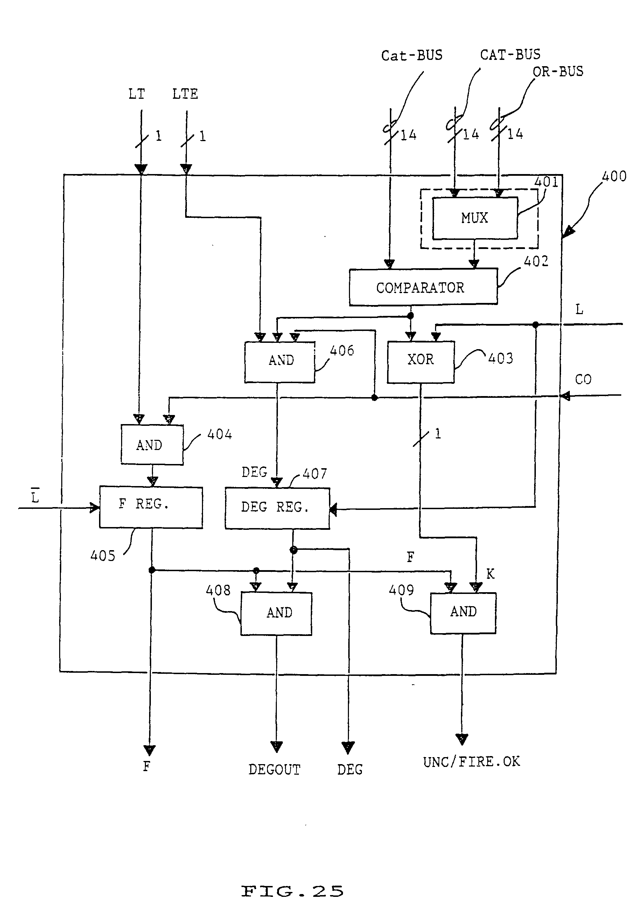

Fig. 25 is the schematic circuit diagram of the innovative identification circuit 400 of Fig. 5 which generates the local result and status signals at the neuron circuit level.

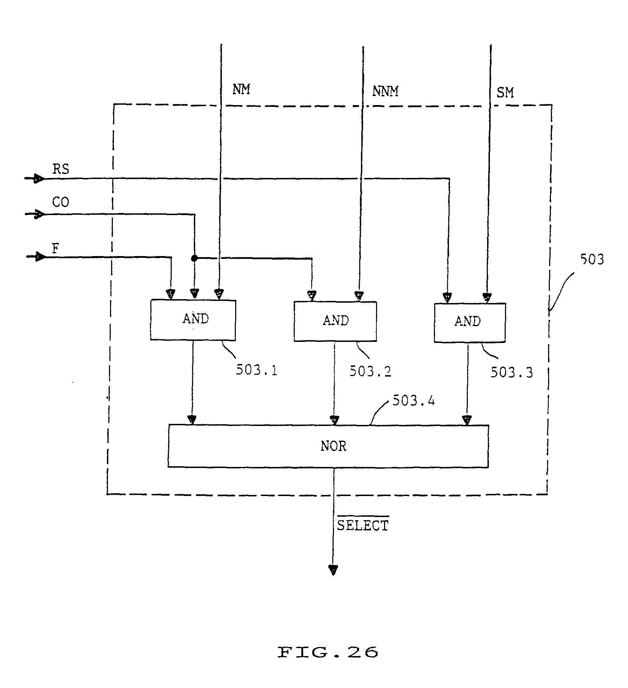

Fig. 26 shows the detailed construction of the logic circuit 503 in the Dmin determination circuit 500 of Fig. 8.

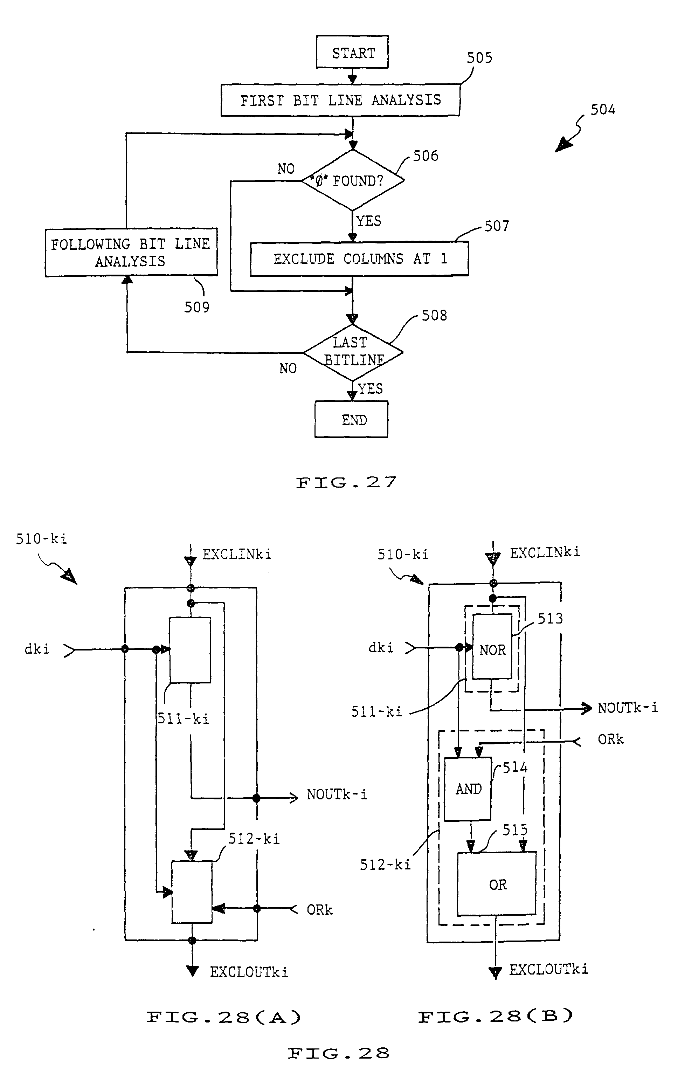

Fig. 27 shows a flow-chart depicting the algorithm at the base of the Fig. 8 search/sort circuit 502 operation.

Fig. 28 is comprised of Figs. 28(A) and (B). Fig. 28(A) schematically shows the structure of the preferred elementary base unit that is used in the search/sort circuit 502 of Fig. 8 to process one bit of the distance signal calculated by the neuron circuit. Fig. 28(B) shows a typical implementation of said base unit with standard logic gates.

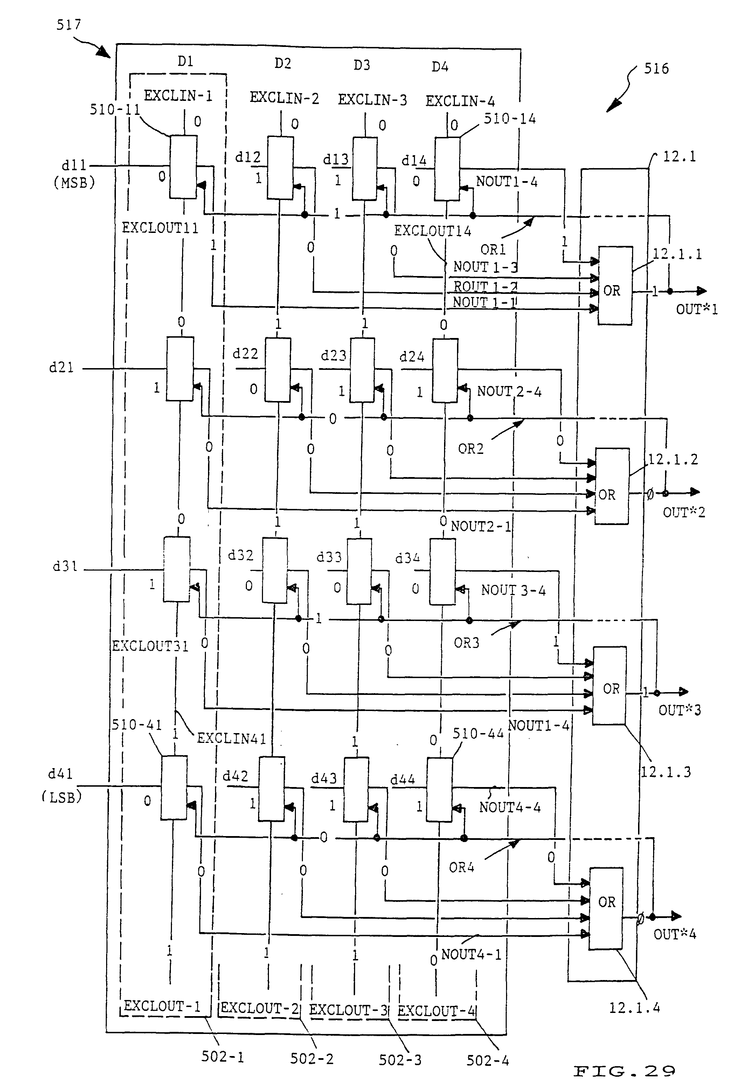

Fig. 29 schematically shows a first variant of the fictitious aggregate circuit formed by the combination of four search/sort circuits 502, each being built by assembling the desired number of elementary base units of Fig.28, adapted to the determination of the minimum distance among four four-bit coded distances in the neural network of Fig. 4(A) (assuming the latter is only comprised of four neuron circuits for sake of illustration).

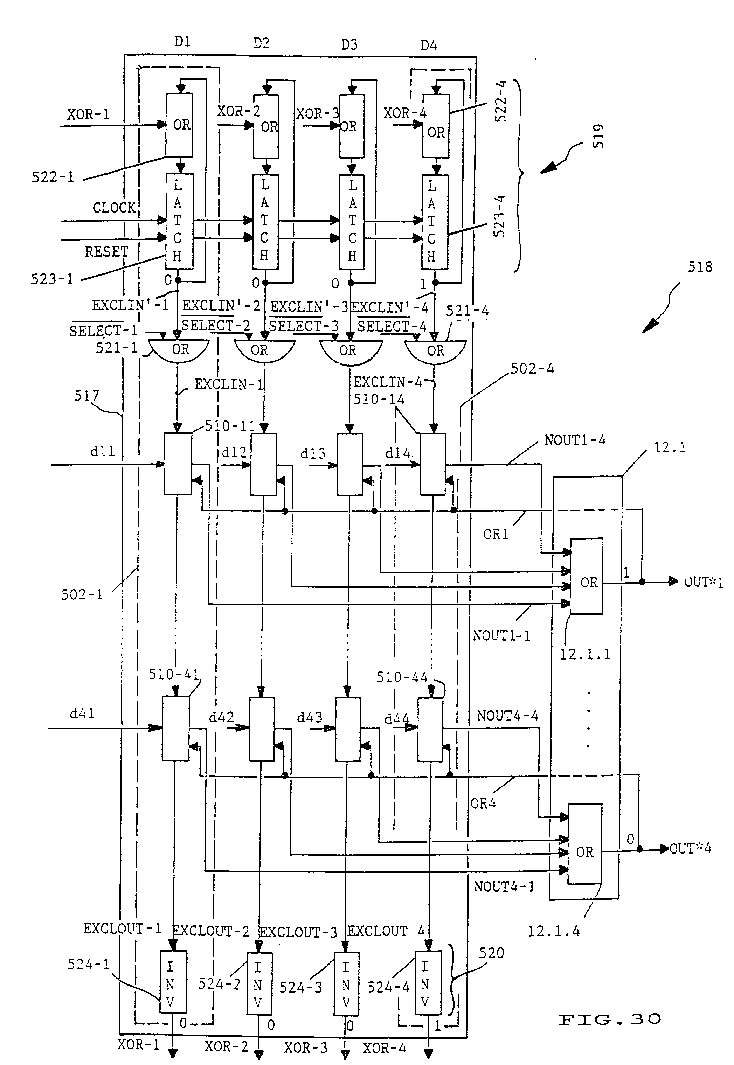

Fig. 30 schematically shows another variant of the fictitious aggregate circuit of Fig. 29 further including storage elements to allow the remaining distances to be sorted in the increasing order.

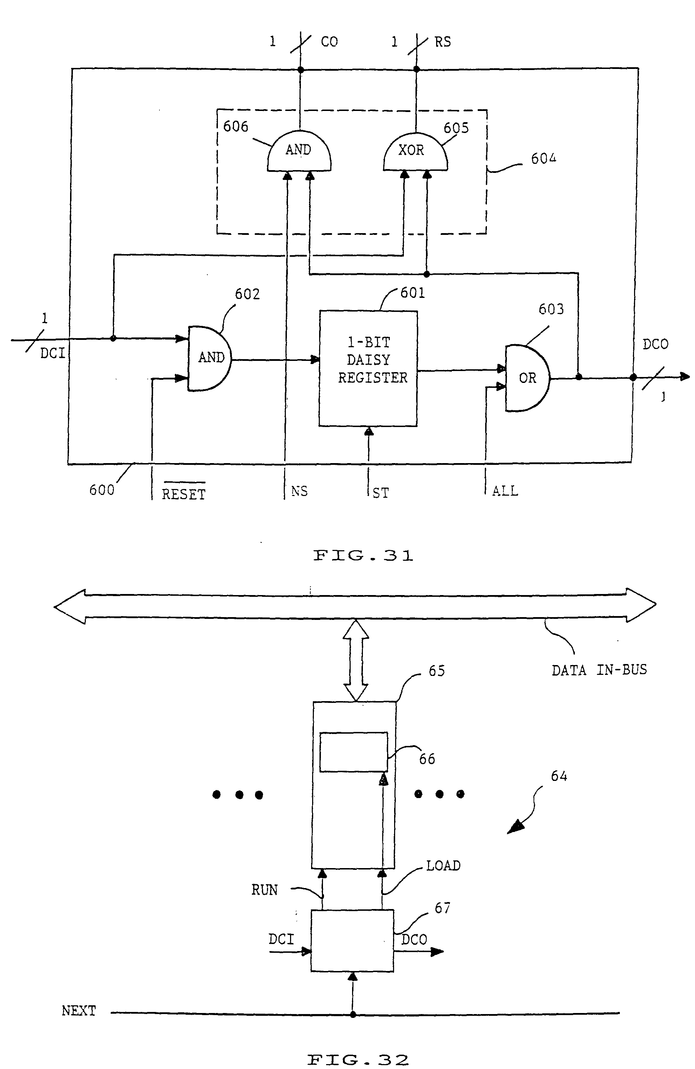

Fig. 31 shows the detailed construction of the daisy chain circuit 600 of Fig. 5.

Fig. 32 schematically illustrates the application of the daisy chain circuit 600 approach of the present invention to a multi-processors environment.

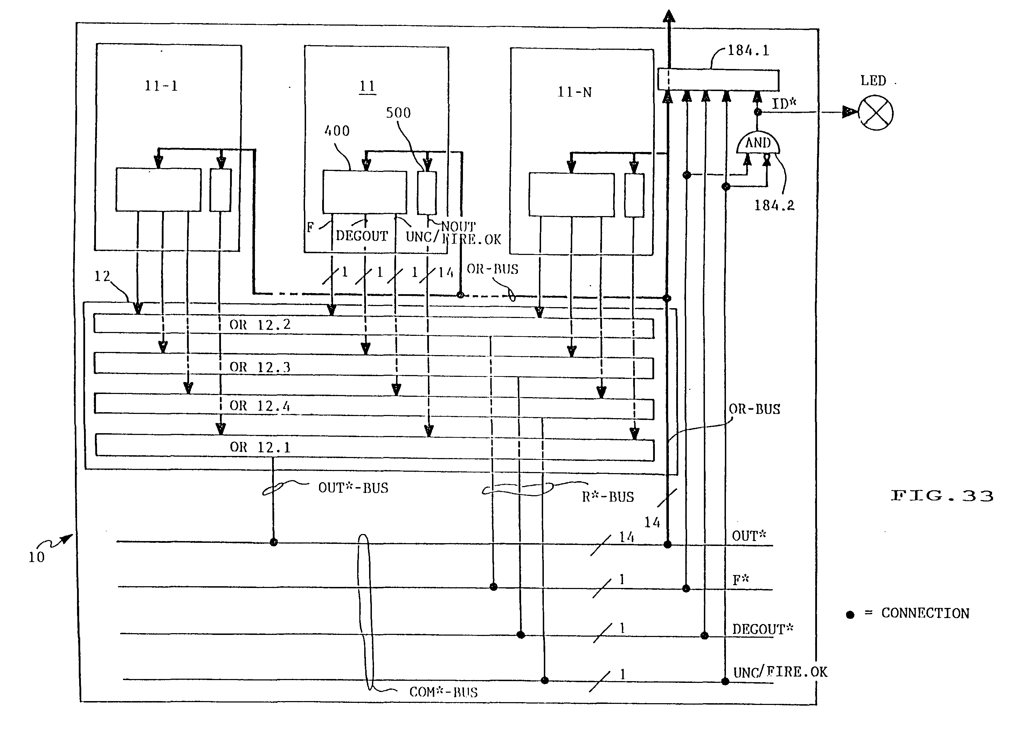

Fig. 33 schematically shows the structure of the inter-neuron communication system for the neural chip of Fig. 4(A) adapted to stand-alone operation wherein the OR function is performed by an OR circuit .

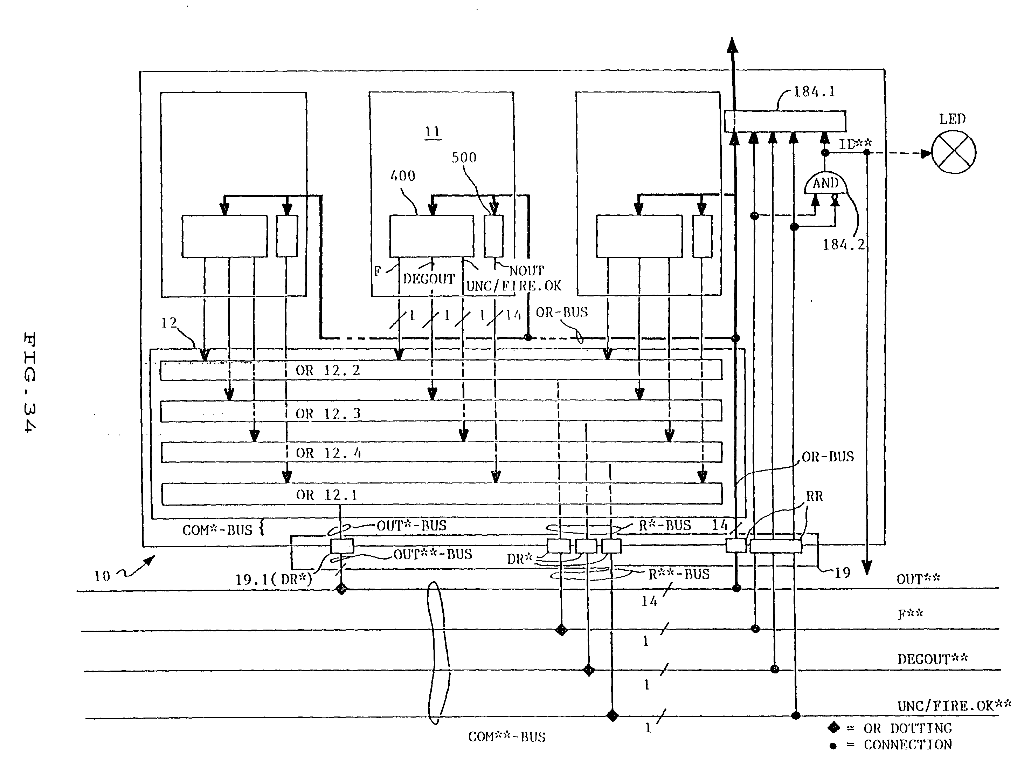

Fig. 34 schematically shows the structure of the inter-neuron communication system of the base neural chip of Fig. 4(B) for operation in a multi-chip environment wherein the OR function is performed by dotting on the off-chip common communication bus.

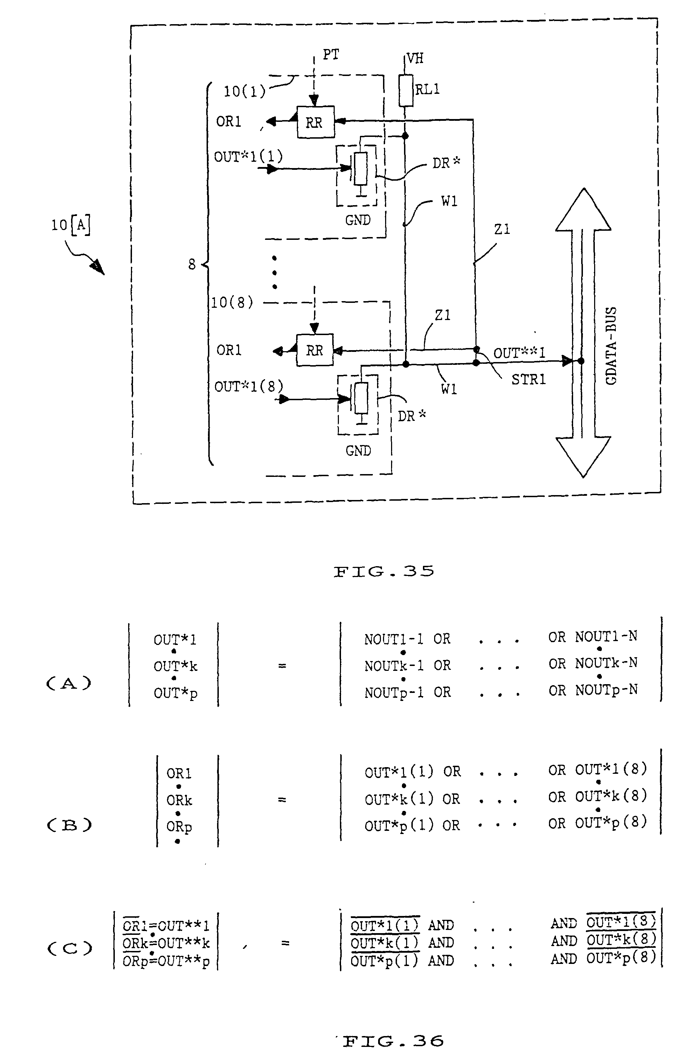

Fig. 35 shows the detailed implementation of the driver circuits for the first bit of the global output signals in case eight base neural chips of Fig. 34 are assembled to form an elementary module.

Fig. 36 is comprised of parts (A), (B) and (C). Part (A) depicts the logic relation between the OUT* and the NOUT signal. Part (B) depicts the logic relation between the OR signal and the OUT* signal. Finally, part (C) depicts the logic relation between the $\overline{OR}$/OUT** signals and the $\overline{OUT^{****}}$ signal for each bit thereof.

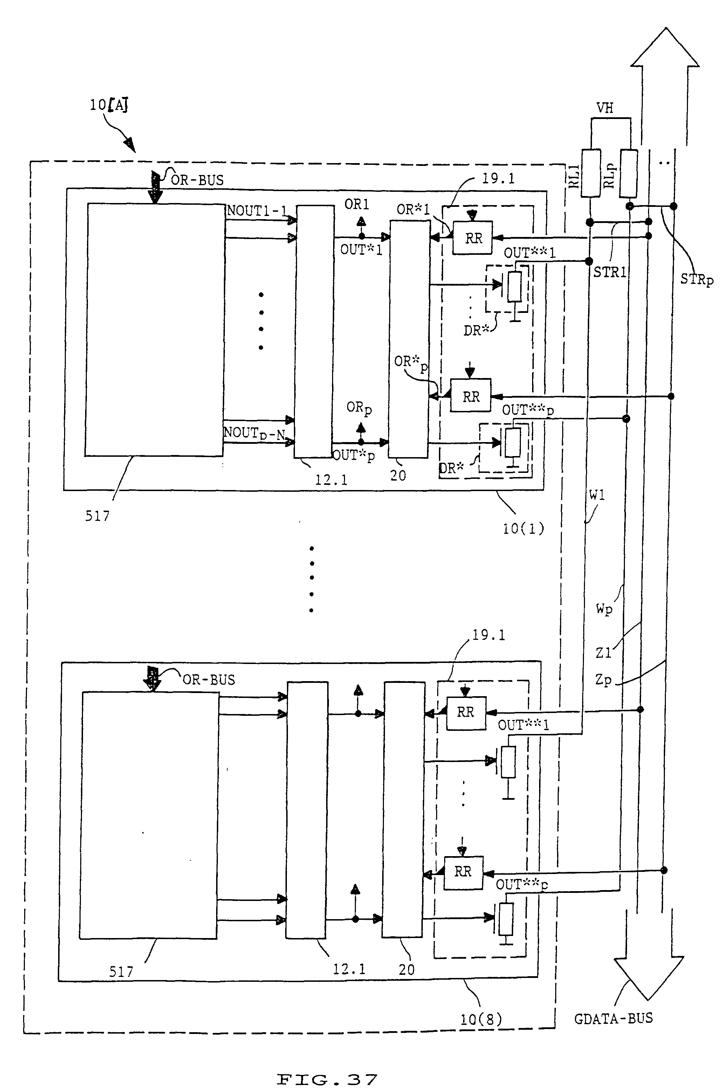

Fig. 37 shows the detailed implementation of the driver circuits for the first bit of the global output signal in case eight base neural chips are assembled to form a variant of the elementary module of Fig. 35, each chip being provided with the optional main Dmin determination circuit 20 of Fig. 4(B).

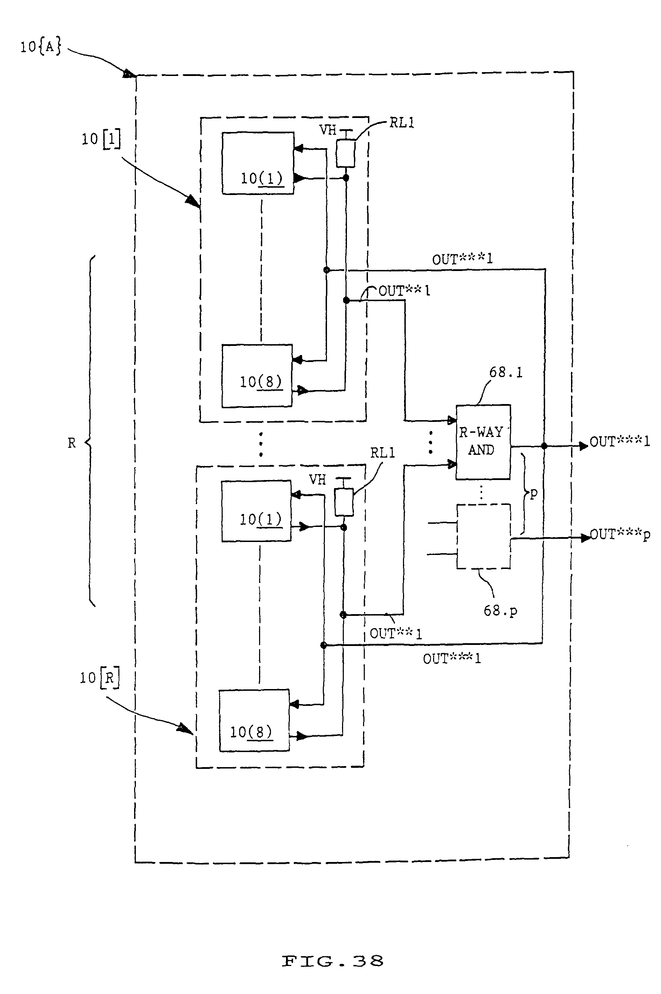

Fig. 38 shows the assembly of a plurality of the elementary modules of Fig. 35 to form a complex module.

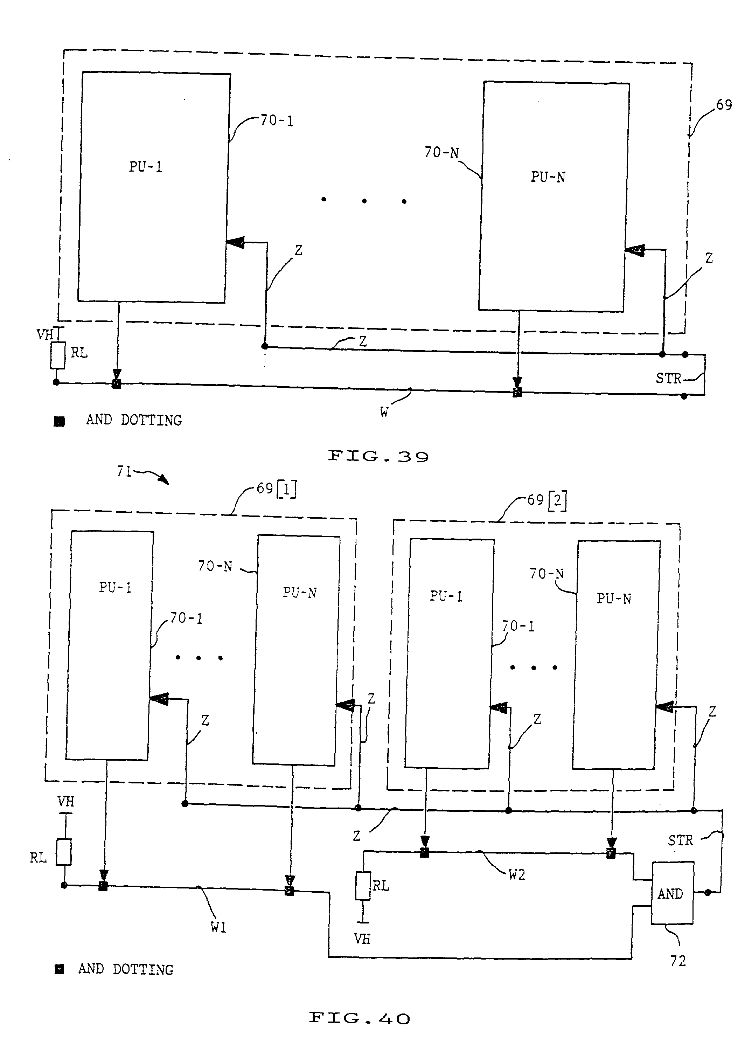

Fig. 39 illustrates the application of the inter-neuron communication system approach of the present invention to the construction of an elementary multi-processors unit comprised of a plurality of base processing units.

Fig. 40 shows the assembly of two elementary multi-processors units of Fig. 39 to form a complex multi-processors unit.

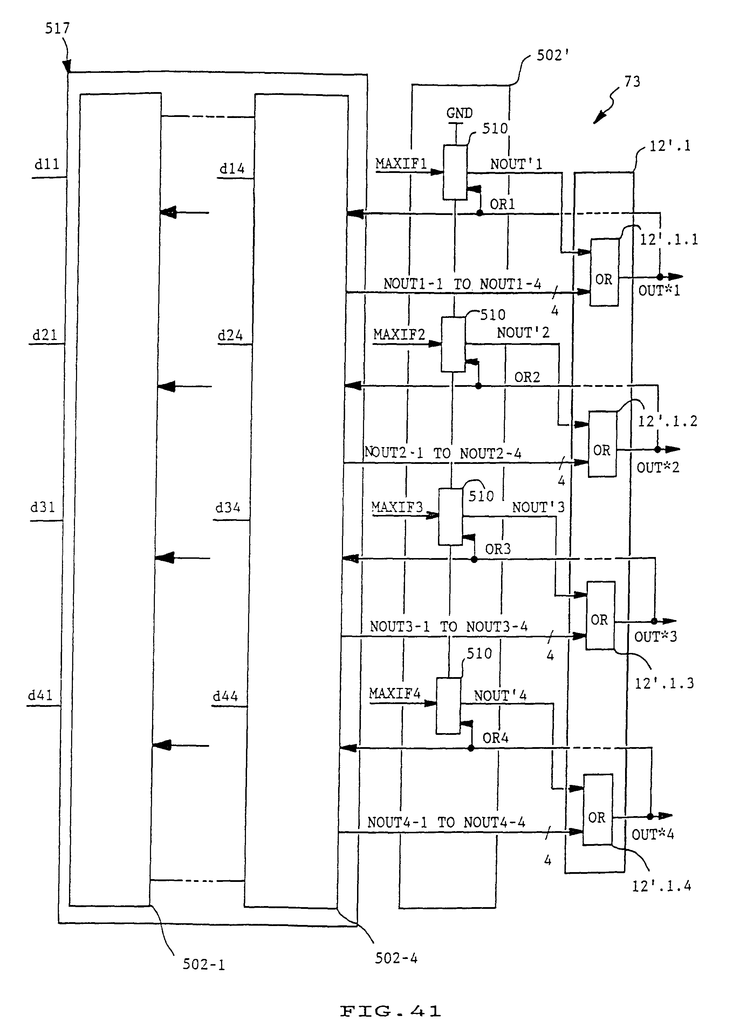

Fig. 41 shows the implementation of a dummy search/sort circuit in each base neural chip of Fig. 4(B) to generate the MaxIF signal as a local output signal.

## DESCRIPTION OF THE PREFERRED EMBODIMENTS

### BRIEF DESCRIPTION OF THE ZISC CHIP ARCHITECTURES

* INTRODUCTION *

According to the present invention, the prototype of a neural chip has been manufactured in a conventional 1 μm CMOS technology. The number n of vector components ranges from 1 (the minimum number) to 64 (the maximum number). The number m of bits for coding each component is 8. The input data interface is performed through a 16-bit bidirectional bus. The L1 and Lsup norms mentioned above are available for calculating the distance with an accuracy of 14 bits. The maximum number of contexts and of categories is 127 and 16384 since they are respectively coded on 7 and 14 bits. MaxIF and MinIF which correspond to the radius values of the largest and smallest influence fields are also coded on 14 bits. At the initialization of the ZISC chip 10, these values are respectively equal to 010 ... 00 (i.e. $2^{**}13 = 8192$) and 00 ... 10 (i.e. $2^{**}1 = 2$). They are default values determined empirically and arbitrarily. Thirty six neuron circuits have been integrated in the silicon substrate for a total of about 400000 transistors in the chip. These neuron circuits that have an innovative architecture generates result and output signals. To emphasize the fully hard-wired and autonomous aspects of this neural semiconductor chip, it will be referred to below as the ZISC chip. ZISC (a registered trade mark of IBM Corp.) is an acronym for Zero Instruction Set Computer (or Classifier). As a consequence, the ZISC chip fundamentally distinguishes from the standard CISC or RISC computer chips because it does not require any set of instructions for its operation. This ZISC denomination is also applicable to the said innovative neuron circuits, to the modules built from assembling said neural chips and finally to the neural networks incorporated in said neural chips or modules.

* THE BASE ZISC CHIP ARCHITECTURE *

Now turning to Fig. 4(A), there is shown the schematic block diagram of the architecture of a first variant of the base ZISC chip of the present invention referenced 10. The chip architecture includes a plurality of innovative neuron circuits of the type generating local (or neuron) result and local (or neuron) output data and incorporates a neural network still according to the present invention. The single chip architecture illustrated in Fig. 4(A) is tailored for stand-alone applications. The innovative neuron circuits are included in blocks referenced 11-1 to 11-N which all together form neural unit 11(#). As apparent from Fig. 4(A), all the neuron circuits 11-1 to 11-N have a serial connection so that they are structured as a chain. Assuming in this preferred embodiment that all these neuron circuits are identical, an illustrative neuron circuit will be referred to by numeral 11 (or 11-i as the case may be). The preferred architecture of neuron circuit 11 will be described hereinbelow in more details by reference to Fig. 5. In the following description, numeral 11 designates the architecture of the neuon circuit as well as the neuron circuit itself. Similar notation applies to the architecture of the ZISC chip 10 and to the ZISC chip 10 itself. In Fig. 4(A), the neural network is referenced 11 (A). It basically consists of neural unit 11(#) and inter-neuron communication system formed in the single ZISC chip 10. According to the present implementation of the variant illustrated in Fig. 4(A), the inter-neuron communication system is comprised of block 12 and an on-chip common communication bus labelled COM*-BUS which will be described in more details hereafter. All the blocks of Fig. 4(A) are comprised of circuits that can be easily integrated in a silicon substrate to form a VLSI IC chip. The ZISC chip 10 does not specifically require a micro-controller to perform the supervision of the neural network 11(A) operation as it is currently practiced in standard neural chips. As a consequence, none instruction set is required. A micro-controller (or a micro-processor) could be used in conjunction with the ZISC chip 10, but its role would be limited to present the input vectors (and categories) to the neural network 11 (A) and get the global response therefrom. For convenience, these operations will be referred to as the WRITE and READ operations hereafter. However, it must be understood that because of the improved architecture of the ZISC chip 10 of Fig. 4(A), these operations could be performed by the user as well, through manually operated switches. The connections between certain blocks of ZISC chip 10 and the micro-controller or the user (not shown) are illustrated by the 16-bit bidirectional input data bus labelled INDATA-BUS (connected to the I/O bus of the micro-controller if any) and by a SEL/CTL-BUS which transports selection and control signals. The conventional input 16-bit register (DATA register) which latches the data appearing on the INDATA-BUS at every cycle has not been shown. The receiver, driver and receiver/driver circuits which interface the ZISC chip 10 with the external world have been schematically represented by black boxes respectively labelled RR, DR, or RR/DR as the case may be. They all are conventional circuits for the circuit designer.

Block 13 is a 8-bit register which is loaded from the DATA-BUS with data representing the components of the input vector. This register is optional in asynchronous mode and is only required in the synchronous (BURST mode) of the ZISC chip 10 operation.

In addition to the input vector data, different set-up parameters (such as MaxIF and MinIF values) and input data (such as the input category, input context and norm) are also latched in dedicated registers of the ZISC chip 10.

Blocks 14 and 15 are 14-bit registers which are loaded at initialization with the maximum influence field (MaxIF) and the minimum influence field (MinIF) values. The MaxIF value is the maximum value that the influence field of a determined prototype vector may take at time of learning.

MinIF is the smallest value said influence field may take in the course of the learning process. Because, in the illustrated embodiment of the ZISC chip 10, the MaxIF and the MinIF values are never used together, the respective outputs of registers 14 and 15 may be optionally connected to the inputs of a two-way multiplexer 16 whose output bus forms the 14-bit MaxIF/MinIF-BUS.

A fourth block referred to as the main NO/CXT register 17, consists of a 8-bit register that is used to store the input norm and context data. The bus that is outputted from main NO/CXT register 17 is referred to as the NO/CXT-BUS and has a 8-bit width. The role of these input norm and context data will be detailed hereinbelow in conjunction with Fig. 5.

The input category data CAT that are available on the INDATA-BUS are conveyed on a specifically dedicated bus referred to as the CAT-BUS which has a 14-bit width.

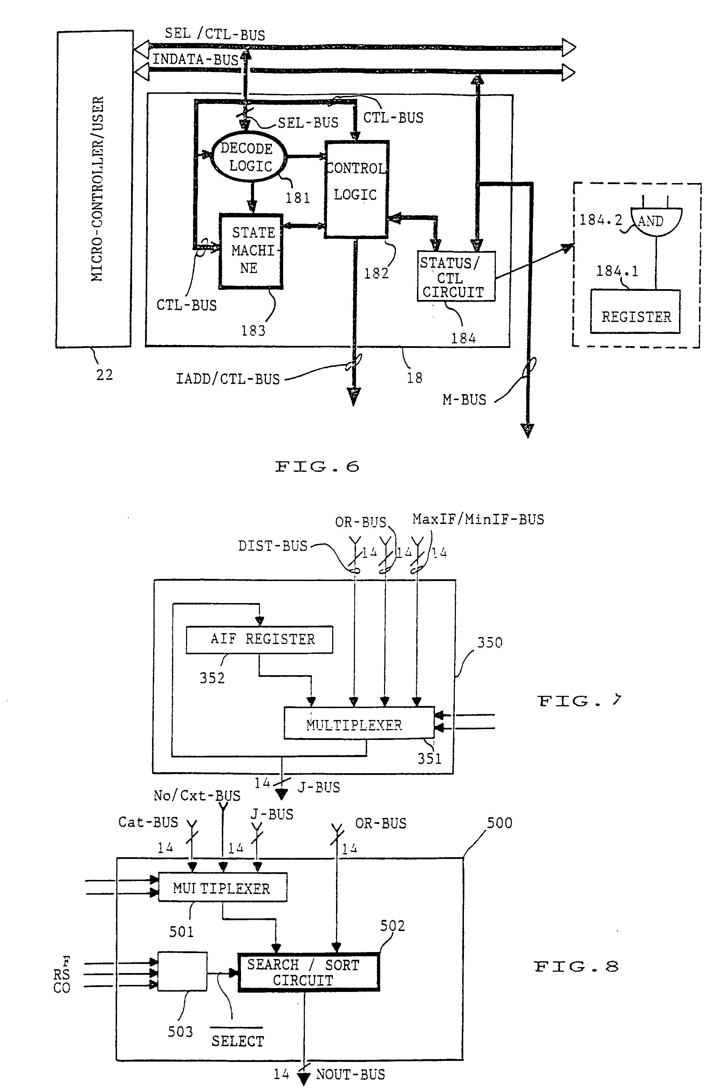

The lines transporting the control signals for all the blocks of Fig. 4(A) have not been shown for drawing clarity purposes. Most of these signals are generated in a specific block referenced 18. In essence, block 18 consists of a status and control logic circuit which substantially includes all the control logic circuits that are required to a proper operation of the ZISC chip 10 blocks. The block diagram construction of block 18 will be described in more details hereinbelow by reference to Fig. 6.

Therefore, as apparent from Fig. 4(A), the four DATA, CAT, MaxIF/MinIF and NO/CXT buses are applied in parallel to each of the neuron circuits 11-1 to 11-N. The bit capacity of each of above mentioned buses is given for sake of illustration by reference to the particular implementation of the ZISC chip 10 described above, and thus should not be limitatively interpreted.

Let us now consider Fig. 5 which schematically illustrates the block diagram architecture of an individual neuron circuit referenced 11 according to the present invention. As apparent from Fig.5, the NO/CXT-BUS is simultaneously applied to a block 100 referred to as the local norm/context register and to the first input of a block 150 which is basically a conventional matching or compare circuit made of XOR and OR gates as standard. The NO/CXT-BUS transports a 1-bit input norm signal and a 7-bit input context data. Once the input norm and context data emitted by the micro-controller or the user have been stored in the local norm/context register 100, the stored data will be referred to as the local norm and context data. The data outputted from norm/context register 100 are labelled No for the local norm and Cxt for the local context. These data are available on the No/Cxt-BUS which is comprised of two parts: a 7-bit Cxt-BUS which is applied to the second input of matching circuit 150 and a 1-bit No-BUS which is connected to block 200. The latter is referred to hereinbelow as the multi-norm distance evaluator circuit.

According to the present invention, as soon as the micro-controller or the user has decided that an input vector should be learned by the neural network 11(A), the decision of engaging a free neuron circuit 11 or to proceed to the reduction of the AIF value of the engaged neuron circuits that have wrongly fired belongs to the neural network 11(A) itself. At the end of the engagement process, the contents of the norm/context register 100 is automatically loaded from the main NO/CXT register 17 of Fig. 4(A) via the NO/CXT-BUS. Afterwards, the contents of the main NO/CXT register 17 and of the norm/context register 100 may be different. Significant benefits may be derived from this difference between the local norm (No) and context (Cxt) data that are stored in the local norm/context register 100 and the input norm (NO) and context (CXT) data that are held in main NO/CXT register 17.

As far as the context is concerned, this difference can be advantageously used to differentiate different types of input vectors. For instance, the context data approach may be used to distinguish between two families of input vectors, one representing the upper case characters and the other the lower case characters (or more generally to distinguish between different type fonts). In this case, all the neuron circuits of the neural network 11(A) having in charge to recognize the capital characters would be loaded with a local context equal to a first binary value, while all the remaining neuron circuits having in charge to recognize lower case characters would be loaded with a local context data equal to a second binary value. As a consequence, the local/input context approach will allow to select the neuron circuits having learned with a determined input context and to inhibit all others. At each recognition of an input vector, the context value stored in the local norm/context register 100 of neuron circuit 11 is compared with the context value stored in the main NO/CXT register 17. If found identical, the neuron circuit will be selected, otherwise it will be inhibited. This comparison is performed in matching circuit 150 whose role is to generate a signal labelled NS (NS stands for Neuron Selection) to select or not a determined neuron circuit. To that end, as explained above, the matching circuit 150 receives the CXT signal via the context portion (CXT-BUS) of the NO/CXT-BUS and the Cxt signal outputted by norm/context register 100 via the context portion (Cxt-BUS) of the No/Cxt-BUS. When there is a matching between said signals, the NS signal is set active to enable said neuron circuit to communicate with the other neuron circuits of ZISC chip 10 as it will be explained later on. Signal NS will be applied to certain blocks of neuron circuit architecture of Fig. 5 for enabling or disabling them as the case may be. During the recognition phase, a neuron circuit which is no longer free (i.e. it has been previously engaged) and which is selected by the NS signal is said "committed". As a consequence, the context approach of the present invention allows to configure neural network 11(A) either as a single neural network or as an arrangement of separate sub-sets thereof. In the latter case, different groups of neuron circuits within neural unit 11# are thus defined.

On the other hand, the local norm signal No determines how to calculate the distance between the input vector A and the prototype vector B stored in the weight memory of the neuron circuit 11 as it will now be described. Still according to the present invention, the local norm signal No selects the desired calculation algorithm through adequate circuitry implementation inside evaluator circuit 200 (the ZISC chip 10 is based on a totally hardware solution). In the present instance, each neuron circuit 11 of the ZISC chip 10 can calculate either the MANHATTAN distance (L1 norm) i.e. D = sum (abs (Ak-Bk)) or the SQUARE distance (Lsup norm), i.e. D = max (abs (Ak-Bk)) wherein variable k takes every value from 1 to n. Note that "abs" is an usual abbreviation for "absolute value". According to the disclosed ZISC chip 10 implementation where the local norm and context data are respectively coded on 1 and 7 bits. For instance, the most significant bit (MSB) of the No/Cxt-BUS will represent the local norm and the remaining bits will represent the local context. At initialization, this local norm bit No is equal to zero in order to compute the MANHATTAN distance by default. On the other hand, although 7 bits are used to hold the local context data, only up to 127 different context values are permitted, because the zero value is reserved. In the latter case, all the neuron circuits of the ZISC chip 10 are unconditionally selected. In other words, the above mentioned comparison between the local and input context data is not performed.

The DATA-BUS is applied to one input of the multi-norm distance evaluator circuit 200 and to a block 250, typically a Read/Write memory circuit. According to the present implementation of the ZISC chip 10 of Fig. 4(A), the Read/write memory 250 essentially consists of a 64 words x 8 bits RAM macro usually referred to as the weight memory. To have a R/W memory circuit adapted to store the components of the prototype vector associated thereto in each neuron circuit 11 instead of a single R/W memory circuit common to all the neuron circuits of the neural network, is a significant feature of the present invention. The bus which connects the R/W memory circuit 250 to the other input of evaluator circuit 200 is labelled RAM-BUS. During the recognition phase, the R/W memory circuits 250 of all the neuron circuits 11-1 to 11-N are addressed in parallel at the same time and with the same component address by block 18 via the IADD/CTL-BUS. A control signal labelled RS is applied to R/W memory circuit 250. The RS signal is an enable signal that allows to store the components of the input vector in the R/W memory circuit 250 of only a determined free neuron circuit, for instance, the first one in the chain. This first free neuron circuit will be referred to hereinbelow as the "ready to learn" neuron circuit. For the neuron circuits that have been previously engaged i.e. whose the R/W memory circuit 250 already contains the components of a prototype vector, the RS signal that is generated by these neuron circuits is such that writing therein is no longer permitted. Loading the input vector components in the R/W memory circuit 250 of the ready to learn neuron circuit during the recognition phase is another significant feature of the innovative neuron circuit architecture according to the present invention. For power consumption saving, the input vector components are not loaded in the RAM memory circuit of all free neuron circuits. Preferably, only the evaluator circuit 200 of engaged neuron circuits calculate the distance between the input vector A presented on the DATA-BUS and the prototype vector B stored in said R/W memory circuit 250. Depending on the value of the local norm signal No which is applied to evaluator circuit 200, the distance D to be calculated will be either the MANHATTAN distance for the L1 norm or the SQUARE distance for the Lsup norm as explained above. However, other calculation methods could be envisioned as well. To increase the processing speed, the distance calculation is initiated as soon as the first input vector component is presented to evaluator circuit 200. The evaluator circuit 200 generates the final distance D signal on the 14-bit DIST-BUS, when all the said components have been processed. The last component of an input vector is followed by a control signal LCOMP (Last COMPonent).

The distance D signal is applied to a first input of block 300 via the DIST-BUS and to the first input of block 350 via the DIST-BUS. The structure of block 350 is schematically shown in Fig. 7. The signal J which is outputted from block 350 is applied to the second input of block 300.

As apparent from Fig. 7, block 350 basically consists of an IF circuit which is comprised of four-way multiplexer 351 and a 14-bit AIF register 352. The multiplexer 351 receives the OR-BUS, the DIST-BUS, the MaxIF/MinIF-BUS and its own output via the said AIF register 352 to latch the data outputted therefrom. At this stage of the description, it just suffices to say that the OR-BUS is a 14-bit width bus which essentially transports distance (and in particular the minimum distance Dmin) or category type of data or signals. During the learning phase, AIF register 352 of neuron circuit 11 is loaded with a value whose maximum is given by MaxIF via the MaxIF/MinIF-BUS. Since then, its contents is subject to changes during the subsequent learning phases whenever required. The AIF value of a committed neuron circuit may be equal either to the distance D calculated by the neuron circuit 11, to MinIF (if D < MinIF) or to MaxIF (if D > MaxIF) at the end of the reduction process. The AIF value which is loaded in the just engaged first free neuron circuit is either Dmin (the distance between the input vector and the nearest neighboring neuron circuit), MinIF or MaxIF. As a matter of fact, AIF register 352 holds the AIF, i.e. a value comprised in the range defined by MaxIF and MinIF (respective upper and lower limits). The AIF value cannot be changed during the recognition phase, but only during the learning phase. As soon as this lower limit is reached (AIF = MinIF), the corresponding neuron circuit 11 is said degenerated. Signal J is outputted from IF circuit 350 on the 14-bit J-BUS. The nature of the J signal is determined by application of adequate control signals to multiplexer 351.

Now turning again to Fig. 5, block 300 basically consists of an innovative compare circuit which performs the comparison between signals D and J and generates two signals LT (Lower Than) and LTE (Lower Than or Equal) whose logic value depends on the result of that comparison. Different cases are to be considered depending on the operating mode. The description which follows is made by reference to the normal sub-mode (NM) of the RECOGNITION mode. The role of compare circuit 300 is to perform the comparison between the distance D and the content of AIF register 352 (J = AIF). If the calculated distance D for a determined input vector falls within the actual influence field AIF of that neuron circuit, i.e. if D < AIF, the input vector is recognized, the neuron circuit fires and finally the LT signal generated by compare circuit 300 is set active (LT = 1). On the contrary, if the input vector does not strictly fall within AIF, if D >= AIF, the input vector is not recognized, the neuron circuit doesn't fire and then signal LT is set inactive (LT = 0). In the recognition mode, the LTE signal is not exploited. On the other hand, in the learning phase, during the reduction process, compare circuit 300 performs comparison between the calculated distance D and the MinIF value (J = MinIF). If distance D is inferior or equal to the MinIF value i.e. if D < = MinIF, then the LTE signal that is outputted from the compare circuit 300 is set active (LTE = 1). In this case, the role of signal LTE is to flag a degenerate status in setting a dedicated register (DEG register) of block 400 as it will be explained hereafter. In the contrary, if D > MinIF, signal LTE is set inactive (LTE = 0). In the learning mode, the LT signal is not exploited. As a consequence, for a committed neuron circuit 11, signal LT is related to the fire local result signal F in the recognition phase, while signal LTE is related to the degenerate status of the neuron circuit in the learning phase.

The LT and LTE signals that are generated by compare circuit 300 are applied to block 400. Moreover, block 400 is also connected to the OR-BUS, the CAT-BUS and to the output of block 450. The latter essentially consists of a conventional 14-bit register to latch the input category data CAT appearing on the CAT-BUS as the local category data for subsequent processing. At initialization, the contents of local category register 450 is equal to zero. The bus which is connected to the output of category register 450 is labelled the Cat-BUS. It transports the local category data or signal C. As a result, the input category data CAT appearing on the CAT-BUS may be different from the local category data C held in category register 450. When, the distinction is unworthy, they will be simply both referred to hereinbelow by the single term of category data. During the learning phase, the category register 450 is loaded with a determined input category value as soon as the neural network 11(A) has decided to engage the neuron circuit 11 because none other neuron circuit of the neural network has recognized the input vector. Block 400 consists of an innovative identification circuit whose a primary function is to make apparent whether the input vector has been recognized or not by neuron circuit 11 during the recognition phase. Identification circuit 400 locally generates three local result signals F, DEGOUT, and UNC/FIRE.OK and one local status signal DEG at the neuron circuit 11 level. These local result signals are important for the generation of global result signals that are representative of the response of the neural network 11(A) as a whole to the input vector presentation.

The fire local result F signal is set active (F = 1) when the neuron circuit 11 has fired, i.e. it has recognized the input vector. The F signal is combined with the DEG status signal (that is internally available in the said dedicated DEG register of identification circuit 400 as a result of previous LTE signal processing) to generate the DEGOUT signal, so that DEGOUT = DEG AND F. The degenerate result DEGOUT signal is thus set active (DEGOUT = 1) when a degenerated neuron circuit has fired. Signals F and DEGOUT are really the local response of an individual neuron circuit 11 to the presentation of an input vector to neural network 11(A). In addition, signal F also plays the role of a gating signal, as it will be explained later on in more details. In particular, it prevents those committed neuron circuits that have not fired to communicate with the other neuron circuits that have fired via OR circuit 12 and the on-chip common communication bus COM*-BUS mentioned above. Finally, identification circuit 400 generates the UNC/FIRE. OK signal whose signification will be discussed later on. The UNC/FIRE.OK signal is of a different nature because its value takes into account the response of all committed neuron circuits (via the OR-BUS) that have fired including the neuron circuit 11 in consideration. The local (or neuron) result signals F, DEGOUT and UNC/FIRE.OK all together form the composite NR signal (NR stands for Neuron Result) that is available the 3-bit NR-BUS.

Another key feature of the neuron circuit architecture of Fig. 5 lies in the innovative design of block 500 which is provided in each neuron circuit 11 and is schematically illustrated in Fig.8.

As apparent from Fig. 8, block 500 schematically consists of a Dmin determination circuit which is comprised of three-way multiplexer 501, innovative search/sort circuit 502, and logic circuit 503. The J-BUS, the No/Cxt-BUS and the Cat-BUS are applied to multiplexer 501 as input buses. The output of multiplexer 501 is connected to the first input of search/sort circuit 502 whose other input receives the OR-BUS. Circuit 500 generates a local output signal labelled NOUT (NOUT stands for Neuron OUTput) on the 14-bit NOUT-BUS. Logic circuit 503 receives three input signals F, RS and CO and generates a selection signal $\overline{\text{SELECT}}$ that is useful to the operation of search/sort circuit 502. The nature and the role of control signals RS and CO will be detailed later on. The local distance D signal (via the J-BUS) and the local category C signal (via the Cat-BUS) can be directly applied to the input of search/sort circuit 502 depending on the control signals applied to multiplexer 501 as standard. Search/sort circuit 502 may be by-passed or passed-through so that, in particular these signals can be made available on the NOUT-BUS. With the present implementation of the ZISC chip 10, search/sort circuit 502 is by-passed when the 14 bits of the OR-BUS are made equal to zero. Search/sort circuit 502 of neuron circuit 11 has been designed to closely work with the corresponding search/sort circuits of the other neuron circuits incorporated in the ZISC chip 10 through the said inter-neuron communication system to form a fictitious aggregate circuit (to be detailed later on). An essential role of said aggregate circuit is to determine for those of neuron circuits 11-1 to 11-N that are committed and have fired, the minimum distance Dmin among all the distances calculated, and then to sort the remaining distances in the increasing order.

Block 600 is still another further innovative feature of the neuron circuit 11 of the present invention. Block 600 essentially consists of a daisy chain circuit which allows a serial connection with similar daisy chain circuits of the two adjacent neuron circuits, so that as mentioned above, all the neuron circuits of the ZISC chip 10 of Fig.4(A) are forming a chain like structure. To that end, it is provided with dedicated input and output terminals DCI and DCO. Daisy chain circuit 600 is organized around a 1-bit register (DAISY REG) which stores a first binary value (e.g. a zero) when the neuron circuit 11 is free and a second binary value (e.g. a one) when the neuron circuit 11 is engaged. At initialization, the contents of said 1-bit register is zero. As a result of the particular structure of daisy chain circuit 600, the free neuron circuit that is ready to learn is easily identified, because it is the first in the chain of neuron circuits 11-1 to 11-N whose DCI and DCO signals respectively applied to the DCI and DCO terminals are complementary one to the other (e.g. signal DCI = 1 and signal DCO = 0). In the learning phase of the said ready to learn neuron circuit, a signal labelled ST (ST stands for STorage enable) is activated to load a "one" in said 1-bit register of the daisy chain circuit 600 at the end of the engagement process. Then, the daisy chain circuit 600 generates a 1-bit signal DCO = 1 at its DCO terminal which in turn, is applied as the input signal to the input terminal DCI of the daisy chain circuit of the following neuron circuit. The latter thus becomes the new ready to learn neuron circuit.

As soon as signal ST has been activated, the engagement processus of neuron circuit 11 is initiated. When all the neuron circuits 11-1 to 11-N of neural network 11(A) are definitely engaged, all their respective 1-bit DAISY registers are filled with one's, as a result, DCO-N signal is equal to 1. The DCO-N signal may thus be used as a FULL signal. When set active, it means that there is no longer any free neuron circuit 11 in the ZISC chip 10. Finally, daisy chain circuit 600 also generates control signals labelled CO and RS that are important to the neuron circuit 11 operation.

As a matter of fact, like most of the other blocks of Fig. 5, identification circuit 400 and Dmin determination circuit 500 are controlled by different control signals. Some control signals prevent signal emission on the NR-BUS and/or the NOUT-BUS as the case may be. The aim is to have the NR and NOUT signals outputted only for those of neuron circuits that are committed and have fired. To that end, a control signal labelled CO is generated from ANDing signals DCO and NS. The role of signal CO is thus to specify whether the neuron circuit is committed or not, depending its logic value. The CO signal is applied to identification circuit 400 and Dmin determination circuit 500 and is set active (CO = 1) only for a committed neuron circuit. Signal CO generated by daisy chain circuit 600 and signal F generated by identification circuit 400 are applied as control signals to Dmin determination circuit 500. As a result, thanks to this combination of the F and CO signals, now only the committed neuron circuits that have fired will be allowed to generate the local composite result and output signals NR and NOUT on their respective NR-BUS and NOUT-BUS. Another control signal labelled RS (RS stands for Ready to Store) derived from the DCI and DCO signals through an exclusive OR function is also constructed in daisy chain circuit 600. As a matter of fact, in neural network 11(A), the first free neuron circuit that is ready to learn is the only one which meets the logic relation: signal DCI = $\overline{\overline{DC}\overline{O}}$. The role of the RS signal is thus to permit or not the WRITE operation in R/W memory circuit 250. During each recognition phase, the components of the input vector are only stored in the R/W memory circuit 250 of the ready to learn neuron circuit. If the neural network 11(A) decides to store the input vector as a new prototype vector in the ready to learn neuron circuit, then the RS signal of the engaged neuron circuits will be switched to the adequate logic level to prevent any further writing therein. The RS signal is also applied to Dmin determination circuit 500 during a particular operating mode (SAVE mode) of the ZISC chip 10 as it will be described later on.

In summary, as a result of the architecture described in Fig.5, any committed neuron circuit 11 that has fired during the recognition phase, locally generates a local response to the presentation of an input vector. This local (or neuron) response is essentially comprised of two types of data or signals. First, the local result signals F, DEGOUT and UNC/FIRE.OK generated by identification circuit 400 that are outputted on the 3-bit NR-BUS and second, the local output signal (NOUT) generated by the Dmin determination circuit 500 on the 14-bit NOUT-BUS. If the search/sort circuit 502 of Dmin determination circuit 500 is passed-through, the NOUT signal is either the local distance D calculated by distance evaluator circuit 200 or the local category C held in register 450. In the contrary, if the search/sort circuit 502 is not passed-through, at the end of the minimum distance determination process, the minimum distance Dmin appears on the NOUT-BUS of the neuron circuit which holds the same, while all other neuron circuits are excluded. In other words, the NOUT signals of these neuron circuits will have neutral values. Because, in the present implementation of the ZISC chip 10 of Fig. 4(A), an OR circuit 12 is employed, the neutral value is given by an NOUT signal whose all bits are equal to zero. However, it should be noted that several neuron circuits may hold the same minimum distance Dmin value.

Now turning again to Fig. 4(A), the composite local result signal NR and the local output signal NOUT outputted by all neuron circuits 11-1 to 11-N of neural network 11(A) are applied to OR circuit 12 via their respective NR-1-BUS to NR-N-BUS and NOUT-1-BUS to NOUT-N-BUS. In fact, only the local result and output signals of those neuron circuits that are committed and have fired are of significance for subsequent processing in OR circuit 12 (other are neutral as explained just above).

OR circuit 12 basically consists of four dedicated OR sub-circuits in the disclosed implementation of the ZISC chip 10. First of all, three dedicated OR sub-circuits perform an OR function between each of the neuron result signals, to generate three corresponding global result signals i.e. F*, DEGOUT* and UNC/FIRE.OK* on a 3-bit bus labelled the R*-BUS. Naming Fi the local result "fire" signal of neuron circuit 11-i (i = 1 to N) of neural network 11(A), the ORing of all the Fi signals produces the global result "fire" signal F* such as F* = F1 OR ... OR FN. The local result "fire" signal is such as Fi is equal to one when neuron circuit 11-i has fired, and is equal to zero in the contrary case. Another global result signal of interest, labelled NID* can be directly derived from said F* signal. It is defined according to the logic relation: NID* = $\overline{F^*}$ . Signal F* is a first global response of the neural network 11(A) to the presentation of an input vector A. Signal F* is thus set active (F* = 1) when the neural network 11(A) has recognized the input vector, i.e. when at least one neuron circuit 11 has fired. Same reasoning applies to the construction of the other global result signals DEGOUT* (DEGOUT* = DEGOUT1 OR ... OR DEGOUTN) and UNC/FIRE.OK* (UNC/FIRE.OK* = UNC/FIRE.OK1 OR ... OR UNC/FIRE.OKN). Signal DEGOUT* is thus set active (DEGOUT* = 1) when at least one degenerated committed neuron circuit of the neural network 11(A) has fired. For a neuron circuit that is not degenerated or has not fired, its signal DEGOUT is set inactive (DEGOUT = 0) and thus has no influence on the corresponding global result "degenerate" signal DEGOUT*. The nature of the global signal UNC/FIRE.OK* will be explained later on.

Likewise, a fourth dedicated OR sub-circuit performs an OR function between all the local output NOUT signals that are generated by neuron circuits 11-1 to 11-N and for each bit j (j = 1 to p = 14) thereof. The NOUT data for neuron circuit 11-i is a binary word NOUT-i that can be written NOUT-i = NOUT1-i ... NOUTj-i ... NOUTp-i. In turn, the signal which is outputted by said fourth OR sub-circuit is referred to as the OUT* signal, still comprised of p = 14 bits, that is available on the OUT*-BUS. The jth bit of signal OUT*j is thus such as OUT*j = NOUTj-1 OR ... OR NOUTj-N. The 3-bit R*-BUS and the 14-bit OUT*-BUS are merged to form an on-chip common communication bus referred to as the 17-bit COM*-BUS. The OUT* signal is directly applied as a feedback signal via a feedback bus labelled OR-BUS to all neuron circuits 11-1 to 11-N of Fig. 4(A). The OR-BUS is thus directly derived from the portion of the COM*-BUS which transports the OUT* signal. The OUT* signal does not require to be processed in any way by the micro-controller or by the user. It is important to notice that the OR signal directly corresponds to the OUT* signal in the subject disclosed implementation of the ZISC chip 10 of Fig. 4(A). The OR-BUS, whose construction appears to be novel in the art of neural chips, is thus an essential element of the innovative inter-neuron communication system of the ZISC chip 10 of Fig. 4(A). The said inter-neuron communication system provides a very efficient interconnection scheme to all the neuron circuits 11-1 to 11-N of the ZISC chip 10, thereby allowing a complete exchange of data therebetween that is totally independent of the micro-controller or the user.

A primary role of the said fourth OR sub-circuit is to perform an OR function between all the local categories held in the category register 450 of each committed neuron circuit that has fired during the recognition phase. As mentioned above, the category and the distance data are allowed to pass-through search/sort circuit 502, so that these data are directly applied on the NOUT-BUS of their respective neuron circuits as the local output signal. The ORing of all the local category values stored in each category register 450 of these neuron circuits in OR circuit 12 provides a global category signal C* such as C* = C1 OR ... OR CN. This global category signal C* is in particular applied to the identification circuit 400 of each of said neuron circuits via the OR-BUS. For those neuron circuits that are not committed, their local category signal C is made inactive, e.g. equal to zero so that they do not intervene in the OR function performed by said fourth OR sub-circuit of OR circuit 12. A XOR function is performed in the identification circuit 400 between the global category C* and the local category C stored in the category register 450 of neuron circuit 11. If there is a mismatching between these values, this means that at least two committed neuron circuits of neural network 11(A) with different categories have fired. In this case, the local result signal UNC/FIRE.OK of at least one determined neuron circuit is then set active (UNC/FIRE.OK = 1) in identification circuit 400. On the contrary, if there is a matching therebetween, this means that there is only one category involved. In this latter case, the local result signal UNC/FIRE. OK of all committed neuron circuits, irrespective they have fired or not is set inactive (UNC/FIRE.OK = 0). All the local result UNC/FIRE.OK signals are ORed in said fourth dedicated OR sub-circuit to produce the global result UNC/FIRE. OK* signal. If at least one UNC/FIRE.OK signal is set to "1", this forces global result signal UNC/FIRE.OK* to be in turn set to "1". Signal UNC/FIRE.OK* is thus set active (UNC/FIRE.OK* = 1) when an input vector has been recognized by at least two neuron circuits of ZISC chip 10 with different categories associated therewith. In other words, the input vector has been recognized by neural network 11(A), but its category cannot be determined with certainty.

The essential information as to the identification or not of the input vector by neural network 11(A) is given by global result signal ID* which is reconstructed from signals F* and UNC/FIRE.OK* according to following logic relation ID* = F* AND $\overline{\text{UNC/FIRE.OK}^*}$. The ID* signal is thus set active when an input vector has been recognized by at least one neuron circuit (F* = 1) and without ambiguity (UNC/FIRE.OK* = 0) by neural network 11(A). The UNC/FIRE.OK signal will be therefore referred to hereinbelow as the local result ambiguity signal.

In addition, this fourth dedicated OR sub-circuit plays an essential role in the search of the minimum distance Dmin among all the calculated distances D1 to DN (or of the minimum category Cmin as the case may be). As a matter of fact, the search/sort circuit 502 (see Fig. 8) of neuron circuit 11 is so designed that it is adapted to closely work with the other corresponding search/sort circuits via said fourth dedicated OR sub-circuit, the OUT*-BUS and the OR-BUS to determine the minimum distance Dmin. The latter value will appear on the OUT*-BUS as the OUT* signal at the end of the so-called Dmin determination process. In fact, the fictitious aggregate circuit mentioned above is constructed so that during the Dmin determination process, search/sort circuits are self-excluded until only the search/sort circuit of the neuron circuit(s) holding the minimum distance Dmin remains active. As a final result, only the neuron circuit which holds the minimum distance Dmin will be permitted to output the same to the OR circuit 12 via its NOUT-BUS. The value of the minimum distance Dmin (which is not modified in OR circuit 12) is finally available on the OR-BUS via the OUT*-BUS portion of the COM*-BUS. In the meantime of the said Dmin determination process, the local output signals NOUT that are outputted by the neuron circuits on their respective NOUT-BUS are not of significance. Similar reasoning applies to the determination of the minimum category Cmin among all the local categories C1 to CN stored in the local category register 450 of each of said neuron circuits 11-1 to 11-N respectively. The minimum distance Dmin can be loaded in the AIF register 352 of the ready to learn neuron circuit via the OR-BUS, as the AIF value of this neuron circuit, during the engagement process of the learning phase.

The global result and output signals mentioned above are preferably applied to block 18 for storage therein. The role of block 18 will now be described in more details by reference to Fig. 6. Now turning to Fig. 6, block 18 is connected to a block 22, which aims to represent the micro-controller or the user (referred to hereinbelow as the micro-controller/user 22), via the SEL/CTL-BUS and the INDATA-BUS. The SEL/CTL-BUS is comprised of a selection bus SEL-BUS and a control bus CTL-BUS. In particular, the SEL-BUS transports the signals for appropriately selecting the various registers of the ZISC chip 10. The CTL-BUS conveys standard control and clock signals such as STROBE, CHIP SELECT , CLOCK, ... , and the like from the micro-controller/user 22. The function of the decode logic circuit 181 is to generate said selection signals to allow access of a specific data in the adequate register. Depending on the value of these selection signals and control signals appearing on the SEL/CTL-BUS, the control logic circuit 182 generates all the signals that are internally required for a proper operation of the ZISC chip 10 including the address signals that are required for accessing the R/W memory circuit 250 which stores the prototype vector components. Address and control signals are outputted from the control logic circuit 182 via a bus labelled IADD/CTL-BUS. The state machine circuit 183 controls the sequencing of the ZISC chip 10 operation, and in particular, during the essential learning and recognition phases. Preferably, a status/ctl circuit 184 is implemented, because it may reveal to be of interest for data exchange with the micro-controller/user 22. It is essentially comprised of a register 184.1 and a two-way AND gate 184.2 whose role will be explained in more details later on. As a matter of fact, register 184.1 can store the global result and output signals that are generated by neural network 11(A) as a whole and also control signals that are processed in the control logic circuit 182. The global result signals F* (or NID*), DEGOUT*, UNC/FIRE.OK* and ID* may be loaded into register 184.1 of block 18 of ZISC chip 10. In particular, signal ID* is reconstructed from the F* and UNC/FIRE. OK* signals in AND gate 184.2 before being stored in a specific position of register 184.1. This position must be easily accessed by the micro-controller/user 22, because it contains the key information as to the input vector has been finally correctly identified or not by the neural network 11(A) incorporated in the ZISC chip 10. In particular, said specific position may be advantageously connected to a LED outside the ZISC chip 10 via a connecting wire for the immediate and visual information of the user. These global result and output signals are transported on the M-BUS. In addition, register 184.1 can also store set-up parameters, data related to the operating modes of neural network 11(A) for bi-directional communication with micro-controller/user 22 via the INDATA-BUS. In particular, its contents may be accessed by the micro-controller/user 22 during a WRITE or a READ operation. All circuits of block 18 are considered conventional to the man skilled in the art. However, the ZISC chip 10 of Fig. 4(A) is preferably provided with an interface circuit in logic circuit 182 that is adapted to interface the various resources of ZISC chip 10, including registers, with the most commonly used standard buses such as the PCI, ISA and the like and their respective protocols.

As described above, by reference to Fig. 4(A), the on-chip common communication bus COM*-BUS is formed by merging the R*-BUS and the OUT*-BUS. The COM*-BUS thus transports the totality of the response of the ZISC chip 10 to presentation of an input vector. The OR signal is identical to the OUT* signal. The ZISC chip 10 of Fig. 4 (A), thus incorporates neural network 11(A) comprised of neural unit 11(#), OR circuit 12, the COM*-BUS and the OR-BUS (the OR-BUS may be considered as a part derived of the COM*-BUS). The above described architecture allows a single ZISC chip 10 of Fig. 4(A) to operate in a stand-alone way for applications which do not require an external output bus. However, still according to the present invention, this described architecture can be easily modified to have the ZISC chip 10 of Fig. 4(A) provided with such an external output bus to operate in a multi-chip environment, as it will now be described hereafter by reference to the architecture variant of Fig. 4(B) still referenced 10. Likewise, the neural network incorporated in the ZISC chip 10 of Fig. 4(B) is also referenced 11(A). The aim being to produce a neural network of any desired neural capacity resulting from the combination of as many neural networks 11(A) as required by the application. This is accomplished by assembling the adequate number of ZISC chips 10 once adapted to operate in a multi-chip environment.

To that end, should a plurality of ZISC chips 10 be assembled, the global composite result and output signals R* and OUT* generated by said plurality of ZISC chips 10 are ORed on another common communication bus included in the inter-neuron communication system. This common communication bus is now necessarily located outside the ZISC chips 10 and will be referred to hereinbelow as the off-chip common communication bus. Preferably, this additional OR function is performed by adequate driver circuits directly on the said off-chip common communication bus.

Now turning to Fig. 4(B), the R*-BUS and the OUT*-BUS are applied to a block 19 which consists of standard driver, receiver and driver/receiver circuits and of driver circuits labelled DR* that are specifically designed not only to regenerate the R* and OUT* signals, but also to provide such an OR dotting function on the said off-chip common communication bus labelled COM**-BUS in Fig. 4(B). The corresponding global signals that are outputted from said driver circuits DR* of block 19 are labelled R** and OUT** on their respective R**-BUS and OUT**-BUS that are merged to form the said COM**-BUS. The second asterisk clearly indicates that an additional OR function has been performed on the R* and OUT* signals at the output of these driver circuits DR*.

However, instead of being directly connected to its corresponding driver circuits DR*, the OUT*-BUS can be optionally connected to the input of a block 20. Basically, block 20 has the same construction as search/sort circuit 502 placed in each neuron circuit 11 and will be referred to below as the main Dmin determination circuit of the ZISC chip 10. Likewise, main Dmin determination circuit 20 is provided with a connection to a feedback bus labelled OR*-BUS. In case main Dmin determination circuit 20 is used, it is fed by the the OUT** signal as the feedback signal on the OR*-BUS. Obviously, if only one ZISC chip 10 is used, or a very few of them, the Dmin main determination circuit 20 is obviously uninteresting, but should it be required to combine a great number of ZISC chips 10, it may reveal useful. As a matter of fact, it will improve the overall processing speed of any neural network resulting of such a combination. The COM**-BUS is the essential constituent of a general purpose output data bus referred to hereinbelow as the GDATA-BUS. With the implementation illustrated in Fig. 4(B), the GDATA-BUS may include signals other that the R** and OUT** signals. The COM**-BUS may be connected to the micro-controller/user 22 either directly or via register 184.1 to latch the data. Thanks to the OR function performed in the driver circuits DR* of block 19 on the COM**-BUS, a plurality of ZISC chips 10 may be connected thereon. As a result, a neural network of a bigger size may be formed by combining a corresponding plurality of neural networks 11(A) via this COM**-BUS which is common to all of them. The additional OR function performed on the COM**-BUS by OR dotting is thus an essential element of the ZISC chip 10 implementation illustrated in Fig. 4(B), i.e. as soon as it operates in a multi-chip environment. To offer both stand-alone and multi-chip environment options, the ZISC chip 10 is preferably provided with a multiplexer circuit 21 which permits the micro-controller/user 22 to select either the COM*-BUS (if a single ZISC is used) or the COM**-BUS (in a multi-chip environment) to feed the OR-BUS connected to each neuron circuit 11. Fig. 4(B) shows how the GDATA-BUS (or at least the COM**-BUS portion thereof) is re-injected in the ZISC chip 10 via a driver/receiver circuit DR/RR of block 19 and the P-BUS. On the other side of the multiplexer 21, the Q-BUS feeds both the OR-BUS and the M-BUS which is applied to the status and control logic circuit 18 described above (see Fig. 6). The loop shown in Fig. 4(B) which by-passes multiplexer 21 indicates that some signals need not to be multiplexed, so that there is a direct liaison between the status and control logic circuit 18 and the GDATA-BUS. The implementation illustrated in Fig. 4(B) represents the preferred architecture of the ZISC chip of the present invention because it is adapted to any type of applications. The ZISC chip 10, with or without the multiplexer 21 (in this case the COM*-BUS is not formally required), and the neural network 11(A) incorporated therein such as described in Fig. 4(B) will be referred to as the base ZISC chip and the base neural network respectively in the following description. The neural capacity of either implementation is the same because it results of the number of neuron circuits incorporated in neuron unit 11(#), only the construction of the inter-neuron communication system is different. It is based on one OR stage (OR circuit 12), the COM*-BUS and the OR-BUS with the Fig. 4(A) implementation and two OR stages (OR circuit 12, OR dotting performed in block 19), the COM**-BUS and the OR-BUS (and optionally the OR*-BUS) with the Fig.4(B) implementation. In the latter case, the signal transported by the OR-BUS is the OUT** signal.

In the course of the following description, the notations introduced above will be maintained. The hyphen designates a determined neuron circuit (e.g. 11-i). For consistency, the same notation is used for the circuitry (e.g. search/sort circuit 502-i) and signals (e.g. NOUT-i) that are related to such a determined neuron circuit. Global signals and related buses which result from a first ORing in OR circuit 12 are labelled with one asterisk (e.g. OUT* and OUT*-BUS in Fig. 4(A)). When these signals are submitted to the additional ORing performed at the output of driver circuits DR* of block 19, the global result signals and output buses that are outputted therefrom are then labelled with two asterisks (e.g.OUT** and OUT**-BUS in Fig. 4(B)). The parenthesis will be used for all chip related circuitry, for instance, the base neural network that is incorporated in the ZISC chip 10 of Fig. 4(B) is referred to by reference 11(A).

In summary, at the neuron circuit 11 level, there are six input buses:

.    the 8-bit DATA-BUS which transports the input vector components data;

.    the 14-bit MaxIF/MinIF-BUS which transports the maximum (MaxIF) and the minimum (MinIF) values of the influence field;

.    the 8-bit NO/CXT-BUS which conveys the 1-bit input norm and 7-bit input context data;

.    the 14-bit CAT-BUS which transports the input category CAT data.

.    the IADD/CTL-BUS which transports the address and control signals that are required for a proper operation of the all the blocks of the neuron circuit 11 of Fig. 5; and,

.    the 14-bit OR-BUS which transports either the OUT* or the OUT** signal of the distance or category type.

Still at the neuron circuit level, they are two output buses:

.    the NR-BUS which transports the composite local (or neuron) result signal comprised of signals F, DEGOUT and UNC/FIRE.OK. Signal F is illustrative of the "fire" response of a committed neuron circuit to the input vector presentation, i.e. if it has been recognized or not. Signal DEGOUT is illustrative of the "degenerate" status, i.e. if neuron circuit that has fired is degenerated or not. Signal UNC/FIRE.OK results from the comparison between the local category C of neuron circuit 11 with the global category C*. This signal aims to remove the ambiguity as to the category of an input vector that has been recognized; and,

.    the NOUT-BUS transports the local (or neuron) output signal NOUT. In either mode, at the end of the Dmin determination process, NOUT = Dmin for the neuron circuit which holds the minimum distance Dmin and the NOUT signals of the other neuron circuits are not of significance but have no influence at the OR circuit 12 level. When the Dmin determination circuit 500 is passed-through (more exactly, it does not process the signal applied to its input), the NOUT signal may represent the value held in any register or memory of neuron circuit 11. Usually, the NOUT-BUS transports the distance calculated by the neuron circuit or the local category held in its category register 450. However, in the SAVE and RESTORE modes, it transports other data (set-up parameters, prototype vector components and the like).

At the ZISC chip 10 level, there is no distinction between either implementation as far as the input buses that interface the chip with the micro-controller/user 22 are concerned. These input buses are :

.    the 16-bit bi-directional INDATA-BUS which transports the input vector data, the set-up parameters, the input norm/context and category data to allow a complete exchange of data between the micro-controller/user 22 and the ZISC chip 10; and,

.   the SEL/CTL-BUS which similarly transports the selection and control signals to the ZISC chip 10.

Now, there is a distinction as to the output bus at the ZISC chip 10 level. With the Fig. 4(A) implementation, the output bus is the on-chip common communication bus COM*-BUS which results of the R*-BUS and OUT*-BUS combination after generation of their respective signals in OR circuit 12. The R*-BUS transports the global result signals F*, DEGOUT* and UNC/FIRE.OK* that are illustrative of the global response of the neural network 11(A) to the presentation of an input vector A. The OUT*-BUS transports the global output signal OUT* which essentially represents either the minimum distance Dmin (or Cmin) among all the distances (categories) calculated (held) by the neuron circuits of neural network 11(A) at the end of the Dmin (Cmin) determination process or the global category C*.

The Fig. 4(B) implementation is adapted to a multi-chip environment. As a result, beyond the driver, receiver and driver/receiver circuits of block 19, the off-chip common communication bus COM**-BUS is now required to interface the base ZISC chip 10 with the external world including the other base ZISC chips 10 that are to be connected thereon. The COM**-BUS results of the R**-BUS and OUT**-BUS combination. The R**-BUS transports the global result signal F**, DEGOUT** and UNC/FIRE.OK**. The OUT**-BUS transports the global output signal OUT**. The OUT**-BUS feeds the OR-BUS of each neuron circuit 11 (assuming no main Dmin determination circuit 20 is provided in the base ZISC chip 10). A GDATA-BUS including the 17-bit COM**-BUS may be implemented if other wires are required otherwise the COM**-BUS will suffice for base ZISC chip 10 interconnection.

Moreover, at whichever the level is, the connection between all the neuron circuits of either implementation requires a serial daisy chain connection, i.e. the two wires which transport the daisy chain input and output signals (DCI, DCO).

* VARIANTS OF THE BASE ZISC CHIP ARCHITECTURE *

With regard to the architecture of the base ZISC chip 10 illustrated in Fig. 4(B), there are several architecture variants that may be envisioned. First of all, the various OR functions performed in OR circuit 12 may be easily distributed, and thus incorporated in each neuron circuit 11 of base ZISC chip 10. In this case, as illustrated by reference to ZISC chip 10' in Fig. 9, the common communication bus has now a serial structure comprised of bus elements referenced COM**-1-BUS to COM**-N-BUS. The GDATA-BUS still remains optional. The solution is relatively simple, but the full parallel structure of the base ZISC chip 10 of Fig. 4(B) is no longer true, and this solution results in a significant degradation of the overall processing time during the learning and recognition phases. The COM**-1-BUS of the first ZISC chip 10' in case several chips are cascaded in a chain are connected to a logic level that is neutral for the OR function (equal to zero as mentioned above).

Another valuable variant derived from the Fig. 4(B) implementation can be designed as an alternative. OR circuit 12 may be physically suppressed. The OR function performed in OR circuit 12 which is necessary to the operation of the base ZISC chip 10 could be achieved directly by OR dotting of the NR and NOUT signals directly on the COM**-BUS via a driver circuit of the DR* type for each neuron circuit. Moreover, it could be also desirable to further distribute and incorporate all the functions performed by blocks 13 to 18 in each neuron circuit 11. In this case, illustrated in Fig. 10, the ZISC chip 10" would be just limited to a plurality of neuron circuits labelled 11"-1 to 11"-N forming neural unit 11"(#). Such a neuron circuit 11" could be introduced in an ASIC library and lead to a growable neural network macro, since it would have a granularity of 1 (instead of 36 in the particular implementations of the ZISC chips 10 of Fig. 4(B) and 10' of Fig. 9 described above). In the implementation of Fig. 10, the OR-BUS is incorporated in each bus that interconnects a determined neuron circuit 11" and the COM**-BUS via a driver/receiver circuit DR*/RR. In the solution of Fig. 10, the structure of the ZISC chip 10" is fully parallel but requires as many times thirty one (3 + 14 + 14) wires on the COM**-BUS that they are neuron circuits in the ZISC chip 10". On the other side of the ZISC chip 10", the two input buses SEL/CTL-BUS and INDATA-BUS have been merged in a common input bus labelled G-BUS to further illustrate the compactness and granularity of the design of ZISC chip 10". Still further variants, including intermediate architectures, may be designed. However, the architecture shown in Fig. 4(B) is preferred for its versatility.

* THE ZISC MODULE ARCHITECTURES *

To extend the neural capacity, an elementary ZISC module can be constructed by cascading several base ZISC chips 10 of Fig. 4(B) still connected to micro-controller/user 22 via the INDATA-BUS and SEL/CTL-BUS. Now turning to Fig. 11, there is shown a plurality of cascaded base ZISC chips referenced 10(1) to 10(Q) that have been "cascaded" to form elementary ZISC module 10[A] incorporating a corresponding elementary neural network referenced by numeral 11[A]. Fig. 11 clearly shows the fully paralleled connection of the ZISC chips 10 to the INDATA-BUS, the SEL/CTL-BUS and the COM**-BUS. It further shows the serial connection of the daisy chain signals between said ZISC chips 10. The DCI input terminal of the first ZISC chip 10(1) is connected to a first potential referenced VH so that a logic one is applied thereon. The DCO output terminal of chip 10(1) is connected to the input terminal DCI of next chip 10(2), and so on until chip 10(Q). Every time the DAISY registers of the neuron circuits of a determined ZISC chip 10(q) are filled with one's, the ultimate signal DCO(q) which is outputted therefrom may be interpreted as a FULL signal for this chip. When signal DCO(Q) = 1, this means there is no longer any free neuron circuit in elementary neural network 11[A]. Letter Q represents the maximum number of base ZISC chips 10 that can be cascaded according to the technology. Elementary neural network 11[A] is thus formed by the sum of base neural networks 11(1) to 11(Q), incorporated in respective ZISC chips 10(1) to 10(Q). As apparent from Fig. 11, all chips have a bidirectional bus connection with the INDATA-BUS and the SEL/CTL-BUS. Micro-controller/user 22 can write into register 184.1 of all the base ZISC chips 10(1) to 10(Q) via the bidirectional INDATA-BUS, but only the contents of one ZISC chip, for instance, 10(1), can be read by micro-controller/user 22 (although, the global response is available in the register 184.1 of each ZISC chip 10(1) to 10(Q)). To that end, a specific terminal labelled INH of all ZISC chips 10 except one, e.g. 10(1), are set to "1" by a connection to the said first supply voltage VH. As apparent from Fig. 11, the INH terminal of ZISC chip 10(1) is connected to a second potential, in this instance the ground GND. In fact, this INH terminal is connected to the control terminal of the DR/RR circuit which interfaces the ZISC chip 10 with the bidirectional INDATA-BUS. When the VH voltage is applied to the said DR/RR circuit, the latter is driven in a high impedance state, so that the INDATA-BUS cannot be driven. On the other side of the elementary neural network 11[A], one can find the GDATA-BUS which is thus common to all the ZISC chips 10(1) to 10(Q) because their respective R**-BUS and OUT**-BUS are connected in parallel on the COM**-BUS portion thereof for OR dotting thereon.

Because, the INDATA-BUS, SEL/CTL-BUS and GDATA-BUS interconnect all the chips, an elementary ZISC module 10[A] can be built up by assembling a number of ZISC chips 10. The base neural network 11[A] formed in base module 10(A) has a neural capacity equal to the sum of the neural capacity of chips 10(1) to 10(Q) and substantially works as if integrated in a single ZISC chip 10. Thanks to this cascadable construction, an elementary neural network 11[A] built with ZISC chips 10 can grow, at least theoretically, as needed by the application without additional circuitry. On the other hand, any elementary neural network 11[A] can still be configured by the micro-controller/user 22 either as a single network or as separate subsets thereof by the means of the comparison between the respective context portions of the main NO/CXT register 17 and local No/Cxt register 100 in each neuron circuit 11.

Unfortunately, due to practical technology limitations which result of this OR dotting on the COM**-BUS with the present implementation of the base ZISC chip 10, in reality, only a limited number of chips can be directly cascaded, e.g. a maximum of Q = 8 with the technology mentioned above. Should the number of chips required for a determined application be in excess of this number, an external circuit may be required, e.g. at the card level, to realize a third additional stage in the global OR function mentioned above. Now turning to Fig. 12, there is shown a way of building a complex module 10{A} by assembling two elementary modules 10[1] and 10[2] such as schematically illustrated in Fig. 11 by reference 10[A]. The rules mentioned above with regard to the connection of the DCI and INH terminals of the first chip 10(1) of elementary module 10[A] to adequate potentials still apply here for the first ZISC chip 10 of the chain of elementary modules. Still because of the inherent characteristics of the base ZISC chip 10, it just suffices to connect the respective COM**[1]-BUS and COM**[2]-BUS of each said elementary modules 10[1] and 10[2] to an OR circuit 23 (which consists of seventeen two-way OR gates) to generate, through a conventional driver DR, the signals to be fed into said complex module on the COM***-BUS which feeds all the neuron circuits included therein. The reasoning may be readily extended to the combination of any number of elementary modules of the 10[A] type. This is a consequence of the full cascadability and parallelism of the base ZISC chip 10. It just suffices to design an OR circuit 23 with the desired number of inputs or to combine a number of such OR circuits in an arborescent structure (depending on the capabilities of the technology), so that a complex neural network now including for instance, hundreds of thousands individual neuron circuits is obtained. All these neuron circuits are working as if they were integrated in a single base ZISC chip 10 and their number is transparent for the user.

In the course of the following description, the notations introduced above will be continued on the same basis. To distinguish between different ZISC chips in the assembly that forms the elementary ZISC module 10[A], as mentioned above, parenthesis have been adopted for chip related reference (e.g. chip (q) designates the qth chip in the chain). Square brackets designate a reference related to the elementary module. Likewise, the buses and circuitry associated to this elementary module 10[A] will be labelled the same way. For instance, to distinguish between different ZISC elementary modules that are assembled to form a complex module 10{A}, reference 10[r] designates the rth elementary module in the assembly. Finally, the buses and circuitry associated to this complex module will be labelled the same way. The complex neural network which is thus incorporated in any complex module 10{A} is referenced 11{A}.

In the above description, reference has been made to successive OR functions. These OR functions may be performed either by hardware (e.g. OR circuit 12) or by dotting (e.g. the hard-wired OR function on the COM**-BUS).

On the other hand, these OR functions may be achieved through AND functions according to the de Morgan laws, should it be so required by the technology. For instance, the global result fire signal F* has been defined as resulting from the ORing (in a dedicated OR sub-circuit) of all the local result fire signals of the neuron circuits 11-1 to 11-N, i.e. F* = F1 OR ... OR FN. Depending on the technology used, implementing the OR dotting may reveal to be present some inconveniences, because it requires PFETs that are known to be slow devices. The objective being to determine if at least one neuron circuit of the neural network has fired, i.e. if at least one signal Fi is equal to 1, it goes without saying that the same result could be achieved if at least one $\bar{Fi} = 0$. In this case the above relation is equivalent to $\dot{\bar{F}}^* = \bar{F1}$ AND ... AND $\bar{FN}$. The AND dotting which only requires NFETs that are admittedly fast switching devices is therefore much more popular.

## BRIEF DESCRIPTION OF THE BASE ZISC CHIP OPERATION

A brief description of the essential operating modes of the neural network 11(A) formed in the base ZISC chip 10 of Fig. 4(A) will now be given in conjunction with Figs. 13 to 15, which schematically illustrate the flow charts of the INITIALIZATION, RECOGNITION AND PRE-CHARGE and LEARNING modes respectively. To facilitate reader's understanding some references are made to the functional blocks described in Figs. 4 to 12.

\* INITIALIZATION MODE \*

As apparent from the flow chart referenced 24 in Fig. 13, the INITIALIZATION mode essentially consists of one step (box 25) referred to as the clearing step. During the clearing step, the contents of certain registers of the base ZISC chip 10 (including those of neuron circuits incorporated therein) are loaded with adequate default values. MaxIF register 14 and MinIF register 15 are loaded with respective MaxIF and MinIF values. A predefined (e.g. zero) value is loaded in main NO/CXT register 17. A zero value is loaded in the DAISY register of daisy chain circuit 600 and in the category register 450 of each neuron circuit 11.
Other registers and the R/W memory circuit 250 do not require to be loaded with predetermined values, their respective contents are thus undefined at power-on. However, a second step of updating (box 26) may be envisioned. In this optional step, the micro-controller/user 22 may optionally change some values, e.g. the set-up parameters (MaxIF, MinIF), the input context and norm data loaded in main NO/CXT register 17 and the content of register 184.1 which in particular holds operating mode related data in addition to the global response related data. These steps are achieved via the INDATA-BUS under the supervision of control signals transported on the SEL/CTL-BUS.

\* RECOGNITION AND PRE-CHARGE MODES \*

Let us now consider the neural network 11(A) in normal operating conditions after the initialization phase has been completed as described above. Let us assume that certain neuron circuits have been already engaged (i.e. they have learned), while other still remain free. The micro-controller/user 22 successively loads the components of an input vector A in the A register 13 of ZISC chip 10 via the INDATA-BUS. To that end, the A register 13 is selected via the IADD/CTL-BUS. The data loaded in the A register 13 are then transmitted to each of the neuron circuits of neural unit 11(#), i.e. those that have been engaged as well as those still free. This distinction between free and engaged neuron circuits results of the consideration of the logic levels of signals at the respective DCI and DCO terminals of daisy chain circuit 600 for each neuron circuit 11. Fig. 14 is comprised of Figs. 14(A) and 14(B). It represents the flow-chart referenced 27 which illustrates the essential steps that are performed in the ZISC chip 10 during the recognition phase. Now turning to Fig. 14(A), it is apparent that only a neuron circuit 11 that has been engaged (box 28) and selected by the NS signal (box 29), i.e. only a committed neuron circuit, will participate to the recognition phase in a significant manner. An neuron circuit is engaged as soon as it has learned, i.e. it is no longer free. A neuron circuit is selected when the local context portion (Cxt) of its norm/context register 100 matches the input context portion (CXT) held in the main NO/CXT register 17. However, if said input context portion is equal to zero, all the engaged neuron circuits of the ZISC chip 10 will participate to the recognition phase. In this case, "committed" is thus equivalent to "engaged". For an engaged neuron circuit, the components of a prototype vector have been previously stored in its R/W memory circuit 250 and "frozen" therein by control signal RS, i.e. a WRITE operation is no longer possible. For a free neuron circuit 11, as determined by the NO response to the test performed in box 28, a further test is conducted in box 30 to determine whether this neuron circuit is the first free one, i.e. the ready to learn neuron circuit, or not. If YES, the components of the input vector are stored in the R/W memory circuit 250 of that ready to learn neuron circuit during the presentation of the input vector. As a result, said ready to learn neuron circuit is considered to be "pre-charged" as illustrated by box 31. The description which follows will only address the case of a committed neuron circuit 11, i.e. the tests in boxes 28 and 29 have been positively completed. Note that if neuron circuit 11 is not selected according to box 29, it may be working the same way, but at the cost of increased power consumption. However, and by no means, its local response will influence the generation of the global result and output data.
After the last input vector component has been applied by micro-controller/user 22, the distance D between the input vector A and the prototype vector B calculated by the distance evaluator circuit 200 is made available in box 32. This distance D may vary depending upon the local norm No used. At this stage of the description, two cases must be considered depending on the sub-mode selected by the micro-controller/user 22 as illustrated in box 33.

In the RBF-like or normal sub-mode (NM), the distance compare circuit 300 compares the distance D with the AIF value stored in the AIF register 352, according to the rules provided above to generate the LT signal. The purpose of the test conducted in box 34 is to determine whether D is strictly lower than AIF or not. If it is not the case (i.e. D >= AIF), neuron circuit 11 does not fire and signal F is set inactive, i.e. F = 0, in box 35. For that determined neuron circuit the recognition processus is terminated. If YES, i.e. D < AIF, signal LT is set active (LT = 1), which means that the input vector A falls within the AIF value of the prototype vector stored in neuron circuit 11. Signal LT which is applied to the identification circuit 400 sets signal F active (F = 1) in box 36. Neuron circuit 11 has fired, it has thus recognized the input vector A. Next, the content of the DEG register in identification circuit 400 is tested in box 37. If the neuron circuit 11 is found degenerated (because a "one" is stored in the DEG register in identification circuit 400), the DEG signal is set active, in turn, the DEGOUT signal is set active (DEGOUT = F AND DEG = 1) in box 38. The output of box 38 and the NO output of test box 37 are merged in common node 39. Fig. 14(A) illustrates the flow chart at the neuron circuit (NC) level. Now we have to consider all the neuron circuits of the ZISC chip 10 that are committed and have fired (if any), i.e. which are at the stage defined by node 39, to consider global result and output data generated at the neural network 11(A) level. The transition between the neuron circuit and the neural network levels is labelled NC/NN and is shown in dotted line in Fig. 14(A).

Irrespective neuron circuit 11 is degenerated or not, it is now required to determine whether the committed neuron circuits of base neural network 11(A) that have fired, belong to a same category or to at least two different categories. To that end, all the local categories of these neuron circuits are ORed in a dedicated sub-circuit of OR circuit 12 as mentioned above. Now turning to Fig. 14(B), this step is performed in box 40 to produce the global category C* on the OUT*-BUS and then on the OR-BUS. Global result signals F* and DEGOUT* are also directly made available on the R*-BUS after being processed in their respective dedicated OR sub-circuits. If at least one neuron circuit has fired in box 36, then global result signal F* is set active (F* = 1). To determine signal UNC/FIRE.OK*, a further operation is required. In each neuron circuit 11, the global category C* is compared with the local category C in identification circuit 400 (note that this comparison is performed at the neuron circuit level). This comparison test is illustrated by box 41. If the local category C is equal to the global category C*, this means that the input vector has been identified by neural network 11(A). As a matter of fact, the neuron result signal UNC/FIRE.OK generated by each neuron circuit is set active (UNC/FIRE.OK = 0), so that global result signal UNC/FIRE.OK* is equal to zero. Consequently, signal ID* = F* AND $\overline{\text{UNC/FIRE.OK}^*}$ is set active, i.e. ID* = 1 (box 42). The input vector has been identified with a category equal to C*. The category C* is then made available on the COM*-BUS and can be stored in register 184.1. The category may be read by the micro-controller/user 22 if so desired (box 43). On the contrary, if C* is different of C for at least one neuron circuit, signal UNC/FIRE.OK of that determined neuron circuit is set to "one" and therefore global result signal UNC/FIRE.OK* = 1. As a consequence, signal ID* = 0 (box 44) which means the input vector has not been identified. The outputs of boxes 43 and 44 are merged in a common node labelled 45. However, in this NM sub-mode, if so required by the micro-controller/user 22, either the distances or the categories may be made available on the COM*-BUS, preferably in an increasing order. In this case, the determination of Dmin or Cmin is thus required. To that end, the search/sort circuits of neuron circuits are working all together to generate the minimum distance Dmin i.e. the smallest among the calculated distances by the committed neuron circuits that have fired (box 46). In addition,, the micro-controller/user 22 may require the committed neuron circuits that have fired not only to determine the minimum distance Dmin but also to output the remaining distances in an increasing order on the OUT*-BUS. These steps are illustrated by box 46. The same reasoning applies to the category type of data if so desired. Note that, upon request and under the supervision of the state machine 183, if more than one neuron circuit has fired, the distances and the related categories can be outputted either in a continuous sequence or in an interleave fashion. If only one neuron circuit has fired, only its distance or its category data are outputted on the OUT*-BUS. The distance or the category data are sent either directly to the micro-controller/user 22 or latched in register 184.1 via the COM*-BUS for a subsequent READ operation by the micro-controller/user 22.

In the nearest neighbor sub-mode (NNM), there is no comparison between calculated distance D and the AIF value. In this case, the micro-controller/user 22 only requires all the search/sort circuits of all neuron circuits without any restriction (having fired or not) to determine the minimum distance Dmin (or Cmin) and then to output the remaining distances (or categories) just as mentioned above. As apparent from Fig. 14, the NNM sub-mode only comprises the steps performed in box 46.

Finally, irrespective the selected sub-mode, the RECOGNITION mode ends in box labelled END in Fig. 14 (B). However, because at the end of the recognition phase illustrated by reference to Fig. 14, a neuron circuit 11 may be then submitted to a learning phase, a box 47 has been added as an alternative to the termination box mentioned above.

* LEARNING MODE *

At the end of the recognition phase, the user may carry out the LEARNING mode. Learning occurs in different cases. For example, if the user is not satisfied by the global response, e.g. the category outputted by the neural network 11(A) is not deemed correct or when a "blank" or "virgin" neural network 11(A) is used for the first time. In the latter case, none neuron circuit having learned, none can fire so that signal F is equal to 0 for each neuron circuit as it has been made apparent from box 35 in Fig. 14(A). As a result, signal F* = 0, signal UNC/FIRE.OK* = 0 so that ID* = 0, which means the input vector A has not been identified at the neural network 11(A) level. According to a significant feature of the present invention, during the previous recognition phase, the components of the input vector A have been stored in the first free ready to learn neuron circuit which is thus pre-charged as explained above by reference to box 31 in Fig. 14(A).

Let us still assume that certain neuron circuits have been already engaged (i.e. they have learned), while other still remain free. The LEARNING mode basically consists in the reduction and/or the engagement processes, which are directed to neuron circuits having a different status. The reduction process concerns all the committed neuron circuits while the engagement process concerns only the ready to learn neuron circuit. Let us assume for sake of simplicity that the learning phase is conducted after the recognition phase as described by reference to Fig. 14. The flow-chart labelled 47 in Fig. 15 for consistency with box 47 of Fig. 14, aims to illustrate the essential steps of these reduction and engagement processes. The learning phase is performed under the supervision of the state machine 183 of the status and control logic circuit 18. The state machine 183 provides states in sequence to control all the neuron circuits of the neural network 11(A) in parallel. For any committed neuron circuit that has fired during the recognition phase (see flow-chart 27 of Fig. 14) and has a local category C different from the input category CAT, there is proceeded to an automatic reduction of its influence field value. To that end, the ZISC chip 10 is provided with an adjustment mechanism which automatically and simultaneously reduces the contents of the AIF register 352 of that determined neuron circuit that has wrongly fired to remove the input vector from the firing range thereof. On the other hand, it may be worthwhile if the input vector has not been correctly recognized at the neural network 11(A) level to engage a new neuron circuit to be selected among the free neuron circuits. These two cases will be separately discussed in more details by reference to Fig. 15.

Now turning to the left part of Fig. 15 which illustrates the case of a committed neuron circuit that has fired, the learning process is initiated in the box labelled START. Such a neuron circuit 11 is first tested in box 48 to determine whether the input category CAT and local category C of neuron circuit 11 are equal or not. If CAT and C are different, this means neuron circuit 11 has wrongly fired. This also includes the case where CAT = 0, because the local category of a committed neuron circuit is forcedly different of zero. In this case, the UNC/FIRE.OK signal outputted by identification circuit 400 of that determined neuron circuit is equal to zero. The meaning of the UNC/FIRE.OK signal in the LEARNING mode is to indicate that a reduction process is necessary. The reduction process of said neuron circuit 11 is required to decrease its AIF value. In addition, the calculated distance D stored in a dedicated register of evaluator circuit 200 is loaded in the AIF register 352 (box 49). Now distance D is compared with MinIF in compare circuit 300 to generate the LTE signal. According to box 50, if D is lower or equal to MinIF, neuron circuit 11 is declared degenerated, i.e. signal DEG generated in the identification circuit 400 is set active (DEG = 1). Practically, a "one" is loaded in the DEG register (labelled DEG REG.) as illustrated by box 51. The DEG signal functions as a control signal to have the MinIF value loaded in said AIF register 352, according to box 52, overwriting thereby the previous D value. The NO output of box 50 and the output of box 52 are merged in common node 53. Now turning again to box 48, if CAT = C, this means that the neuron circuit in consideration has rightly fired and therefore its AIF does not need any reduction. The UNC/FIRE.OK signal of that determined neuron circuit 11 is set active (UNC/FIRE.OK = 1) as illustrated in box 54. The output of box 54 is connected to said common node 53. Finally, in box 55, the minimum distance Dmin and the value of global result UNC/FIRE.OK* are determined. Both values are required in the engagement process of the ready to learn neuron circuit (if any). They are made available on their respective buses as described above by reference to Fig. 14, e.g. for being latched in register 184.1.

Now, let us consider the right part of Fig. 15 which illustrates the engagement process for the ready to learn neuron circuit 11. In this case, the process initiated in the box labelled START directly corresponds to the box labelled END in Fig. 14(A), i.e. we are still at the neuron circuit level. First, the value of the input category CAT is tested in box 56, i.e. whether CAT is equal to zero or not. If CAT = 0, the engagement process stops, (it is only required to proceed to the reduction process of the committed neuron circuits as mentioned above. On the contrary, if CAT is different from zero, the minimum distance Dmin (whose value has been established in box 55) is loaded in the AIF register 352 of this ready to learn neuron circuit according to box 57. Note however that, if Dmin is greater than MaxIF, MaxIf is loaded instead. Next, a comparison is performed in box 58 to determine whether Dmin is inferior or equal to MinIF. If YES, a "one" is loaded in the DEG register of identification circuit 400 and the MinIF value is loaded in the AIF register 352 (box 59). The output of box 59 and the NO output of box 58 are merged in common node 60. Now, the value of global result signal UNC/FIRE.OK* also determined in box 55 at the neural network level is tested. Through this test, it is checked (box 61) whether the input vector has been recognized by at least one neuron circuit with the right category or not. If signal UNC/FIRE/OK* = 1, this means the input vector has been correctly recognized by at least one neuron circuit with the right category. In this case, it may be not necessary to engage a new neuron circuit and the learning phase then normally stops at this stage of the engagement process. On the contrary, if signal UNC/FIRE.OK* is not equal to 1 (UNC/FIRE.OK* = 0), the engagement process continues. The input category data CAT are loaded in the category register 450 via the CAT-BUS and the input norm/context data are loaded in the main NO/CXT register 17 via the NO/CXT-BUS of the said ready to learn neuron circuit (box 62). Finally, signal ST is activated to shift the "one" value which is present at the DCI input terminal of the daisy chain circuit 600 of the ready to learn neuron circuit into the DAISY register thereof, as illustrated by box 63. The engagement process is now terminated, the ready to learn neuron circuit has just learned. The daisy chain input and output signals of this newly engaged neuron circuit are equal to one. The learning phase ends when the AIF value of all the committed neuron circuits that have wrongly fired have been readjusted and/or the newly engaged neuron circuit has its AIF value established, its local category and norm/context registers properly loaded. Alternatively, the test completed in box 61 may be performed between boxes 56 and 57.

At the very beginning after initialization, when none neuron circuit of neural network 11(A) has learned, all neuron circuits are free. During the recognition of the first input vector ever applied to neural network 11(A), the components thereof are successively applied to the R/W memory circuit 250 of each of the neuron circuits of ZISC chip 10 via the INDATA-BUS. Of course, the calculation that is performed in the distance evaluator circuit 200 and the comparison that is performed in the distance compare circuit 300 of any neuron circuit are not significant. Because the first input vector has been recognized by none of the neuron circuits of neural network 11(A), each identification circuit 400 generates a local result fire signal F which, which is ORed with other F signals in OR circuit 12 to produve a global result fire signal which is equal to zero (F* = 0). The ready to learn neuron circuit, i.e. 11-1, therefore needs to learn this input vector, as it has been explained above. But, as a result of the recognition phase, the components of this first input vector have been previously stored therein and this first (free) neuron circuit is now pre-charged. It just suffices to engage this first neuron circuit, as described above by reference to Fig. 15, to have the first input vector stored as the first prototype vector. In this case, note that the MaxIF value is loaded in the AIF register 352.

Therefore, an efficient way of precharging the components of the input vector A in the R/W memory circuit 250 during the recognition phase has been implemented in the ZISC chip 10. Moreover, the ready to learn neuron circuit is easily recognized, because it is the only neuron circuit of the neural network 11(A) whose DCI and DCO signals are complementary of each other. Unlike the neural networks of the prior art which require the operation of storing the input vector components to be performed during a preliminary step of the learning phase (during which the input vector is presented again to the neural network), in the ZISC chip 10, the said components have been previously loaded in the R/W memory circuit 250 during the recognition phase of a input vector. As a result, the ready to learn neuron circuit is automatically and immediately pre-charged, i.e. prepared for being subsequently engaged if so required by the neural network itself. However, a pre-charged neuron circuit will not be considered as engaged until the input category CAT is loaded in category register 450 of neuron circuit 11 and signal ST set active to load a "one" in the DAISY register of daisy chain circuit 600. In all cases where the learning is not required, the stored components will be overwritten when the components of the next input vector are presented on the INDATA-BUS in a subsequent recognition phase. As soon as this neuron circuit has been engaged, the control signal RS prevents any subsequent WRITE operation in the R/W memory circuit 250 thereof.

In summary, in the base ZISC chip 10, once the input vector to be learned has been stored in the R/W memory circuit 250 of the ready to learn neuron circuit (as described above with regard to the PRE-CHARGE mode that is accomplished during the recognition phase), the learning mode includes the engagement of the said ready to learn neuron circuit. The engagement process terminates when the desired input category is loaded into the category register 450 and a "one" is loaded in the DAISY register of the daisy chain 600. The learning phase also includes the reduction process whenever required to determine the new value that must be loaded in the AIF register 352 of those committed neuron circuits that have wrongly fired. All the related steps of the learning phase are conducted by the base neural network 11(A) itself. Adjustments occur simultaneously and automatically in all neuron circuits of the neural network and do not require any external supervision, for instance by the micro-controller/user 22. Therefore, the learning processus is fully internal and automatic. The state machine 183 sequences the reduction and the engagement processes of all the neuron circuits that are concerned in parallel. In addition, contrarily to conventional neural networks, and in accordance to a key feature of the present invention, the phases of recognition and learning are not totally distinct because of the pre-charge feature.

* SAVE AND RESTORE MODES *

Finally, the base ZISC chip 10 offers two other operating modes that are worthwhile: the SAVE and RESTORE modes. Because the present implementation of the ZISC chip 10 do not include EPROMs, when power is shut-off, all the information held in the different registers of the ZISC chip 10 are lost. As a consequence, the SAVE and RESTORE modes are highly desired. During the save phase, all the valuable data that are stored in the various registers of the base ZISC chip 10 (including those of neuron circuits) may be accessed (READ operation) by the micro-controller/user 22, then saved. For instance, this concerns the components (weights) of the prototype vector B stored in R/W memory circuit 250, the AIF value stored in the AIF register 352, the local category stored in category register 450, the local norm/context data stored in register 100, the set up parameters, ... etc. A hard-disk is a convenient storage means in that respect to appropriately store these data. The RESTORE mode basically consists of the reverse steps. For different reasons, the micro-controller/user 22 may wish to load either said data in their respective registers for restoration thereof (WRITE operation). During the restore phase, it is important that any neuron circuit be loaded either with its own data or with any desired data as the case may be. Obviously, it must exist a perfect correspondence between the data and the neuron circuit registers. With the present implementation of the ZISC chip 10, the SAVE and RESTORE modes advantageously take benefit of the presence of multiplexer 501 in the Dmin determination circuit 500 (Fig. 8) and of the inherent characteristics of the daisy chain circuit 600.

Let us first consider the SAVE mode. Now turning again to Fig. 8, multiplexer 501 is adequately activated during the save phase to select the desired input bus (and thus the data) among its three input buses. Depending on the selection signals that are applied to multiplexer 501 via the IADD/CTL-BUS, either the local category data C, the local norm/context No/Cxt data or the data appearing on the J-BUS are applied as a first input signal to search/sort circuit 502. Depending on the selection signals that are applied to multiplexer 351 via the IADD/CTL-BUS (see Fig. 7), in turn, the J signal may represent the contents of the AIF register 352 or the data appearing on the DIST-BUS of the neuron circuit 11 in consideration or the MaxIF/MinIF value transported on the MaxIF/MinIF-BUS. The daisy chain circuit 600 is used to select the appropriate neuron circuit. The same principles described above with first free neuron circuit are also applicable here. To have the prototype vector B components successively appearing on the DIST-BUS, it just suffices to present an input vector A whose all components are equal to zero (see Fig. 5). Finally, all these data pertaining to any determined neuron circuit are sequentially outputted from the Dmin determination circuit 500 of that determined neuron circuit on the OUT*-BUS via its NOUT-BUS and OR circuit 12 (all the other NOUT signals are set at a neutral logic level).

In summary, for the SAVE mode, i.e. the data to be saved are read by the micro-controller/user 22 by sequentially selecting the adequate data via control signals to be finally outputted on the COM*-BUS, then they can be stored in register 184-1 (see Fig. 6) via the M-BUS or directly made available on the INDATA-BUS via a multiplexer (not shown) as the case may be. The data are outputted on the INDATA-BUS at micro-controller/user 22 request according to an interface circuit located in logic circuit 182 under the supervision of the state machine 183. The daisy chain circuit 600 ensures that only one neuron circuit is selected at a time.

For the RESTORE mode, the data are loaded by the micro-controller/user 22 via the INDATA-BUS. Each register is successively selected via the IADD/CTL-BUS to have the data properly stored therein. Same reasoning applies to the R/W memory circuit 250 of each neuron circuit.

The SAVE or the RESTORE mode requires a few steps. First, the micro-controller/user 22 sets the adequate (SAVE or RESTORE) mode. In either mode, there is a preliminary step wherein all the DAISY registers of the ZISC chip 10 are reset. The micro-controller/user 22 selects the correct data corresponding to the correct register or the R/W memory circuit 250 by sending the adequate address on the SEL/CTL-BUS. Neuron circuits are processed in sequence under the supervision of the daisy chain circuits 600 according to the same mechanism as described above in the engagement process by reference to Fig. 15. This step is repeated for each register as many times as necessary. The neuron circuits are read or written in sequence until the first neuron circuit whose local category value is equal to zero. The contents of the local category register 450 is thus a convenient means to detect the end of either mode. At the end of the save or restore phase, all registers of the neuron circuits, including the DAISY registers of daisy chain circuits 600, are in the initial state, i.e. in the same state that they were before the save or restore phase was initiated. Finally, when all the registers concerned have been read or written, the last step consists to return in either the RECOGNITION or LEARNING mode. The present approach needs a very few circuitry, because the same processing steps are used in either mode to access a specific register of the neuron circuits. In addition, there is no limitation in the number of neuron circuits submitted to either the SAVE or RESTORE mode.

Similar reasoning applies to the base neural network 11(A) of Fig. 4(B) and can be further extended to any neural network incorporated in either the elementary module of Fig. 11 or the complex module of Fig. 12. This is a direct consequence of the fully parallel architecture of the base ZISC chip 10. The first global OR function is performed by ORing the local result and output signals in respective dedicated sub-circuits of OR circuit 12 to produce the global result R* and output OUT* signals for each of the ZISC chips 10(1) to 10(Q). In turn, these global signals that are labelled R*(1) to R*(Q) and OUT*(1) to OUT*(Q) respectively in Fig. 11, are ORed again on the COM**-BUS to produce respective global signals R** and OUT**. The COM**-BUS is common to the totality of the said chips forming the elementary module 10[A] which incorporates the complex neural network 11[A] as apparent from Fig. 11. In the case where several base ZISC chips 10 are assembled together, the main Dmin determination circuit 20 optionally provided in each ZISC chip 10 according to the implementation of Fig. 4(B), may be advantageously used to determine the minimum distance Dmin between the committed neuron circuits belonging to the all the chips forming the elementary module 10[A] or a complex module 10{A}. As a result of neuron circuit and the chip cascadability which results therefrom, operation of any neural network of either the type 11[A] illustrated in Fig. 11 or of the type 11 {A} illustrated in Fig. 12, is identical in all respects to the operation of neural network 11(A) of Fig. 4(A) described above by reference to Figs. 13 to 15. The distinction between a base neural network, an elementary neural network and a complex neural network is irrelevant for the micro-controller/user 22. In other words, the number of ZISC chips 10 (each incorporating a base neural network) that are assembled to form an elementary module, which in turn, are assembled to form a complex module finally results in a complex neural network of the desired size whose the total number of neuron circuits is fully transparent for the micro-controller/user 22. Moreover, the operation of such a neural network is independent of its size. The different types of neural networks mentioned above will be therefore referred to hereinbelow by the generic term. of neural networks wherever the distinction therebetween is not necessary.

## DETAILED DESCRIPTION OF THE BASE ZISC CHIP

* THE CONTEXT REGISTER AND MATCHING CIRCUIT (100/150) *

Fig. 16 illustrates the detailed construction of matching circuit 150, whose role is to select or not the neuron circuit 11. Matching circuit 150 first comprises NOR circuit 151 which checks whether the input context CXT value is null or not. If input context CXT value stored in main NO/CXT register 17 is equal to zero, a logic one is generated and applied to the first input of a 2-way OR gate 152. According to Fig. 16, there is a NOR circuit 151 in each neuron circuit, however, a single NOR circuit common to the whole base ZISC chip 10 could be envisioned as well (as the single main NO/CXT register 17 which is common to all neuron circuits of ZISC chip 10). NOR circuit 151 consists of one 7-way NOR gate. Matching circuit 150 further comprises a XOR circuit 153 which compares the input context CXT and the local context Cxt data. XOR circuit 153 basically consists of seven 2-way XOR gates. The signal which is outputted from XOR circuit 153 is applied to NOR circuit 154. The latter basically consists of one 7-way NOR gate. The signal generated by NOR circuit 154 is applied to the second input of OR gate 152. The signal generated at the output of OR gate 152 is the NS (Neuron Selection) signal mentioned above. When signal NS is active (NS = 1), neuron circuit 11 is selected. In summary, a neuron circuit 11 is selected only if the input context is null or if it does match with the local context.

Fig. 17 illustrates the concept at the base of the context approach adopted in the disclosed implementation of the ZISC chip 10. All the neuron circuits 11-1 to 11-N operate in parallel on the same input context data CXT stored in the context portion of main NO/CXT register 17. The local context portion in No/Cxt register 100 is loaded from main NO/CXT register 17 via the CXT-BUS during the engagement process of a determined neuron circuit, e.g. neuron circuit 11. The context mechanism allows the dynamic selection of a determined number of neuron circuits forming base neural network 11(A) for a specific task. For instance, a typical example of application of the context consists in the selective recognition of a series of input vectors by a neural network by two groups of neuron circuits. The first group that has been engaged with the L1 norm receives a first context (context1) and the second group that has been engaged with the Lsup norm receives a second context (context2). Should it be required to proceed to the recognition of an input vector only by those of neuron circuits that have been engaged with the L1 norm, it is easy, thanks to the context differentiation, to select those of the first group and to exclude those of the second group. Another typical example can be found when some neuron circuits have learned with input vector of a first length (e.g. n = 64) and other with input vectors of a second length (e.g. n = 32). When input vectors of the second group are presented to the base neural network 11(A), the neuron circuits of the first group must be inhibited, because their response would not be significant.

However, the above described concept may be generalized. Let us assume each neuron circuit 11 corresponds to a base processing unit. Now let consider a multi-processors unit built-up with a plurality of such base processing units, handling an input data pattern in parallel as base neural network 11(A) does. In some cases, it may be required to dispatch the input data pattern only to one or a few base processing units. The present context approach avoids the necessity to design the pattern dispatcher that would have been normally required in front of the multi-processors unit. Such conventional dispatchers are known to be of great circuit complexity. According to the present context approach, this dispatcher would be reduced to a single main context register (which would correspond to the main NO/CXT register 17 of Fig. 17). In turn, each base processing unit would then be locally provided with a dedicated local context register (which would correspond to the local No/Cxt register 100) and a bus that would interconnect the main context register to the local context register of all the base processing units forming the multi-processors unit. Consequently, with such implementation, before an input data pattern is presented to the multi-processors unit to be processed in one (or more) determined base processing unit, the input data pattern is preceded by an input context data which is directly loaded into the main context register. If the contents of the local context register matches with the input context value stored in the main context register, then the said input data pattern (and the following as well, provided there is no change in the context value) is processed by the said determined processing unit. An additional specific circuit may select all the base processing units as soon as the input context is equal to zero. The penalty introduced by the above context feature in terms of delay in the data processing is reduced to a strict minimum. Obviously, there is no penalty if the context feature is not used (in this case the main context register contents must be equal to zero). There is a penalty to insert a context value within the input data pattern as soon as the input context needs to be updated. The maximum penalty is in the case where a new context value is inserted after each input data pattern. In summary, the introduction of the context feature in a multi-processors unit gives the flexibility to dynamically configure it either as a single unit or as separate sub-units thereof that can work independently without impacting the operation of others. The context approach as described above i.e. based on a totally hardware solution, is therefore a significant feature of the present invention.

* THE R/W MEMORY CIRCUIT (250) *

Now turning to Fig. 18 which is comprised of Figs. 18(A), (B) and (C). Fig. 18(A) shows the detailed construction of R/W memory circuit 250 comprising a 64x8 bit RAM memory 251 (usually referred to as the weight memory), address counter 252 and optionally a register labelled 253. Signal A represents the input vector components that are outputted from A register 13 on the DATA-BUS. Signal B represents the prototype vector components that are outputted from register 253 (if any) on the RAM-BUS. R/W memory circuit 250 may include the register 253 to latch the data that are outputted from the RAM memory 251. As a result, the RAM memory 251 is isolated in the course of the automatic tests that are performed during the manufacturing of the ZISC chip 10. In this case, should the register 253 be used, then an additional register (not shown) placed in the input vector data path would be recommended to balance the two paths to the evaluator circuit 200 for pipeline operation purposes in the synchronous (BURST) mode. Register 253 is a free running registers, i.e. the data are loaded therein at each cycle, unlike the A register 13 whose loading is gated by a control signal. The role of address counter is to count the components of the input vector and to properly address the RAM memory 251. Counter 252 is controlled by two control signals: NEXTC (NEXTC stands for NEXT Component) to load the components in sequence) and FCOMP (FCOMP stands for First COMPonent) to reset the counter before loading the first component. Counter 252 is thus reset by the FCOMP signal at the beginning of a new recognition phase and incremented by signal NEXTC at each component presentation. Address counter 252 has been shown in R/W memory circuit 250 but could be placed anywhere in the neuron circuit architecture of Fig. 5. In reality, according to the present implementation of the ZISC chip 10, it is located in the status and control logic circuit 18. In this case, counter 252 generates the RAM address signals that are then common to all the neuron circuits of ZISC chip 10. RAM memory 251 is a one port RAM. The register 253 could be provided with a complemented output if so required by the processing of the B signal in distance evaluator circuit 200. The circuit which generates the RS signal will be described hereafter by reference to the daisy chain circuit 600. At this stage of the description, it just suffices to say that the RS signal which is applied to RAM memory 251 of neuron circuit 11 is inactive for all engaged neuron circuits and is only active for the first free neuron, i.e. the ready to learn neuron circuit, to allow the pre-charge of the input vector components in RAM memory 251. The RS signal broadly corresponds to the conventional R/W signal that is of current usage in any standard RAM memory. When signal RS is active (RS = 1), the RAM memory 251 is written, i.e. the components are loaded in sequence under address counter control. On the contrary, when signal RS is inactive (RS = 0), the contents of the RAM memory 251 can only be read. Now turning to Fig. 18(B), there is shown the data flow for an engaged neuron circuit during the recognition phase. The components of the input vector A are only loaded in register 13 but not in RAM memory 251, because signal RS is inactive. None component of the input vector is therefore written in RAM memory 251 (the path to the RAM memory 251 is shown "blanked") of an engaged neuron circuit, because such writing would be detrimental to the integrity of the prototype vector components stored therein. Signals A and B are available for comparison in distance evaluator circuit 200. Fig. 18(C) shows the data flow for the first free ready to learn neuron circuit still during the recognition phase. In this case, the components of the input vector are stored in RAM memory 251 as the weights of the new prototype vector when control signal RS is set active. As illustrated in Fig. 18(C) by the blanked paths, the A and B signals are not exploited by the distance evaluator circuit 200 in case of the ready to learn neuron circuit. The implementation of the pre-charge step thus requires the R/W memory circuit 250 and a circuit that is capable to generate the RS signal and designate the determined free neuron circuit whose weight memory must be loaded with the input vector components. With the present implementation of the base ZISC chip 10, the role of this circuit is fulfilled by the daisy chain circuit 600. In that regard, the R/W memory circuit 250 and the daisy chain circuit 600 thus form the "pre-charge circuit". This step of precharging the input vector components in the RAM memory 251 of the ready to learn neuron circuit during the recognition phase is an important feature of the present invention. Compared to the known solutions of the prior art, this pre-charge step has a major advantage because it avoids to present again the input vector during the learning phase, it saves a lot of time, should the ready to learn neuron circuit is confirmed for being engaged.

* THE DISTANCE EVALUATOR CIRCUIT (200) *

Now turning to Fig. 19, there is illustrated the internal structure of the multi-norm distance evaluator block 200 that is basically comprised of two sub-circuits referenced 201 and 202 and optionally of a register 203. The 8-bit DATA-BUS (which transports the components of input vector A) and the 8-bit RAM-BUS (which transports the components of prototype vector B) are applied to sub-blocks 201 while the local norm signal No is applied to both sub-blocks 201 and 202. Block 200 generates the distance signal D on the 14-bit DIST-BUS. Note that, if micro-controller/user 22 presents an input vector A whose all components are equal to zero, the distance evaluator 200 is able to output (with norm L1) all the components of the prototype vector B on the DIST-BUS. This property will be used in the so-called SAVE mode. The RAM memory 251 and sub-blocks 201 and 202 of distance evaluator circuit 200 form all together a three-stage pipelined structure.

As mentioned above, according to a significant feature of the present invention, block 200 works as a processing unit and is adapted to compute the distance with either the L1 (MANHATTAN) or the Lsup (SQUARE) norm with a circuitry that has been optimized for using only a minimal number of devices. The local norm signal No which is transported on the 1-bit No-BUS is used to select the desired norm to be used in the distance computation. If the norm signal No is equal to 1, the distance between input vector A and prototype vector B is calculated according to the L1 norm and conversely, if the norm signal No is equal to 0, said distance is calculated with the Lsup norm. Therefore, still using the notation used above, i.e. A = A1, ..., Ai, ..., An and B = B1, ... Bi, ..., Bn (each Ai or Bi component being coded on m bits), the calculated distance D will be either: sum(abs(Ai-Bi)) for the L1 norm or max(abs(Ai-Bi)) for the Lsup norm with (i = 1, ..., n). Remark, abbreviation abs means "absolute value". The example below illustrates this statement. Let us assume four component vectors A and B represented by A = 7 1 8 2 and B = 6 3 4 5. In this case, the distance is equal to 10 with the L1 norm and to 4 with the Lsup norm.

Let us assume for sake of generalization that the distance signal D generated by block 200 on the DIST-BUS is comprised of bits d0, ... , dp-1. The number p of bits for the distance signal D depends on the selected norm. For the Lsup norm, p = m (same number of bits), while for the L1 norm, the bit number depends on the number of components n. For example, for n = 4, the maximum number given by the L1 norm is (2**8)*4 = 1024 and therefore the result needs to be coded on 10 bits because 2**10 = 1024. In the described implementation of the ZISC chip 10, there are n = 64 components coded on m = 8 bits, the real number is (2**8)*64 = 2**14, which explains why the DIST-BUS has a 14-bit width in Fig. 19.

Sub-block 201 computes the absolute value of the difference between two corresponding components Ai and Bi of the input and prototype vectors respectively, i.e. (abs(Ai-Bi)). To compute the difference (Ai-Bi) results in the computation of the sum: (Ai + ($\overline{Bi}$)) in an adder, and thus the complement of Bi, i.e. $\overline{Bi}$ , is required. Depending on the polarity of signal B outputted by the R/W memory circuit 250, a battery of m = 8 inverters 204 may be required in one input path of adder 205. Adder 205 has been specifically designed to meet the needs of the present invention in terms of density and speed. Adder 205 computes the internal carry generated by bits 0 to m-1.

The signal which is outputted by adder 205 is applied to the input of a two-way exclusive OR (or XOR) circuit referenced 206. The carry signal which is generated by adder 205 is labelled Cgen. This signal is applied to adder 205 as the input carry signal Cin and to another two-way XOR circuit 207, whose other input is the local norm signal No. Depending on the value of local norm signal No, circuit 207 controls the polarity of the output signal X generated by XOR circuit 206. The innovative design of this specific adder 205 thus allows to re-inject the "carry-generate" signal at the input carry terminal as the Cin signal. The base function of adder 205 will be better understood with the following general explanation.

If Ai>Bi, the adder 205 produces an internal carry signal, i.e. Cgeni = 1, which is added to the result in order to produce the correct value of (abs(Ai-Bi)). In this case, if No = 1, the result Xi is equal to abs(Ai-Bi) and if No = 0, the result Xi will be the complement of this value i.e. $\overline{abs(\overline{Ai}-\overline{Bi})}$. This value Xi may be latched in register 203.

If Ai < Bi or Ai = Bi the adder 205 doesn't produce any internal carry signal i.e. Cgeni = 0. If No = 1, the XOR circuit 206 complements the result in order to produce the correct value. If No = 0, this complementation will not be performed.

The numeric examples given just below, based on 4-bit components for the two cases: Ai < Bi and Ai > Bi (the case Ai = Bi being handled the same way as the case Ai < Bi), illustrate the point.

First case: Ai > Bi (e.g. Ai = 2 and Bi = 1)

```
                    Ai=0010 ===>  Ai=0010
                    Bi=0001 ===>  B̄ī=1110



                            -----
        adder   ===>   0000  and Cgeni=1 ===> Cini=1
        Cini    ===>      1
                            -----
    If No=1:       Xi=0001 (No XOR Cgeni)=0 i.e. Xi= abs(Ai-Bi)
    If No=0:       Xi=1110 (No XOR Cgeni)=1 i.e. Xi= ‾a‾b‾s‾(‾A‾ī‾-‾B‾ī‾)
```

As apparent from the above computation, adder 205 generates the term (Ai-Bi) = 0000 and a carry Cgeni = 1, so that Cini = 1. In turn, this value Cini is applied as the input carry to adder 205 and thus added to the result 0000 + 1 = 0001. On the other hand, the Cgen carry is applied to XOR circuit 207 which performs the exclusive OR function between the local norm signal No and Cgeni. Then, the result is applied to XOR circuit 206 with the partial sum Si generated by adder 205. Finally, the signal labelled Xi which is obtained at the output of XOR circuit 206 is such as Xi = ((No XOR Cgeni) XOR Si). Finally, Xi thus corresponds to either abs(Ai-Bi) or $\overline{abs(\overline{Ai}-\overline{Bi})}$.

Second case: Ai<Bi (e.g. Ai = 1 and Bi = 2)

```
    Ai=0001 ===>  Ai=0001
    Bi=0010 ===>  B̄ī=1101
                        -----
      adder  ===>    1110    Cgeni=0 ===> Cini=0
      Cini   ===>      0
                        -----
    If No=0:       Xi=1110 (No XOR Cgeni)=0 i.e. Xi= ‾a‾b‾s‾(‾A‾ī‾-‾B‾ī‾)
    If No=1:       Xi=0001 (No XOR Cgeni)=1 i.e. Xi= abs(Ai-Bi)
```

To summarize the function of sub-block 201, it can be said that the signal Xi which is outputted therefrom, corresponds to either abs(Ai-Bi) if No = 1 (i.e. norm L1) and to its complementary value $\overline{abs(\overline{Ai}-\overline{Bi})}$ if No = 0 (i.e. norm Lsup) for each component i of the input and prototype vectors.

The role of second sub-block referenced 202 is to use signal Xi generated from sub-block 201 to compute the distance D. A free-running register 203 is preferably added between sub-circuits 201 and 202 should a pipelined process be used.

The X signal is applied to one input of adder 208 whose other input receives the D signal. Adder 208 may have the same structure as adder 205 or be of any conventional type. Its role is two-fold: for No = 1 (L1 norm), it sums the current value of X with the distance D, for No = 0 (Lsup norm), it compares the current value of X with the said distance. The carry out signal Cout generated by adder 208 is applied to an incrementer 209 driven by the local norm signal No. Incrementer circuit 209 operates normally if No = 1 (norm L1) and is totally inhibited (it generates zero's) if No = 0 (norm Lsup). Note that, this incrementer 209 is only used for the L1 norm. Thanks to this circuit, the bit range of the adder 208 can be reduced from p bits to m bits irrespective the norm used. For each sum, the abs(Ai-Bi) value is coded on m bits, so that only a m-bit capacity is needed for adder 208.

The X signal is also applied to the first input terminal (1) of a selector circuit 210 via a battery of eight inverters 211 (one inverter per bit). The output of adder 208 is connected to the second input terminal (2) of selector 210 and finally, the signal D is applied to the third input terminal (3) thereof. The norm signal N and the Cout signal are respectively applied to the command (Cmd) terminals (1) and (2). In case the L1 norm is used, Cout signal selects input terminal (2). When the Lsup norm is used, signal Cout makes the selection between input terminal (1) and (3): input terminal (1) is used if X > D and input terminal (3) is used if X <= D. As a result, the selector 210 is used to choose the adequate result depending upon the value of the norm signal N and Cout signals. A register referenced 212 stores the current distance during the computation, and thus works as an accumulator. The D signal which is the result of the distance calculation is available at the output of register 212 on the 14-bit DIST-BUS.

At the beginning of the distance calculation process, the register 212 is set to zero.

If L1 norm is used (No =1), the adder 208 computes the sum between Xi = (abs(Ai-Bi)) and the distance D at this stage of the process, or current distance, that is stored in the distance register. The selector 210 transfers the sum (Xi + D) available at input (2) to register 212 where it will be latched during the next cycle. If the sum, i.e. the distance D needs more than m bits then, the carry out generated by the adder 208 is processed by the incrementer 209. At each cycle, the (p-m) most significant bits are updated by the incrementer 209. The said (p-m) bits and the remaining m are inputted into first and second input terminals of a register 212. When all the couples of components have been inputted, the register 212 contains the calculated distance D between input vector A and prototype vector B, according to the L1 norm.

If Lsup norm is used (No = 0), the adder 208 computes the difference between abs(Ai-Bi) and the current distance D. If the difference operation gives a carry, i.e. Couti = 1 then, D > abs(Ai-Bi). In this case, input terminal (3) is selected to realize the maximum between the current distance and (Ai-Bi). If Couti = 0, then abs(Ai-Bi) > D input terminal (1) is selected, this difference is stored in register 212. In order to compare abs(Ai-Bi) and D, a value Xi = (abs(Ai-Bi) is applied to adder 208, therefore if it is required to load abs(Ai-Bi) in register 212, this value must have the appropriate polarity, this is the role of inverters 211. The present case will be more readily understood by reference to the two following examples.

Example 1

```
abs(Ai-Bi)=0011 ==>  Xi=1100
        D=0001 ==>   D=0001
                     -----
             adder ==>    1101    Cout=0 ===> abs(Ai-Bi)>D
```

Example 2

```
abs(Ai-Bi)=0001 ==>  X̄ī=1110
        D=0011 ==>   D=0011
                     -----
             adder ==>    0001    Cout=1 ===> abs(Ai-Bi)<D
```

In example 1, selector 210 selects input terminal (1), the value Xi = abs(Ai-Bi) is loaded in register 212. In example 2, no action is taken. Signal Cout is thus the criteria that is used to identify wether Xi is strictly inferior to D or not. Note by the way, that it is possible to suppress the inverters 211. In this case, the distance register 212 contains $\overline{\max(\text{abs}(Ai\text{-}Bi))}$. Therefore, in the next comparison step, at the adder input the polarity of the X signal must be modified in order to allow the comparison with the output of the adder. In this case the signification of the carry is opposite. The suppression of the inverters make the process a little bit more complicated, but if m is a large number, this suppression saves a number of inverters.

Now, an innovative fast and dense adder with carry generate fully adapted to meet the needs of adder 205 of Fig. 19, such as implemented in the ZISC chip 10, will be described. According to the novel implementation, adder 205 uses selector circuits in order to compute the internal carry (carry generate). The architecture that will be now described by reference to Figs. 20 to 23 is very efficient in terms of circuit density and speed (delay).

As illustrated by Fig. 20, adder 205 can be split into 2 sub-circuits 213 and 214. Sub-circuit 213 uses primary input bits a0 to a7 and b0 to b7 for each component of the input and prototype vectors respectively, to process them in order to compute intermediate signals generically designated by letters c (carry), f (force) and p (propagate) for convenience, and the internal carry Cgen. This signal Cgen is in fact the carry resulting of the addition without input carry. Sub-circuit 214 uses said intermediate signals outputted from sub-circuit 213 and an input carry signal Cin to compute the final sum signal S. Due to the innovative architecture of sub-circuit 213, it is possible to directly connect the output terminal Cgen to the input terminal Cin of sub-circuit 214 without any detrimental loop effect.

Fig. 21 shows the detailed structure of sub-circuit 213. For each couple of bits forming a slice, e.g. a0 and b0, a specific circuit e.g. 215.1 computes the "state" of this couple of bits i.e. it determines whether there is a carry modification or not, and if there is a carry modification, whether the carry c generated by this bit slice, is set to 1 or to 0. Fig.22 (A) shows the internal structure of circuit 215.1 which essentially consists of a two-way XOR referenced 216. This circuit 215.1 generates two bits, labelled p0 and c0, whose value is determined by the following rule. If p0 = 1, this means there is no carry modification, while if p0 = 0, this means there is a carry modification. The c0 bit is such as if there is a carry modification, then c0 is equal to the carry. Depending on design constraints, circuit 215-1 may be hard-wired differently, so that different options are allowed. More generally, ci may be made equal to either ai or bi thanks to adequate strapping connection as schematically shown in Fig. 22(A), or even to (ai AND bi) or (Ai OR bi) through adequate logic dotting function if electrical constraints justify to do so.

Now turning again to Fig. 21, circuit 215.1 processes bits a0 and b0 to generate p0=(a0 XOR b0) and c0=a0 which are outputted from sub-circuit 215.1 but they are also used internally for further processing. In the second level of sub-circuit 213, another specific circuit then processes two pairs of signals generated by respective circuits of the first level to compute the result "state" for a 2 bit slice. For instance, circuit 217.1 processes bits p0, c0 generated by circuit 215.1 and bits p1, c1 generated by circuit 215.2. Fig. 22(B) shows the internal structure of circuit 217.2 which basically consists of a selector 218 and a two-way AND gate 219 that are properly interconnected as shown. Circuit 217.1 generates bits c1-0 and f1-0 to be used both internally in sub-circuit 213 and in sub-circuit 214. Letters p and f are used as mentioned above to illustrate the polarity of the carry modification signal, having in mind that $p = \overline{f}$. Therefore, because the circuit 217.1 is depending upon the polarity of the input signals defined by bit p or f, preferably the circuit structure depicted in Fig. 22(C) is used instead of the circuit of Fig. 22 (B), when driven by input bit of the p type instead of the f type, for increased optimization (to save inverting gates). For instance, the circuit of Fig. 22(C) referenced 220.1 is used in the third level of sub-circuit 213 of Fig. 21 to generate bits c3-0 and p3-0. It is comprised of a selector 221 and a two-way NOR gate 222 with interconnections such as depicted in Fig. 22 (C). The operation of the two types of selectors may be basically understood from Fig. 22(D). Similar reasoning applies to the other half of circuit 213 which processes the four remaining bit pairs, so that circuit 220.2 (of the same type as circuit 220.1) generates bits c7-4 and p7-4. Finally, the bit processing is continued through a last fourth level illustrated by circuit 223 which generates bits f7-0 and c7-0. These two bits are applied to a two-way AND gate 224 whose output bit represents the Cgen signal. Cgen is thus the internal carry for bits 0 to 7 of the primary input bits. This carry signal Cgen represents the internal carry of the primary bits assuming Cin = 0. Because the processing of said primary bits is performed in parallel, the delay is very small. Circuit 223 has an identical structure when compared to circuit 217.1. As apparent from Fig. 21, in addition to bit Cgen, sub-circuit 213 also supplies all the intermediate bits mentioned above for subsequent processing in sub-circuit 214.

The table given below summarizes the logic table of circuits 217.1 and 220.1.

Circuit 217.1

```
p1=1  ===>       c1-0=c0,
i.e. if generated, the carry comes from bit 0
p1=0  ===>       c1-0=c1,    carry from bit 1
If p1=1 and p0=1     ===>   f1-0=0 (propagate carry
                                    through bits 1 & 0)
else                 ===>   f1-0=1 (carry generated
                                      by bit 1 or 0)
```

Circuit 220.1

```
f3-2=0  ===>   c3-0 = c1-0
if generated the carry comes from bit 1-0)
f3-2=1  ===>   c3-0 = c3-2   carry from bit 3-2

If f3-2=1 or f1-0=1     ===>   p3-0=0 (carry generated
                                       by bits 1 or 0)
else                    ===>   p3-0=1 (propagate carry
                                        through bits 1 & 0)
```

The computation of all the sum bits s0 to s7 of the sum signal S from said intermediate bits and the input carry bit Cin will be now given in conjunction with Fig. 23.

Now turning to Fig. 23, sub-circuit 214 first includes four identical specific circuits referenced 225.1 to 225.4. Each circuit, e.g. 225.1, is comprised of two two-way XOR circuits 226 and 227 and of one selector 228. For instance, referring to circuit 225.1, the Cin bit is applied to the first input terminal of selector 228 whose other input receives the c0 bit. The bit which controls selector 228 at the command input (Cmd) is bit p0. The bit generated by selector 228 and the p1 bit are applied to XOR 226, while bits c0 and Cin are applied to XOR 227. The bits that are outputted by XOR circuits 226 and 227 are the sum bits s1 and s0 respectively. Same reasoning applies to circuits 225.2 to 225.4, as far as bits c2 to c6, and bits p2 to p7 are concerned, except however in that, Cin is no longer directly applied to said first input terminal of XOR 227 of circuits 225.2 to 225.4. The bit which is applied to XOR 227 of circuit 225.2 is either bit c1-0 or bit Cin depending the value of control bit f1-0 which is applied to selector 229.1. A similar construction applies to selector 229.2 where bit p3-0 selects either bit c3-0 or bit Cin. The situation is a little bit more complicated with respect to circuit 229.3. The control bit applied to selector 229-3 is equal to f5-0 which corresponds to (p5-4 NAND p3-0) completed in two-way NAND gate 230. This control bit f5-0 selects either bit Cin or bit c5-0 which results from the selection of either bit c5-4 or c3-0 in selector 231 under the control of bit f5-4. Finally, an independent selector referenced 232 generates the carry out bit Cout, which is either bit Cin or bit c7-0 under the control of bit p7-0. As apparent from the construction shown in Fig. 23, circuits 225.1 to 225.3 respectively delivers pairs of sum bits s2 s3, s4 s5, s6 s7 in addition to the pair of sum bits s0 s1 generated by circuit 225.1 as explained above.

With the implementation of sub-circuits 213 and 214 respectively illustrated in Figs. 21 and 23, the critical delay can be split in two parts. Sub-circuit 213 needs 4 stages to generate said intermediate signals, but 5 stages are necessary to generate signal Cgen. Sub-circuit 214 needs 4 stages. However, depending on the application, it is possible to reduce the number of elementary circuits in sub-circuits 213 and 214, but at the cost of increasing the number of stages and thus the overall delay.

\* THE DISTANCE COMPARE AND IF CIRCUITS (300/350) \*

Compare circuit 300 is implemented in each neuron circuit 11 to perform the comparison between the calculated distance signal D and the J signal. The J signal is supplied by IF circuit 350 shown in Fig. 7. As apparent from Fig. 7, the J signal is the signal which appears either on the DIST-BUS, the OR-BUS, or the MinIF/MaxIF-BUS or the content of the AIF register 352 which holds the AIF value. Fig. 24 shows the detailed structure of the fully parallel compare circuit 300 according to a preferred implementation of the ZISC chip 10. Now turning to Fig. 24, compare circuit 300 receives the 14 primary bits d0 to d13 of the distance D signal generated by the distance evaluator circuit 200 on a first set of input terminals. It further receives the 14 primary bits j0 to j13 of the J signal from the IF circuit 350 that are applied on another set of input terminals. In essence, the compare circuit 300 generates two signals LT (Lower Than) and LTE (Lower Than or Equal) which in turn are applied to the identification circuit 400. The general principle of the comparison between the D and J signals performed in compare circuit 300 is to determine (1) if D is strictly inferior to J (this is the role of the LT signal) and (2) if D is inferior or equal to J (this is the role of the LTE signal).

During the recognition phase, signal J represents the value stored in the AIF register 352. The calculated distance D is compared to the AIF value to determine whether D < AIF or not. On the contrary, during the learning phase, signal J is equal to MinIF. The calculated distance D is then compared to MinIF to determine whether D <= MinIF or not. The following TABLE I illustrates the conclusions with regard to a determined neuron circuit 11 that may be reached depending upon the values of the LT and LTE signals in their respective mode.

TABLE I

| In the RECOGNITION mode: | |
| --- | --- |
| LT | conclusions |
| 0<br>1 | no firing (D >= AIF)<br>firing (D < AIF) |
| In the LEARNING mode: | |
| LTE | conclusions |
| 0<br>1 | not degenerated (D > MinIF)<br>potentially degenerated (D <= MinIF) |

To that end, a comparison is performed between each corresponding bits of signals J and D. Thanks to the arborescent architecture depicted in Fig. 24 which allows a parallel processing of the signals, the comparison is performed very fast. For each couple of the primary bits forming a slice, e.g. d0 and j0, a specific circuit e.g. 301.1 computes the "state" of this couple of bits i.e. it determines whether the two bits are equal or not. Circuit 301.1 is structurally similar to circuit 215.1 of Fig.22 (A) which essentially consists of a two-way XOR referenced 216, but it further requires an inverting gate at its output to perform the desired XORNOT (XORN) function. This circuit 301.1 generates two bits, labelled p0 and c0, whose values are determined by the following rule: if p0 = 1, this means there is an equality between bits d0 and j0 and if p0 = 0, this means the two said bits are different. As apparent from Fig. 24, the c0 bit is made equal to d0. Depending on design constraints, circuit 301.1 may be hard-wired differently. Circuit 301.1 processes first pair of bits d0 and j0 to generate bits p0 and c0. Similar circuits 301.2 to 301.14 process the other pairs of bits i.e. d1 and j1 to d13 and j13 in order to generate respective pairs of bits p1 and c1 to p13 to c13.

In the second level of circuit 300, another specific circuit then processes the two pairs of bits generated by respective slice of circuits of the first level to compute the result for a two bit slice. For instance, circuit 302.1 processes bits p0, c0 generated by circuit 301.1 and bits p1, c1 generated by circuit 301.2. In turn, circuit 302.1 generates pair of bits c1-0 and f1-0. Circuit 302.1 has an identical structure to circuit 217.1 shown in Fig. 22(B) which basically consists of a selector 218 and a two-way AND gate 219 that are properly interconnected as illustrated therein. Same construction applies to circuits 302.2 to 302.7. Because circuit 303.1 is depending upon the polarity of the input bits defined by letter f instead of p, preferably the circuit structure depicted in Fig. 22(C) is used instead of the circuit of Fig. 22(B), for increased optimization, i.e. to save inverting gates. Therefore, circuit 303.1 is preferably identical to circuit 220.1 of Fig. 22(C) to generate bits c3-0 and p3-0. It is comprised of a selector 221 and a two-way NOR gate 222 with interconnections such as depicted in Fig. 22 (C). Similar circuits 303.2 and 303.3 generate respective pairs of bits p7-4, c7-4 and p11-8, c11-8. Only circuit 303.4 has a different structure and just consists of an inverter to generate bit p13-12.

The bit signal processing is continued at the fourth level as illustrated by circuits 304.1 and 304.2 which respectively generate pairs of bits f7-0, c7-0 and f13-8, c13-8. These two circuits have the same construction as circuit 217.1 of Fig. 22(B). Finally, these pairs of bits are applied to circuit 305 which generates bits p13-0 and c13-0. Circuit 305 has an identical structure when compared to circuit 220.1 of Fig. 22(C). These two bits are applied to a circuit 306 which is first comprised of a two-way NOR gate 307 whose output bit represents the LT signal. Bits p13-0 and LT are applied to a two-way OR gate 308 to generate signal LTE. Because the processing of said primary bits is performed in parallel in compare circuit 300, the overall delay is very small. As a result, there is described a fast and dense fully parallel compare circuit which is easily expandable in terms of bit number (with a minimum increase of the delay) and uses a few number of devices.

* THE IDENTIFICATION CIRCUIT (400) *

Now turning to Fig. 25, there is shown the detailed structure of identification circuit 400 of neuron circuit 11. The 14-bit CAT-BUS (which transports the input category CAT signal supplied by micro-controller/user 22) and OR-BUS (which transports the global category C* signal) are applied to a two-way multiplexer 401 whose output is connected to the first input of comparator 402. Depending on the operating mode, the multiplexer 401 thus transfers either the input category signal CAT or the global category signal C* to the said first input of comparator 402.

Note that, multiplexer 401 can be replaced by a main multiplexer circuit for all the neuron circuits of base neural network 11(A). In this case, the OR-BUS would be no longer necessary, the CAT-BUS conveying either the CAT or C* data. The Cat-BUS is applied to the second input of comparator 402. Comparator 402 is conventionally made of fourteen 2-way XOR gates driving a single 14-way OR gate. In turn, the output of comparator 402 is applied to the first input of two-way XOR gate 403 whose other input receives the LEARNING signal L. Signal L is transported via the IADD/CTL-BUS and in fact, directly derives from a signal generated in the status and control logic circuit 18 under micro-controller/user 22 control. The L signal is set active during the learning phase (L = 1) and set inactive (L = 0) during the recognition phase. However, the final decision that a neuron circuit must store an input vector during the learning phase pertains to identification circuit 400, the role of the daisy chain circuit 600 in that respect is limited to the selection of the ready to learn neuron circuit, as it will be explained hereinbelow in more details. The one bit signal generated by XOR gate 403 is labelled the K signal. The LT and CO signals are applied to a two-way AND gate 404. The CO signal generated in the daisy chain circuit 600 is set active (CO = 1) as soon as the neuron circuit is committed. The signal outputted from AND gate 404 is preferably stored in an optional one-bit F register 405 which is controlled by the L signal. The signal which is generated by the register 405 is the local fire result signal F. Signal F is set active (F = 1) when neuron circuit 11 has fired in the recognition mode. Signals LTE and CO and the signal outputted by comparator 402 are applied to a three-way AND gate 406. The signal generated by AND gate 406 is stored in 1-bit DEG register 407 under the control of signal L and is outputted from identification circuit 400 as the DEG signal. Signal DEG is a status signal of neuron circuit 11. Register 407 holds a "1" when the neuron circuit 11 is degenerated (in this case, AIF register 352 is loaded with MinIF). The signal which is outputted from register 407 and the local result fire signal F are applied to a two-way AND gate 408 to produce the DEGOUT local result signal. The DEGOUT signal is thus set active when a degenerated neuron circuit has fired during the recognition phase. Finally, signals F and K are applied to a two-way AND gate 409 to generate the local result UNC/FIRE.OK signal. This signal has two meanings depending on the operating mode. In the learning mode, during the engagement process of the ready to learn neuron circuit, if the UNC/FIRE.OK signal is set active (UNC/FIRE.OK = 1) the stored input vector is not "frozen" as a prototype vector. The ready to learn neuron circuit is not engaged because the input vector has been recognized by at least one neuron circuit of the neural network. In the recognition mode, the UNC/FIRE.OK signal is set active if two neuron circuits having different categories have fired, i.e. the input vector has not been identified. In summary, identification circuit 400 generates three local result signals F, DEGOUT and UNC/FIRE.OK (that are illustrative of the local response of a determined neuron circuit to the input vector presentation) and one status signal DEG. In addition, some of these signals are used as control signals.

As a matter of fact, in the recognition mode, the function of comparator 402 is to compare the local category signal C stored in the category register 450 of a determined neuron circuit 11 with the global category signal C* presented on the OR-BUS. If there is a difference between the C and C* signals, there will be no matching in comparator 402. Let us assume a logic one is generated in this case for consistency. Because in this mode, the signal L is inactive (L = 0), the signal K outputted from XOR gate 403 will be thus set to 1 and if signal F is active (F = 1), signal UNC/FIRE.OK is equal to 1. This means that at least two neuron circuits with different categories have fired. At least one UNC/FIRE.OK signal being set to 1, as a consequence the global result UNC/FIRE.OK* which result of the ORing of all local result signals is set to 1. At the base neural network 11(A) level, this means that the input vector has been recognized by at least two committed neuron circuits that have fired with different categories, and therefore the input vector has not been identified. On the contrary, if all committed neuron circuits that have fired have each a local category C identical to the global category C*, all the UNC/FIRE.OK local result signals that are generated therefrom are set to 0, and therefore the global result signal UNC/FIRE.OK* is equal to 0. In the latter case, the input vector is identified and its category is equal to C*.

In the learning phase, it is important to determine whether the neuron circuit will become degenerated or not. For an engaged neuron circuit, the input category CAT supplied by the micro-controller/user 22 on the CAT-BUS is compared to the local category C in comparator 402. If C is equal to CAT, UNC/FIRE.OK = 1 and signal LTE is not used, the reduction process is not undertaken because this neuron circuit has recognized the input vector with the correct category. If C and CAT are different, two cases are to be considered depending on the result of the comparison between distance D and the value of MinIF, in other words of the signal LTE value. If signal LTE = 1 (i.e. D <= MinIF), neuron circuit 11 is declared degenerated, the logic one generated by the AND gate 406 is stored into the DEG register 407 and the MinIF value is stored in AIF register 352. If signal LTE = 0 (i.e. D > MinIF), the contents of the DEG register 407 is not modified, the signal outputted by AND gate 406 being equal to zero. In addition, at the neural network level, comparator 402 has the role of determining whether the input category CAT has been recognized by at least one neuron circuit. To determine whether neuron circuit 11 is degenerated or not is an essential step of the reduction process. In the learning phase (signal L = 1), if the K signal outputted from XOR gate 403 is set to 1 (because the input category CAT is the same as the local category C and there is thus a matching in comparator 402) and if signal F = 1, then signal UNC/FIRE.OK is set to 1. The UNC/FIRE.OK signal generated by AND gate 409 has the meaning of indicating that the neuron circuit in consideration has correctly recognized the input vector, and therefore the input vector has been correctly recognized at the base neural network 11(A) level. In this case, the ready to learn neuron circuit still remains free and the stored input vector is not "frozen" as a new prototype vector in RAM memory 251. There is no need for the neural network to engage a new the ready to learn neuron circuit.

It is to be noted, that neither during the recognition phase nor during the learning phase, the UNC/FIRE.OK signal which results of the comparison between the global signal C* and local signal C in identification circuit 400, is locally exploited unlike global result signal UNC/FIRE.OK*. In summary, in the recognition mode, signal UNC/FIRE. OK* = 1, means that at least two neuron circuits with two different categories have recognized the input vector. Signal UNC/FIRE.OK* = 0 means the input vector has been either recognized by at least one neuron circuit with a single category or not recognized at all. In the learning phase, the global result signal UNC/FIRE.OK* (via the ST signal which derives therefrom) has the determining role to force the ready to learn neuron circuit to freeze or not the input vector that has stored in RAM memory 251 during the pre-charge step that has been completed during the previous recognition phase.

\* THE Dmin DETERMINATION CIRCUIT (500) \*

As mentioned above by reference to Fig. 8, the Dmin determination circuit 500 is comprised of multiplexer 501, search/sort circuit 502 and logic circuit 503. Fig. 26 schematically shows the internal construction of logic circuit 503 which generates the $\overline{SELECT}$ signal which is applied to search/sort circuit 502. In reality, logic circuit 503 not only receives the F, CO and RS signals as apparent from Fig. 8, but it also receives three control signals that are related to different operating modes/sub-modes of the base ZISC chip 10: the NORMAL (NM), the NEAREST NEIGHBOR (NNM) and the SAVE (SM) signals. These three control signals are generated by the status and control logic circuit 18 and transported via the IADD/CTL-BUS to logic circuit 503. Logic circuit 503 comprises one 3-way AND gate 503.1, two 2-way AND gates 503.2 and 503.3, and one 3-way NOR gate 503.4. The CO, F and NM signals are applied to AND gate 503.1. The CO and NNM signals are applied to AND gate 503.2. The RS and SM signals are applied to AND gate 503.3. The outputs of the said three AND gates are applied to their respective input of NOR gate 503.4 which generates the $\overline{SELECT}$ signal. In turn, the $\overline{SELECT}$ signal is applied as an inhibit signal to search/sort circuit 502 as it will be illustrated hereinbelow by reference to Fig. 30.

In essence, the primary role of search/sort circuit 502 is to participate to the searching of the minimum distance Dmin among all the distances calculated by neuron circuits of a neural network and then to participate to the sorting of the remaining distances in an increasing order (it is also adapted to handle category type of data). Therefore, it is important to notice that the processus of searching and sorting are collectively conducted by all the neuron circuits of the neural network. More generally, the role of search/sort circuit 502 is first to find the minimum value among a group of several parameters and then to sort the remaining values in the increasing order. However, its adaptation to find the maximum value and then to sort the remaining values in the decreasing order would be trivial for the man skilled in the art. The search and sort processes must be conducted in the shortest time and with a circuitry as simple as possible. These criteria are met with the search/sort circuit 502 of the present invention. Only the search process to determine the minimum distance Dmin and the related circuitry will be discussed hereinbelow. However, the search process for the maximum distance determination would basically follow the same rules and use a quite similar circuitry.

The algorithm at the base of the search process of the present invention will be briefly described by reference to the flow-chart referenced 504 shown in Fig. 27. Assuming four neuron circuits 11-1 to 11-4, each having calculated its respective distance D1, D2, D3, and D4 between the input vector and its stored prototype vector. The problem which is raised is thus to determine the lowest value Dmin among these four distances. First of all, a matrix is built wherein the distances are arranged in columns and the corresponding bits arranged in lines. Let us give a simple example. Assuming we have to find the minimum value between four distances D1, D2, D3, and D4 each consisting of a binary word coded on four bits, such as D1 = 0110, D2 = 1001, D3 = 1101, and D4 = 0101. TABLE II given below shows the resulting matrix, wherein the first line L1 represents the bits of the heavy weights or MSB's and so on until line L4 which represents the LSB's. More generally, notation dki represents the value of the bit of the kth line and the ith column. In the present instance, variable k (k = 1 to 4) is thus the rank of the bit in the binary word representing a distance and variable i (i = 1 to 4) is the rank of the neuron circuit in consideration. As apparent from TABLE II, to each line also corresponds a binary word (e.g. L1 which is formed by the MSBs of each distance word is such as L1 = 0110).

TABLE II

|    | D1       | D2       | D3       | D4       |       |
|----|----------|----------|----------|----------|-------|
| L1 | d11 = 0  | d12 = 1  | d13 = 1  | d14 = 0  | (MSB) |
| L2 | d21 = 1  | d22 = 0  | d23 = 1  | d24 = 1  |       |
| L3 | d31 = 1  | d32 = 0  | d33 = 0  | d34 = 0  |       |
| L4 | d41 = 0  | d42 = 1  | d43 = 1  | d44 = 1  | (LSB) |

Now turning to Fig. 27, which illustrates the flow chart of the algorithm 504. After the search process has been initialized in box "start", in box 505 there is proceeded to the analysis of the bits of the first line L1, so that during the test conducted in box 506, it is determined whether or not there is at least one "0" therein. The first line L1 includes two zeroes, and thus according to box 507, distances which have a "1", i.e. D2 and D3, are excluded and will not participate to the subsequent processing steps. To illustrate that a distance is excluded, an "X" is marked in the corresponding column, as schematically illustrated by the two next lines:

```
        D1      D2      D3      D4


   L1    0       1       1       0   ==>   0 found
                                                !
   SL             X       X           <_____!
```

As apparent from the above status line (SL), the columns corresponding to distances D2 and D3 are excluded. In box 508, the current line (L1) is checked to determine if it is the last one or not. In this instance, line L1 being not the last line, the process is thus continued. In step 2, the following line L2 is examined according to box 509. Distances D2 and D3 being excluded, the presence of a "0" therein is searched again only for columns D1 and D4 during the test performed in box 506. No zero is found, so that no additional column is excluded during this step and box 507 is bypassed. Step 2 does not change the previous status line SL as illustrated below, because line L2 does not include any zero.

```
        D1      D2      D3      D4


   L2    1       X       X       1   ==>   0 not found
                                                !
   SL             X       X           <_____!
```

The process continues for line L3, and during step 3, the presence of a new zero is detected in distance D4 for bit d34, so that distance D1 is now excluded, as illustrated below.

```
                    D1      D2      D3      D4

            L3      1       X       X       0   ==>   0 found
                                                              !
            SL      X       X       X            <_____!
```

Finally, in step 4, line L4 is examined in box 506, no zero being found, box 507 is by-passed and thus the status found in step 3 is confirmed. Distances D1, D2, D3 being excluded, the minimum value is therefore represented by distance D4 found by neuron circuit 11-4.

```
                    D1      D2      D3      D4

            L4      X       X       X       1   ==>   0 not found
                                                              !
            SL      X       X       X            <_____!
```

Because line L4 is the last line, the searching process terminates in box labelled "END" after the test performed in box 508.Finally, the minimum distance is given by: Dmin = D4 = 0101.

Fig. 28(A) shows the schematic construction of the elementary base unit, generically referenced 510, which is the corner stone of the search/sort circuit 502 according to the present invention. As apparent from Fig. 28(A), reference 510-ki designates the elementary base unit which processes bit dki (line k, column i) of the distance signal Di previously computed by evaluator circuit 200 of neuron circuit 11-i (with k = 1 to p and i = 1 to N). Basically, unit 510-ki consists of two sub-units 511-ki and 512-ki. Three input signals are applied to unit 510-ki : input bit signal dki, exclude input signal EXCLINki, and feedback signal ORk and two output signals: local output signal NOUTk-i and exclude output signal EXCLOUTki are outputted therefrom. Depending its value, the EXCLINki signal is used to select or to inhibit unit 510-ki for the search process, i.e. the Dmin determination. For instance, if EXCLINki is set inactive (EXCLINki = 0), unit 510-ki is not excluded and conversely, if EXCLINki is set active (EXCLINki = 1), unit 511-ki is made inoperative, NOUTk-i is set inactive (NOUTk-i = 0 with the present implementation of the ZISC chip 10 based on OR circuit 12). Basically, the function of sub-unit 511-ki, when not inhibited, is to search whether bit dki is at "0" or not. To that end, a specific logic function is performed between the bit signal dki and the EXCLINki signal to generate the output signal NOUTk-i. On the other hand, signal EXCLOUTki is a determined logic function of signals EXCLINki, dki and signal ORk. The role of unit 512-ki is thus to generate an adequate input signal for the following unit 510-(k+1)i pertaining to the next line which processes bit d(k+1)i to inhibit or not said unit depending on its value. In other words, sub-unit 512-ki determines if distance Di will be excluded or not when the following line is processed. Signal ORk which intervenes here as a gating signal, results from the ORing of all the NOUTk-i signals generated by line k (ORk = NOUTk-1 OR ... OR NOUTk-N).

In a preferred embodiment illustrated in Fig. 28(B), sub-unit 511-ki consists of a NOR gate 513 which performs NOUTk-i = dki NOR EXCLINki. Sub-unit 512-ki which plays an essential role as to the exclude function is comprised of AND gate 514 and OR gate 515, that are interconnected to perform an AND-OR function, so that EXCLOUTki = EXCLINki OR (dki AND ORk). For instance, if signal EXCLINki = 1, then signal NOUTk-i is forced to zero irrespective the value of dki to be neutral with regard to OR circuit 12. Now, if signal EXCLINki = 0 (no exclusion), signal NOUTk-i will be equal to $\overline{dki}$. If dki = 0, then signal NOUTk-i = 1, the latter value is therefore characteristic that a zero has been found at this location. As a consequence, signal ORk is equal to one, and because dki = 0 and signal EXCLINki = 0, we have signal EXCLOUTki = 0. This means, that the following unit will not be inhibited. On the contrary, if dki = 1, because signal EXCLINki is still equal to 0, signal NOUTk-i is set to 0. Now, two cases must be considered depending on the results obtained by the other non excluded columns for this line k. If all the input bit signals are equal to one, then all the local result signals of this line k (for all the values of i) are equal to zero, then signal ORk = 0 and finally, signal EXCLOUTki = 0 (no exclusion). If, still for line k, at least one input bit is equal to 0, then the corresponding local result signal NOUTk-i is equal to 1, so that signal ORk = 1 and finally, EXCLOUTki = 1, the column i is thereby excluded.

Let us now consider Fig. 29 which shows how four search/sort circuits 502-1 to 502-4 (belonging to four different neuron circuits 11-1 to 11-4) are combined via the adequate dedicated OR sub-circuit of OR circuit 12 to generate bit OUT*1 to OUT*4 of global output signal OUT*. The following description will be made by reference to the example of TABLE II with the ZISC chip 10 implementation of Fig. 4(A). This OR sub-circuit of OR circuit 12, which handles the local output NOUT signals, bears numeral 12.1 in Fig. 29 to facilitate the understanding of the search/sort circuit 502 operation. For sake of simplicity, the search/sort circuits 502 illustrated in Fig. 29 have been voluntarily restricted to the circuitry that is necessary to perform the search function. The circuit shown in Fig. 29 which bears numeral 516 includes four search/sort circuits 502-1 to 502-4 that have been shown adjacent in Fig. 29 to form the aggregate circuit 517 and dedicated OR sub-circuit 12.1. Aggregate circuit 517 is thus comprised of sixteen elementary base units referenced 510-11 to 510-44 that are arranged to form a matrix. It must be understood that each of these four search/sort circuits is located in a different neuron circuit and they have been only fictitiously assembled for sake of illustration. As still apparent from Fig. 29, any search/sort circuit 502 of neuron circuit 11 is built by piling or cascading the adequate number of these units 510 arranged in a column, in this instance four. Note that the logic level of each node of circuit 516 has been indicated in Fig. 29 to still comply with the example illustrated by TABLE II at the end of the Dmin determination (search) process. All search/sort circuits are identical and have a same construction. Aggregate circuit 517 will be now described in more details. The first line of units referenced 510-11 to 510-14 is concerned by the respective MSB bits d11 to d14. In the following part of the description, signals EXCLINli and EXCLOUT4i will be labelled EXCLIN-i and EXCLOUT-i respectively. Similar reasoning applies to other columns. The exclude signals EXCLIN-1 to EXCLIN-4 are applied to units 510-11 to 510-14 respectively. In turn, said units respectively generate the NOUT1-1 to NOUT1-4 signals that are applied to OR gate 12.1.1 which in turn supplies output signal OUT*1. Signal OUT*1 is reinjected in each of units 510-11 to 510-14 of the first line as the OR1 signal. Same reasoning applies to the generation of the OUT*2 to OUT*4 signals via respective OR gates 12.1.2 to 12.1.4, which are also a part of dedicated OR sub-circuit 12.1. In reality, in the present implementation of the ZISC chip 10, dedicated OR sub-circuit 12.1 comprises OR gates 12.1.1 to 12.1.N. Units 510-11 to 510-14 also generate the intermediate EXCLOUT11 to EXCLOUT14 signals that are applied to the respective EXCLIN input terminals of units 510-21 to 510-24 of the second line. Same reasoning applies to the construction of the other lines of aggregate circuit 517 until the fourth line. In the fourth line, units 510-41 to 510-44 generate final EXCLOUT41 (or EXCLOUT-1) to EXCLOUT44 (or EXCLOUT-4) signals that will used later on. Note that, because of technology constraints, NOR logic gates may be chosen instead of the OR gates shown in Fig. 29. In this case, an inverter would be required for each NOUTk-i signal to retrieve the correct polarity of the ORk bit signal. In any case, the logic relation ORk = OUT*k = NOUTk-1 OR ... OR NOUTk-N must be fulfilled.

Let us describe now the operation of the Fig. 29 circuit. All EXCLIN-1 to EXCLIN-4 signals are at the non inhibit or select logic level, for instance, they are set to zero still to comply with the above described example, i.e. EXCLIN-1 = ... = EXCLIN-4 = 0. Then, as soon as the search process is initiated, bits d11 to d44 are applied to their respective inputs of units 510-11 to 510-44 in accordance with their values given in TABLE II. As apparent from Fig. 29, all the MSB's, i.e. d11, d12, d13 and d14 forming binary word L1 (L1 = 0110) are applied to their respective units 510-11 to 510-14 of the first line. According to the internal structure of the units 510 as described above, the binary word which is outputted therefrom is NOUT1-1 NOUT1-2 NOUT1-3 NOUT1-4 = 1001, i.e. $\overline{L1}$. These NOUT signals are ORed in OR gate 12.1.1 to generate the first bit of signal OUT* labelled OUT*1. Signal OUT*1 = 1 because at least one zero has been identified in the first line. In turn, the OUT*1 signal is fed as a feedback signal into each of units 510-11 to 510-14 via a feedback loop. This feedback signal is labelled OR1 for consistency with the above description. Next, the sub-unit 512 of each of the units of the first line determines the value of the corresponding EXCLOUT signal. In this instance, the result is given by EXCLOUT11 = 0, EXCLOUT12 = 1, EXCLOUT13 = 1 and EXCLOUT14 =0. These signals are applied to respective units of the second line, i.e. 510-21 to 510-24, but only units 510-22 and 510-23 are inhibited because their respective columns are excluded. As soon as an EXCLIN signal is equal to 1, the corresponding unit 510 is inhibited and in turn, will inhibit the corresponding unit 510 of the following line pertaining to a same column by generating an EXCLOUT signal equal to 1. Similar reasoning applies to other lines. The above described operation is continued line by line until the fourth and last line is reached. The EXCLIN41 signal applied to unit 510-41 is equal to 1 to indicate this column has been inhibited due to the value of signals OUT*3 and d31. There is no modification to the current status brought by the processing of the LSBs in the fourth line. The final result of the search process, which is outputted by OR gates 12.1.1 to 12.1.4, is given by signal OUT* = OUT*1 OUT*2 OUT*3 OUT*4 = 1010. Signal OUT* is equal to the complement of the distance D4 calculated by neuron circuit 11-4. It may also be noted that all the EXCLOUT-1 to EXCLOUT-3 signals are at "1" and only EXCLOUT-4 is at "0". In summary, not only the minimum distance Dmin = D4 has been determined (in fact, its complemented value $\overline{Dmin}$ has been generated with the implementation shown in Fig. 29) but also the neuron circuit which holds it (in this case, neuron circuit 11-4 is the only neuron cicuit whose EXCLOUT signal is equal to zero). The totality of the OUT* signal is available at the output of circuit 516 (which results from the serial connection of the aggregate circuit 517 formed by the search/sorter circuits of the four neuron circuits 11-1 to 11-4 and OR sub-circuit 12.1). The reasoning may be generalized to the assembly of N search/sort circuits 502-1 to 502-N, each handling p bits, to result in an aggregate circuit 517 now capable to determine the minimum distance Dmin among N distances D1, ... , DN. Each distance being coded on p = 14 bits with the present implementation of the ZISC chip 10. In this case, OR sub-circuit 12.1 is comprised of p N-input OR gates 12.1.1 to 12.1.p to generate signal OUT* (comprised of bit signals OUT*1 to OUT*p). OR signal is then comprised of p bit signals OR1 to ORp, that are directly derived from the OUT*1 to OUT*p bit signals. The above description relating to only the search process of the minimum distance Dmin has been given for sake of illustration, it must be understood that in reality the innovative search/sort circuit 502 of the present invention has been normally designed with both search and sort capabilities.

As a matter of fact, the circuit of Fig. 29 can be significantly improved at the cost of only a small additional circuitry to add the sort function, so that the remaining distances are sorted in the increasing order if so desired. The search/sort circuit 502 with both capabilities is referenced 518 in Fig. 30. As apparent from Fig. 30, with respect to aggregate circuit 517 and OR sub-circuit 12.1 (previously described by reference to Fig. 29), the additional circuitry includes two circuits referenced 519 and 520. For instance, as far as distance D1 and search/sort circuit 502-1 are concerned, dedicated circuit 519 includes a two-way OR gate 521-1, a two-way OR gate 522-1 and a storage element, such as a latch 523-1. OR gate 522-1 and latch 523-1 are connected in series, the output of the OR gate driving the input of the latch. The output of the latch 523-1 is connected in a feedback loop to one input of OR gate 522-1. The other input of OR gate 522-1 receives an XOR-1 signal whose nature will be explained later on. The latch 523-1 receives the appropriate CLOCK and RESET signals as standard. The output of latch 523-1 is also connected to the first input of OR gate 521-1 to apply the EXCLIN'-1 signal. The other input of OR gate 521-1 receives the $\overline{\text{SELECT-1}}$ signal. The signal which is outputted from OR gate 521-1 is applied as the EXCLIN-1 signal to unit 510-11 of search/sort circuit 502-1. Still referring to the distance D1 column, circuit 520 includes an inverter referenced 524-1 connected to the output of search/sort circuit 502-1 which generates the EXCLOUT-1 signal. The role of inverter 524-1 is to complement the EXCLOUT-1 signal to produce a signal labelled XOR-1. The XOR-1 signal is applied to the other input of OR gate 522-1. As apparent from Fig. 30, circuits 519 and 520 include three other identical circuits for columns D2 to D4. In reality circuits 519 and 520 are comprised of N of such identical circuits for the N columns corresponding to distances D1 to DN.

Operation of the Fig. 30 circuit may be understood as follows, still complying with the TABLE II example. At initialization, the EXCLIN'-1 to EXCLIN'-4 signals are reset to 0000. This is performed through the specific RESET control signal which is applied to each of latches 523-1 to 523-4, and let us assume that all the four sorters 502-1 to 502-4 have been not been inhibited by signal SELECT ($\overline{\text{SELECT}}$ = 0) generated by logic circuit 503 (Fig. 26). As a result, signals EXCLIN-1 to EXCLIN-4 are equal to zero (no exclusion). The search process is conducted as described above until the minimum distance which corresponds to distance D4 determined by sorter 502-4 of neuron circuit 11-4 is found with the net values indicated in Fig. 29. As apparent from Fig. 29, the EXCLOUT-1 to EXCLOUT-4 signals are represented by the binary word 1110. After inversion in inverters 523-1 to 523-4 of circuit 520, the corresponding XOR-1 to XOR-4 signals are given by the binary word 0001 as shown in Fig. 30. The position of the "1" indicates that the minimum distance is held by neuron circuit 11-4. Let us now see the sort process in details. The XOR-1 to XOR-4 signals are ORed in OR gates 522-1 to 522-4 with the EXCLIN'-1 to EXCLIN'-4 signals (equal to binary word 0000) and then latched in latches 523-1 to 523-4 respectively. Finally, the new value of the EXCLIN-1 to EXCLIN-4 signals is then given by binary word 0001 which is applied to aggregate circuit 517. Because, the EXCLIN-1 to EXCLIN-3 signals are now equal to 0, the corresponding search/sort circuits 502-1 to 502-3 are permitted to participate to the next step of the sort process. Only search/sort circuit 502-4 does not participate to the following searching steps because distance D4 is excluded. Circuit 518 re-initiates a search process to determine which of the three remaining distances D1, D2 or D3 is the minimum distance. The same processus as described above is conducted. Distance D1 is known to be that searched minimum distance. Next, circuit 518 continues the search process to exclude the column of distance D1. The search and sort processes are continued as described above by reference to distance D1. The distances are then made available sequentially in the increasing order, i.e. in the present instance, D4, and then D1, D2 and D3, on the OUT*-BUS. Same reasoning would apply to a circuit adapted to search the maximum distance and then sort the remaining distances in the decreasing order. Basically, with respect to circuit 518 of Fig. 30, this would only require minor changes in the structure of units 510 within the scope of the skilled professional. In summary, the search and sort functions of search/sort circuit 502 (one search/sort circuit is placed in each neuron circuit 11 of base ZISC chip 10) have been described by reference to the circuits of Figs. 29 and 30. Aggregate circuit 517 formed by assembling search/sort circuits 502-1 to 502-N is a very fast circuit because all the p = 14 bits of all the distance D1 to DN signals are processed in parallel, so that no sequencer is required. The number of neuron circuits does not impact the overall delay of circuit 518, it just modifies the number of inputs of logic gates in dedicated OR sub-unit 12.1. Finally, aggregate circuit 517 is perfectly modular and requires only a minimal number of devices.

* THE DAISY CHAIN CIRCUIT (600) *

Fig. 31 shows the detailed construction of daisy chain circuit 600 of neuron circuit 11 built around a 1-bit DAISY register 601 controlled by a signal ST. The ST signal is set active during the learning phase in two cases: when identification circuit 400 confirms a neuron circuit should be engaged or at initialization. The ST signal is thus directly derived from the UNC/FIRE.OK* and L signals. The DCI signal is applied to the first input of a 2-way AND gate 602 whose other input receives the $\overline{RESET}$ signal. The output of AND gate 602 is connected to the input of register 601. The output of register 601 is connected to the first input of a 2-way OR gate 603 whose other input receives the ALL signal. The signal which is outputted from OR gate 603 at the DCO output terminal is the DCO signal. At initialization, the RESET signal is set active, i.e. $\overline{RESET}$ = 0, this "0" value outputted by AND gate 602 is loaded in DAISY register 601 as soon as signal ST is set active, so that via OR gate 603 (signal ALL = 0) the DCO signal is set to zero. More generally, the ST signal is activated when the data at the output of AND gate 602 needs to be loaded in register 601. When the ALL signal is activated (ALL = 1), the DCO signal is set active (DCO = 1) irrespective the binary value stored in register 601. The ALL signal proves usefulness during the test of neural network 11(A). As a matter of fact, during the test, all the neuron circuits of the neural network 11(A) without exception behave as if they were engaged. In normal operating conditions, the ALL signal is set to "0" and the $\overline{RESET}$ signal is maintained to "1". The DCI input terminal of the first neuron circuit 11-1 is connected to VH via an external wire. The ST, $\overline{RESET}$ and ALL signals are applied in parallel to all the daisy chain circuits 600 of the neuron circuits 11-1 to 11-N of ZISC chip 10.
Let us now consider the first neuron circuit of the ZISC chip 10. At initialization, all the registers 601 of the ZISC chip 10 hold a zero as a result of the general reset ($\overline{RESET}$ = 0 and ST = 1) accomplished during initialization as mentioned above. After the initialization step, the input terminal DCI of the first neuron circuit 11-1 being tied to VH, signal DCI-1 thus applies a one (DCI-1 = 1) to the first input of AND gate 602 and signal $\overline{RESET}$ also applies a one to the other input thereof, as a result, a one is applied at the register 601 input. On the other hand, a zero being loaded in register 601, the DCO-1 signal which is finally outputted from OR gate 603 (ALL = 0) is equal to 0. Therefore, only the DCI and DCO signals of the first neuron circuit 11-1 of neural network 11(A) have complementary values, i.e. obey to logic relation DCI = $\overline{DCO}$ because, for all the other daisy chain circuits i.e. of neuron circuits 11-2 to 11-N, signal DCI = signal DCO = 0. Neuron circuit 11-1 is thus the ready to learn neuron circuit by construction, as soon as the initialization step has been completed. When signal ST is set active in the learning mode, the logic one which was applied to the input of register 601 is then loaded therein. As a result, signals DCI-1 and DCO-1 are made equal to 1, the first neuron circuit 11-1 has learned and is now engaged. On the other hand, DCI-2 = 1 and DCO-2 = for the same reasons as explained above. This means the following neuron circuit in the chain, i.e. neuron circuit 11-2, is now the ready to learn neuron circuit. The reasoning can be extended until neuron circuit 11-N is engaged. Because, for each neuron circuit, generation of the DCO signal just requires a register and two elementary logic gates at the maximum, the overall delay is thus very short and moreover independent of the number of neuron circuits forming neural network 11(A)
Daisy chain circuit 600 further comprises a control logic circuit 604, which in turn consists of two logic gates: a two-way XOR gate 605 and a two-way AND gate 606. XOR gate 605 is driven by the DCI and DCO signals of neuron circuit 11 and generates the RS (Ready to Store) signal for the RAM memory 251. Basically, the RS signal operates as a write enable signal to allow or not the WRITE operation therein. In the recognition phase, the input vector is presented to all committed neuron circuits (selected and engaged), but the input vector components are only pre-charged into the RAM memory 251 of the ready to learn neuron circuit in prevision of a possible engagement during a subsequent learning phase. To pre-charge the RAM memory 251, during the recognition phase has significant advantages, because to store the 64 components thereof is really a time consuming process. With the present ZISC chip 10 implementation, it practically just remains to store the input category and to activate signal ST to set register 601 of the ready to learn neuron circuit to terminate the learning phase. Then, the RS signal is set inactive to prevent any further writing in the RAM memory 251. On the other hand, AND gate 606 generates the CO signal from the DCO and NS signals. The NS signal is internally generated by matching circuit 150 in each neuron circuit as mentioned above (see Fig. 5). The CO signal is thus set active for a neuron circuit which is selected and engaged (i.e. committed). Thanks to this combination of signals, the CO signal is judiciously applied to certain blocks of ZISC chip 10 illustrated in Fig. 4(A), so that only the committed neuron circuits are allowed to participate to the recognition phase and to the reduction process in the learning phase.
TABLE III below summarizes the neuron circuit states versus the logic value of DCI and DCO signals.

TABLE III

| DCI | DCO | NC state |
|-----|-----|----------|
| 0 | 0 | free |
| 1 | 0 | free (ready to learn = first free) |
| 1 | 1 | engaged |
| 0 | 1 | reserved |

TABLE III clearly illustrates the two basic states of a neuron circuit: free (including the ready to learn case) and engaged.

The DCO signal of the last neuron circuit of a single ZISC chip 10 , i.e. DCO-N, can be used to indicate if the last neuron circuit of neural network 11(A) is engaged or not. In other words, it may play the role of a FULL signal. If neuron circuit 11-N is engaged, this means neural network 11(A) is full. It is also to be noticed that the critical delay path of the neural network is substantially the one of the daisy chain circuit of the ready to learn neuron circuit. The other daisy chain circuits of the neural network are not impacted and there are no changes in their DCI and DCO signals.

The daisy chain circuit described for the single ZISC chip 10 of Fig. 4(A) is perfectly adapted to operate in a multi-chip environment should several chips be connected in series such as illustrated in Figs. 11 and 12. As more apparent from Fig. 11, only the DCI input terminal of the first neuron circuit of the first ZISC chip 10(1) is connected to VH, so that it is the ready to learn neuron circuit by construction after initialization. On the other hand, the DCO signal of the last ZISC chip 10(Q) forming elementary module 10(A) can be used to indicate if the DAISY register of the last neuron circuit of the last chip is loaded with a one or not. If it is loaded with a one, this means all the neuron circuits forming elementary neural network 11[A] incorporated in elementary module 10[A] are engaged.

The daisy chain circuit 600 is thus an essential feature for the cascadability of the ZISC chip 10, because unlike the architecture described in US-A-4974169 mentioned above, the addressing of the ZISC chips 10(1) to 10(Q) is not required. This means that the conventional decoder and pointer circuits are saved in each chip, which in turn, result in a significant circuit density increase. As another consequence, the address bus, with its inherent limitations as to the number of neuron circuits that can be addressed, is also no longer required. As apparent from Figs. 4(A) and 4(B), there is no bus labelled ADDRESS to interconnect the neuron circuits of base ZISC chip 10 and the micro-controller/user 22. Consequently, and at least theoretically, an unlimited number of base ZISC chips 10 may be connected in parallel on the INDATA-BUS, the SEL/CTL-BUS and the GDATA-BUS, only the daisy chain connection being of the serial type. No supervisor is necessary for data management during the learning phase to indicate via an address bus, which neuron circuit has to learn. According to the present invention, in the learning phase, the role of micro-controller/user 22 is not to supervise the operation of the neuron circuits of ZISC chip 10, but just to provide them with examples and associated categories. The neuron circuits of the ZISC chip 10 practice a sort of self-learning. This is so true that the decision to learn or not collectively belong to all neuron circuits and not to a supervisor.

The above described approach of the daisy chain circuit in an application to neural networks can be generalized without difficulty to a multi-processors 64 unit comprised of a plurality of base processing units, such as illustrated in Fig. 32, by a single base processing unit referenced 65. Each processing unit is connected to a common input data bus labelled DATAIN-BUS, via a bi-directional data bus. Each processing unit includes a R/W memory circuit 66. The data are presented on the DATAIN-BUS to all the processing units in parallel. A daisy chain circuit 67, having the same construction as daisy chain circuit 600 of Fig. 31, i.e. it is basically organized around a DAISY register, is associated to each processing unit and generates a RUN signal (equivalent to the CO signal) and a LOAD signal (equivalent to the RS signal) that are applied to the appropriate blocks of the processing unit. A serial connection DCI/DCO is established between the daisy chain circuits of the multi-processors unit 64. Each daisy chain circuit 67 receives a NEXT signal (equivalent to the ST signal) generated by a state machine (not shown) to shift the logic value applied to the input of the daisy chain circuit 67 by the DCI signal to be stored in the DAISY register of only one determined processing unit. The loading of a specific input data presented on the DATAIN-BUS in the R/W memory circuit 66 of such a determined processing unit 65 (in fact, the ready to load processing unit) is thus automatically performed by the daisy chain circuit whose logic input and output signals DCI and DCO have complementary values.

* THE INTER-NEURON COMMUNICATION SYSTEM *

Fig. 33 schematically shows the structure of the inter-neuron communication system when the ZISC chip 10 architecture of Fig. 4(A) is used. The inter-neuron communication system comprises OR circuit 12 which generates the global result signals F*, DEGOUT* and UNC/FIRE.OK* on the R*-BUS and the global output signal OUT* on the OUT*-BUS. These two buses are merged in the on-chip common communication bus COM*-BUS through electrical connections. It further comprises the OR-BUS which is directly derived of the OUT*-BUS and essentially transports distance or category type of data.

Now turning to Fig. 33, with respect to neuron circuit 11, only identification circuit 400 and Dmin determination circuit 500 thereof have been schematically represented. As apparent from Fig. 33, all the local result and output signals that are locally generated by each of the neuron circuits 11-1 to 11-N, are applied to respective dedicated OR sub-circuits, which all together form OR circuit 12. The NOUT local output signal generated by each neuron circuit, which transports the distance/category data, is applied to the dedicated OR sub-circuit 12-1. The OUT* global output signal generated by OR sub-circuit 12-1 is transported by a bundle of fourteen connecting wires forming the OUT*-BUS. The OUT* signal is reinjected via the OR-BUS in each neuron circuit of the ZISC chip 10 as a feedback signal. The F, DEGOUT and UNC/FIRE.OK local result signals of each neuron circuit are respectively applied to OR dedicated sub-circuits 12-2, 12-3 and 12-4. Global result signals F*, DEGOUT* and UNC/FIRE.OK* generated by said OR dedicated sub-circuits 12-2 to 12-4 are then available on their respective global result wires which all together form the R*-BUS. OR sub-circuit 12-1 is constructed by a battery of fourteen N-way OR gates. Each OR sub-circuit 12-2 to 12-4 is constructed from a N-way OR gate. Alternatively, OR sub-circuits 12.1 to 12.4 may be constructed by an equivalent arborescent structure as standard. However, it must be noted that an OR dotting could have been be used instead of the OR function performed in hardware by OR circuit 12 if permitted by the design system and the technology. The global result and output data are preferably stored in register 184.1 for further processing. The ID* signal is reconstructed in AND gate 184.2 from the F* and $\overline{UNC/FIRE.OK}*$ signals. The ID* signal is also stored in register 184.1 but may be outputted outside the ZISC chip 10 as shown in Fig. 33 for connection to a LED to provide an immediate visual information to the user as to the global response of neural network 11(A). Fig. 33 shows the implementation of the inter-neuron communication system of the present invention organized around the COM*-BUS for the ZISC chip 10 of Fig. 4(A) incorporating neural network 11(A) for stand-alone operation. However, this architecture can be improved to allow the assembly of a plurality of ZISC chips 10 to produce neural networks of bigger size.

Let us now consider the case the base ZISC chip 10 whose architecture has been adapted to operate in a multi-chip environment as described above by reference to Fig. 4(B). Now turning to Fig. 34, for each base ZISC chip 10, the said connecting wires forming the R*-BUS and the OUT*-BUS now connect the outputs of said OR sub-circuits 12-1 to 12-4 to respective driver circuits (e.g. sub-block 19.1 includes the driver circuits of the DR* type that are connected to each wire of the OUT*-BUS). These driver circuits are adapted to provide an additional OR dotting function on the off-chip common communication bus labelled COM**-BUS which is thus shared by all the ZISC chips 10 connected thereon. Global result signals F**, DEGOUT** and UNC/FIRE.OK** and global output signal OUT** are then available on their respective global wires of the COM**-BUS. All or part of these global result and output signals are reinjected in each ZISC chips 10 of the neural network via adequate receiver circuits (RR) still in block 19 placed in each ZISC chip 10 as apparent from Fig. 34. However, it should be noted that a not-dotted OR function, for instance using an OR circuit such as 12, could be used in lieu of the above described OR dotting function. Unlike the architecture of Fig. 33 which includes only one OR stage, the architecture of Fig. 34 includes two OR stages. However, only one OR stage could be envisioned as well, as described above by reference to the architecture of the ZISC chip 10" of Fig. 10. When the distinction between the COM*-BUS and the COM**-BUS is irrelevant, any common communication bus will be referred to as the COM-BUS. Multiplexer 21 shown in Fig. 4(B) which allows the selection of either the OUT* signal or the OUT** signal to be reinjected as the OR signal in each neuron circuit 11 is thus a convenient means to have the base ZISC chip 10 to operate either in a single chip or multi-chip environment.

Fig. 35 shows details of a typical implementation of the driver sub-block 19.1 of Fig. 34 in the construction of the elementary module 10[A] of Fig. 11. Now turning to Fig. 35, there is shown the implementation for the first bit of eight base ZISC chips 10, respectively referenced 10(1) to 10(8) which all together form the elementary module 10[A]. The latter incorporates elementary neural network 11[A]. As apparent from Fig. 35, a hard-wired AND dotting function has been implemented in reality on the GDATA-BUS, instead of an OR dotting function for practical reasons given just below. An OR dotting function would have required PFETs which are slow devices. Therefore, NFETs which are known to be fast switching devices are used instead. In the present case, each driver circuit DR* thus simply consists of a NFET device connected in an open drain fashion as standard. According to a bipolar technology, NPN transistors connected in open collector fashion would constitute an alternate solution. All the first bit signals for the eight chips, i. e. bit signals OUT*1(1) to OUT*1(8), are applied to the gates of their respective NFET devices whose drain is dotted on a common wire W1 loaded by pull-up resistor RL1 connected to the first potential VH. The source of each NFET device is connected to the second potential GND. As a final result, the desired AND function between said bit signals is performed on the corresponding wires of the GDATA-BUS to produce bit signal OUT**1. The OUT** signal that is now obtained through an AND function has an opposite polarity to the OUT** signal discussed above that was obtained through an OR function (e.g. with the dotting implementation of Fig. 34). It is interesting to notice that physically, the drain of each NFET device is not directly connected to the input of the receiver circuit RR inside the chip. For each ZISC chip 10, the drain connection is outputted from the chip to be connected to a wire W1. This common wire W1 shared by all the NFET devices transports the OUT**1 bit signal to the GDATA-BUS. The OUT**1 bit signal is returned back to each ZISC chip 10 via wire Z1 and a receiver circuit RR. A strap STR1 interconnects wires W1 and Z1. The construction shown in Fig. 35 may be easily generalized to the other remaining bits, so that the 14 bit OUT** signal is totally made available on the GDATA-BUS. As illustrated in Fig. 35, receiver circuit RR is a inverting buffer. It may be of any conventional type. It is required to regenerate the OR1 bit signal for each ZISC chip 10 with the adequate polarity, because the driver circuit DR* (which consists of a NFET device) operates as an inverter. It may be worthwhile to apply a control signal labelled PT (PT stands for Pass-Through) to receiver circuit RR so that when signal PT is set active, the OR1 signal is forced to "0". As mentioned above, by reference to Figs. 29 and 30, when the OR signal is set to zero, search/sort circuit 502 is passed through (i.e. the exclude function mentioned above is inhibited). The resulting elementary ZISC module 10[A] is thus comprised of a number Q (in the present case, Q = 8) of base ZISC chips 10 and does not require any external component. This results of the particular technique of dotting including the strap technique that is described above. Should the connection be made directly between the output of the driver circuit DR* and the input of the receiver circuit RR, such flexibility would have been limited. The above construction may be further extended to each of the global result signals F**, DEGOUT** and UNC/FIRE.OK**.

Fig. 36 is comprised of parts (A), (B) and (C). Parts (A) and (B) show the correspondence between: (A) the OUT* vs the NOUT signals and (B) the OR vs the OUT* signals according to the implementation of Fig. 33. Part (C) shows the OR/OUT** vs the OUT* signals according to the implementation of Fig. 35.

The search time in the determination of Dmin and the sort time that is required to sort the remaining distances are very dependent of the delay of OR sub-circuits 12.1 to 12.4 (Fig. 34) and of driver circuits (and thus of the load resistors). To minimize these delays, the solution described in Fig. 37 is recommended. This solution directly derives from the construction shown in Fig. 35, but takes profit of the optional implementation of the main Dmin determination circuit 20 in each base ZISC chip 10.

Now turning to Fig. 37, there is shown the logical implementation of a variant of the elementary module 10 [A] still formed by the assembly of eight base ZISC chips referenced 10(1) to 10(8) but when each of them is provided with its respective main Dmin determination circuit 20. In ZISC chip 10(1), aggregate circuit 517 (see Fig. 30) generates the NOUT1-1 to NOUTp-N signals that are applied to the dedicated OR sub-circuit 12.1. Signals supplied by OR sub-circuit 12.1 are labelled OUT*1 to OUT*p and are applied to main Dmin determination circuit 20. With the present implementation of the base ZISC chip 10, N = 36 and p = 14. The OUT* signal comprised of bit signals OUT*1 to OUT*p outputted by OR sub-circuit 12.1 is now applied to main Dmin determination circuit 20 as an input signal. The bundle of wires transporting the OUT*1 to OUT*p bit signals is also applied to aggregate circuit 517 as the OR-BUS (for circuit 517, the OR signal is the same as the OUT* signal). In turn, the signals that are outputted from main Dmin determination circuit 20 are applied to their respective NFET devices forming the driver circuits DR* of sub-block 19.1. The bit signals OUT**1 to OUT**p that are outputted from the ZISC chip 10(1) on the drains of the NFET devices, are available on respective wires W1 to Wp connected to VH via respective load resistors RL1 to RLp. Once the OUT** bit signals have been ANDed for the 8 chips and for each of the p bits, the corresponding bit signals OUT**1 to OUT**p of signal OUT** are available in the GDATA-BUS. The OUT** signal is applied to main Dmin determination circuit 20 as the OR*-BUS (for circuit 20, the OR* signal is the same as the OUT** signal after complementation). The path which conveys the OUT**1 to OUT**p bit signals to main Dmin determination circuit 20 includes straps STR1 to STRp, wires Z1 to Zp and respective receiver circuits RR. Any main Dmin determination circuit 20 has the same construction as search/sort circuit 502. The eight ZISC chips forming the elementary module referenced 10[A] in Fig. 37, are thus working in parallel to determine first the minimum distance value among the distances calculated by the neuron circuits in each ZISC chip 10, then, the minimum minimorum distance among said minimum distances calculated at the elementary module level. With the implementation illustrated in Fig. 37, the search and the sort processes are very efficiently and fastly performed. The limitation of the chip cascadability to a number of eight in the described example, is due to the maximum number of AND dotting functions accepted by the technology. Derived from the teachings of Fig. 35, the circuit of Fig. 37 illustrates the practical way to cascade eight base ZISC chips 10, each being provided with a main Dmin determination circuit 20 to form an improved variant of the elementary module 10[A] of Fig. 11. In turn, such elementary modules may be assembled to construct complex modules which incorporate corresponding complex neural networks.

Such a highly desirable result may be attained through the logical architecture of Fig. 38. In this case there is no practical limitation to the elementary module cascadability. Now turning to Fig. 38, there is described the construction of a complex module labelled 10{A} to illustrate how a number R of such elementary modules 10[A] can be assembled. Each elementary module 10[A] is comprised of eight ZISC chips referenced 10(1) to 10(8). For sake of simplicity, let us just consider the first bit signal OUT**1 which is generated by each elementary module. The OUT**1 bit signals generated by the R elementary modules are inputted in a R-way AND gate 68.1 to generate the OUT***1 bit signal. The third asterisk indicates that a third logic function (in this case an AND) has been performed. In turn, the OUT***1 bit signal is applied to each of the eight ZISC chips of each elementary module via an inverting receiver circuit RR (not shown) to produce the OR1 bit signal as explained above. AND gate 68.1 ensures consistency with the implementation shown by reference to Fig. 35. The reasoning may be applied to the other bit signals that are processed in respective AND gates 68.2 to 68.p to generate the OUT***2 to OUT***p which in turn, feeds the OR2 to ORp bit signals respectively. The AND circuits 68.1 to 68.p may be functionally built by OR, NOR or NAND gates and the like as well, as far as the desired AND logic function is performed.

The description made by reference to Fig. 38, clearly demonstrates that only a few number of devices are required to implement the inter-neuron communication system including up to three logic functions. The COM***-BUS which is the essential component of the GDATA-BUS, can theoretically connect together an unlimited number of base ZISC chips 10 and thus of neuron circuits. Each neuron circuit sends its local result and output signals on the NR-BUS and the NOUT-BUS respectively at the same time for simultaneous processing in OR circuit 12. Next, the NR* and OUT* that are outputted by OR circuit 12 are then AND dotted on the COM**-BUS, which again allows a fast parallel processing of these signals. Finally, these two successive OR and AND stages result in a low overall processing delay because of the fully parallel architecture of the base ZISC chip 10. The COM**-BUS is also an essential element to full chip cascadability discussed above by reference to the daisy chain circuit 600. As mentioned above, the OR-BUS is applied to each neuron circuit of either the single ZISC chip 10 of Fig. 4(A) or to each of the base ZISC chips 10 of Fig. 4(B) that are assembled to form an elementary or a complex module. In addition, several hardware solutions are available to the user to realize any global logic function on the COM**-BUS, such as, but not limited to, OR-dotting and/or AND-dotting functions. Note also that with the architecture of ZISC chip 10'' of Fig. 10, only one OR stage is required. This OR stage is preferably performed by OR dotting via driver circuits labelled DR*. In this case, the inter-neuron communication system only includes block 19 (where the AND dotting is physically performed instead the OR dotting for the practical reasons explained above), the COM**-BUS and the OR-BUS which directly derived therefrom.

The above description relates to an inter-neuron communication system and therefore appears to be limited to a specific application to neural networks constructed either by a base ZISC chip 10 or by combining the desired number thereof. However, this approach may be generalized, in particular to a multi-processor unit comprised of a plurality of base processing units. In fact, this approach is valid everywhere it is possible to send local result data generated by all or at least a determined number of processing units at the same time on a common communication bus and to have said processing units to take part to the determination of a global result. Such determination typically consists in performing a desired logic function of the local result data to produce a global result data available on the said common communication bus. The global result data may be directly accessed on this bus or stored in a register. Finally, a compare circuit placed in each processing unit then compares the local data to the said global data which is transported therein via a feedback bus. In turn, the result of the comparison which is a new local result data can be subsequently used to initiate various actions, such as to inactivate certain resources or blocks of a determined processing unit from the group of processing units or to compute still another global result data as well. Each local result signal transported on a local line or bus is thus the result of a local evaluation whose status is dependent of the processing unit in consideration. On the contrary, any global result signal transported on a global line or bus is the result of a global evaluation performed at the level of all base processing units.

In the case of the neural network 11(A) of Fig. 4(A), neuron circuits 11-1 to 11-N are interconnected via the OR circuit 12, the on-chip common communication bus COM*-BUS and the OR-BUS as a feedback bus. An essential problem mentioned above is to find if all the committed neuron circuits that have fired have the same category or if they belong to at least two different categories. To that end, the local category C (held in the category register 450) and the global category C* (via the OR-BUS) are compared in identification circuit 400. In this example, the neuron circuit 11 plays the same role as the base processing unit mentioned above. The local category C held in the category register 450 is a local data and the global category C* is the global data obtained by ORing all the local categories in OR sub-circuit 12.1. The global category C* is transported to each neuron circuit via the OR-BUS which thus plays the role of the feedback bus for being compared with the local category C held therein. The result of the comparison is signal UNC/FIRE.OK which is a local result. In turn, all local result signals UNC/FIRE.OK are ORed in circuit 12 to generate the UNC/FIRE.OK* signal which is a global result. For instance, this comparison is performed during the recognition phase according to box 41 of Fig. 14(B). Finally, the COM**-BUS is composed only by a plurality of global result lines transporting global result signals (F*, DEGOUT* and UNC/FIRE.OK*) and of global output lines transporting the global output signal (OUT**).

Let us assume now that each base processing unit has one output bus to transport a local result signal and one input or feedback bus transporting the global result. A number of base processing units can be connected that way by the use of well established connection rules. Fig. 39 gives an example of this configuration in the case a dotted AND function is used, so that the implementation is very simple. Now turning to Fig. 39, there is shown an elementary processing unit 69 comprised of a number N of base processing units referenced 70-1 to 70-N. The strap function mentioned above that is required between the global result bus W and the feed-back bus Z is performed by a strap bus STR. A load resistor RL is adequately connected to each line of the global result bus W as schematically illustrated in Fig. 39. Note that the strap function may be replaced by a driver circuit.

The above approach illustrated by reference to Fig. 39, may be further complicated for maximal generalization. In case a high number of base processing units have to be interconnected, this number may have a limit imposed by the technology. Beyond this limit, an intermediate merge block would be required to combine two or more of said global result signals, now considered as intermediate result signals to produce a new global result signal on a global result bus. Finally, this global result bus is connected as a feed-back bus to each of said base processing units via the strap bus. Due to this structure, no supervisor is needed for data management, only the strap connection between the global result line and the feed-back line is in fact required. The reasoning may be even further generalized, new global result signals, in turn, becoming intermediate result signals that can be combined in another intermediate circuit to produce a final global. result signal on a final global result bus.

Fig. 40 illustrates this generalization in some extent. Two elementary processing units such as described in conjunction with Fig. 39, referenced 69[1] and 69[2] are assembled to produce a complex processing unit 71. The respective global buses labelled W1 and W2 are applied to AND gate 72 whose output, via strap bus STR, forms the feedback bus Z that feeds each base processing unit 70-1 to 70-N of each of elementary processing units 69[1] and 69[2].

\* ANCILLARY CIRCUITS \*

A convenient way of loading an influence field value that is always less than MaxIF in the AIF register 352 is to use the simplified version of the search/sort circuit 502 described by reference to Fig. 29. Now turning to Fig. 41, there is described circuit 73 which illustrates the detailed construction of this additional circuit referenced 502' in a base ZISC chip 10. The role of circuit 502' is to clamp the influence field at the MaxIF value. Clamp circuit 502' is built with the same elementary base units 510 of Fig. 28 that are cascaded in series the same way.

The main differences with regard to the search/sort circuit 502 of Fig. 29 are not in terms of construction but rather in terms of connections. The input signal that is applied to clamp circuit 502' is MaxIF instead of the calculated distance D. When clamp circuit 502' is needs to be selected (not inhibited), its EXCLIN input is connected to the ground potential GND. On the other hand, its EXCLOUT signal is not outputted. With the described implementation of Fig. 41, the OR gates of dedicated OR sub-circuit 12.1 of Fig. 29 must be provided with an additional input, they are now labelled 12'.1 to 12'.4 (they have N+1 inputs instead of N inputs). Only one clamp circuit 502' is implemented in a base ZISC chip 10 and it participates in the same way to the determination of the minimum distance Dmin. The role of this clamp circuit 502' is thus to set the AIF register 352 of a newly engaged neuron circuit to the MaxIF value during the learning phase. For instance, this can occur when none neuron circuit of the base neural network 11(A) having learned, the MaxIF value is loaded in the ready to learn neuron circuit.

**THE BASE ZISC CHIP MAJOR FEATURES**

The base ZISC chip 10 of Fig. 4 (B) is adapted to learn and recognize input vectors up to 64 components (entries). Because of its parallel architecture, the ZISC chip 10 simultaneously computes the distance between the input vector and all the prototype vectors previously stored therein (neuron circuits having "learned"). The distance calculation method is based on a norm that is user selectable. Note that this norm may be different from one neuron circuit to another one. In the above description, the two available distance computation methods are based upon the L1 and Lsup norms, however, other calculation methods may be envisioned as well. The limitation of N (N = 36) neuron circuits in the base ZISC chip 10 is not a problem because of the full cascadability of the chips. As a consequence, an unlimited number of prototype vectors can be stored in the neural network. During the learning phase, each neuron circuit automatically adjusts its influence field in order to optimally map the feature space. This adjustment occurs simultaneously in all neuron circuits without requiring any external action, such as a supervision by a micro-controller. As a result, the learning process is performed internally and is fully automatized. On the other hand, the learning time is independent of the number of neuron circuits forming the neural network. In addition, to further save time, the pre-charge step allows to have the input vector components stored during the recognition phase, so that a new presentation of the input vector is not necessary for learning. The ZISC chip 10 is provided with a high number of categories (16384) and further includes a context feature which in particular allows to divide the neural network in a number of sub-sets. It is also provided with an efficient search and sort scheme for fast minimum distance determination and efficient sorting of the remaining distances. The base ZISC chip 10 can operate with both SAVE and RESTORE modes for increased efficiency. Finally, the number of neuron circuits forming any neural network is unlimited and transparent for the user.

**MAIN APPLICATIONS OF THE ZISC CHIP**

The base ZISC chips 10 of the present invention are based on a highly innovative neuron circuit architecture. As a result, that allows the construction of elementary and complex modules that incorporates neural networks of any desired size. rating the disclosed innovative neuron circuit structures according to the present invention are adapted to meet a number of applications in various fields of the technology. The ZISC chip provides an innovative and low cost solution in many domains such as :

Image recognition (factory automation, ... )
Image compression (data storage, ... )
Video compression (video storage, video conference, ... ) Character recognition
Voice processing and recognition
Signal recognition (radar, sonar and the like)
Data analysis
Robotics
Equipment monitoring
Signal processing
etc.

TABLE OF CONTENTS

| TITLE | page |
|---|---|
| **FIELD OF INVENTION** | |
| **CO-PENDING PATENT APPLICATIONS** | |
| **BACKGROUND OF THE INVENTION** | |
| **SUMMARY OF THE INVENTION** | |
| **OBJECTS OF THE INVENTION** | |
| **BRIEF DESCRIPTION OF THE DRAWINGS** | |
| **DESCRIPTION OF THE PREFERRED EMBODIMENTS** | |
| **BRIEF DESCRIPTION OF THE ZISC CHIP ARCHITECTURES** | |
| INTRODUCTION | |
| THE BASE ZISC CHIP ARCHITECTURE | |
| VARIANTS OF THE BASE ZISC CHIP ARCHITECTURE | |
| THE ZISC MODULE ARCHITECTURES | |
| **BRIEF DESCRIPTION OF THE BASE ZISC CHIP OPERATION** | |
| INITIALIZATION MODE | |
| RECOGNITION & PRE-CHARGE MODES | |
| LEARNING MODE | |
| SAVE & RESTORE MODES | |
| **DETAILED DESCRIPTION OF THE BASE ZISC CHIP** | |
| THE CONTEXT REGISTER AND MATCHING CIRCUIT (100/150) | |
| THE R/W MEMORY CIRCUIT (250) | |
| THE DISTANCE EVALUATOR CIRCUIT (200) | |
| THE COMPARE AND IF CIRCUITS (300/350) | |
| THE IDENTIFICATION CIRCUIT (400) | |
| THE Dmin DETERMINATION CIRCUIT (500) | |
| THE DAISY CHAIN CIRCUIT (600) | |
| THE INTER-NEURON COMMUNICATION SYSTEM (COM-BUS) | |
| THE ANCILLARY CIRCUITS | |
| **THE BASE ZISC CHIP MAJOR FEATURES** | |
| **MAIN APPLICATIONS OF THE BASE ZISC CHIP** | |
| **TABLE OF CONTENTS** | |
| **LIST OF SYMBOLS & NOTATIONS** | |
| **CLAIMS** | |
| **ABSTRACT** | |

**LIST OF SYMBOLS & NOTATIONS**

(in the description)

| SYMBOL | DEFINITION |
|---|---|
| A | the input vector |
| AIF | actual influence field value |
| Al | lth component (weight) of the input vector |
| al | lth bit of the input vector component |
| B | the prototype vector |
| Bl | lth component of the prototype vector |
| bl | lth bit of the prototype vector component |
| CAT | input category |
| CAT-BUS | the bus transporting the input category |
| C | local category of neuron circuit 11 |
| Cat-BUS | the bus transporting the local category |
| Ci or C-i | local category of neuron circuit 11-i |
| C* or C** | global category |
| c | carry bit signal |
| Cin | carry input signal of adders |
| Cgen, Cout | carry output signals of adders |
| Cmin | the minimum category |
| CO | a control signal for committed neuron circ. |
| COM*-BUS | the bus transporting the R* and OUT* signals |
| COM**-BUS | "     "      " the R** and OUT** signals |
| COM-BUS | the generic name of the COM* and COM**-BUS |
| CXT | input context data |
| CXT-BUS | the bus transporting the CXT data |
| Cxt | local context data |
| Cxt-BUS | the bus transporting the Cxt data |
| D, Di or D-i | distance calculated by a neuron circuit |
| DATA-BUS | the bus transporting the data |
| DCI | daisy chain input terminal/signal |
| DCO | daisy chain output terminal/signal |
| DIST-BUS | the bus transporting the distance D signal |
| DEG | degenerate status signal |
| DEGOUT | local result degenerate signal |
| Dmin | the minimum distance |
| EXCLIN | input exclusion signal of search/sort circ. |
| EXCLOUT | output exclusion signal of search/sort circ. |
| F | local result fire signal |
| F* or F** | global result fire signal |
| f | force bit signal |
| g | inverted force bit signal |
| GDATA-BUS | the global out bus |
| INDATA-BUS | the input data bus |
| i | a working variable |
| i or -i | related to neuron circuit 11-i |
| J | signal generated by compare circuit |
| J-BUS | the bus transporting the J signal |

(continued)

| SYMBOL | DEFINITION |
|---|---|
| jk | the kth bit of the J signal |
| K | an intermediate signal in block 400 |
| k | a working variable |
| L | a control signal active during the learning |
| LT | an intermediate signal (Lower Than) |
| LTE | an intermediate signal (Lower Than or Equal) |
| Lk | a binary word formed by the kth line Lk |
| L1norm | the manhattan distance calculation method |
| Lsup | the square distance calculation method |
| l | a working variable |
| M-BUS | a bus of the ZISC chip |
| m | number of bits for coding a vector component |
| MaxIF | the maximum value of the AIF |
| MinIF | the minimum value of the AIF |
| n | number of vector components |
| N | number of neuron circuits in a ZISC chip |
| NM | the normal sub-mode (in recognition phase) |
| NNM | the nearest neighbor sub-mode (") |
| NO | input norm signal |
| NO-BUS | the bus transporting the NO signal |
| No | local norm signal |
| No-BUS | the bus transporting the No signal |
| NOUT | local (or neuron) output signal |
| NOUT-BUS | the bus transporting the NOUT signal |
| NR | composite local result signal |
| NR-BUS | the bus transporting the NR signal |
| OR | feedback signal (equal to OUT* or OUT**) |
| OR-BUS | the bus transporting the OR signal |
| OUT* | global output signal (one ORing) |
| OUT** | global output signal (two ORing) |
| p | width of various buses of the ZISC chip |
| p | propagate bit ($p = \bar{f}$) |
| PU | processing unit |
| q | a working variable |
| Q | maxim. number of chips in an elem. mod. |
| R | " of elem. mod in a complex mod. |
| R* | composite global result signal |
| R*-BUS | the bus transporting the R* signal |
| RAM-BUS | a bus of the neuron circuit |
| RESET | the general reset control signal |
| RS | a control signal for READY to STORE |
| s | a bit of a partial sum |
| S | the sum signal outputted by an adder |
| SELECT | a gating signal |
| SL | the status line |
| ST | the STORE control signal |
| UNC/FIRE.OK | local result ambiguity signal |
| UNC/FIRE.OK* | global result ambiguity signal |
| X | an intermediate signal in the adder |

(continued)

| SYMBOL | DEFINITION |
|--------|------------|
| ( ) | designates a chip related reference |
| [ ] | designates an elem. module related ref. |
| { } | designates a complex module related ref. |

**Claims**

1. A neuron circuit architecture for a neural network (11(A)) comprised of a plurality of neuron circuits adapted to the identification of an input vector (A) during the recognition phase and to learn an input vector during the learning phase, the neuron circuit architecture generating local (or neuron) result signals, e.g. of the fire type, including:

   an input data bus (DATA-BUS) which transports the input vector data;

   an influence field bus (MaxIF/MinIF-BUS) which transports the maximum (MaxIF) and the minimum (MinIF) values of the influence field;

   an input category bus (CAT-BUS) which transports the input category signal (CAT);

   an address/control bus (IADD/CTL-BUS) which transports the address and control signals that are required for the proper operation of the neuron circuit;

   R/W memory means (250) connected to said input data bus that is adapted to store the prototype vector as soon it is engaged during the learning phase, under the control of a memory control (RS) signal and then to output a corresponding signal on a memory output bus (RAM-BUS) when required;

   distance evaluation means (200) connected to said input data bus and memory output bus that is adapted to calculate the distance between an input vector (A) and the stored prototype vector (B) and to generate a signal D that is representative of said distance on a distance bus (DIST-BUS);

   IF register means (350) connected to said distance bus, influence field bus for storing or transmitting the actual influence field value (AIF) of the stored prototype vector B (which ranges from a lower limit: MinIF and an upper limit: MaxIF), the calculated distance D, or the said minimum influence field value (MinIF) to generate a signal (J) on a dedicated bus (J-BUS).

   distance compare means (300) for comparing the distance D with the signal outputted from the IF register means to generate first and second intermediate signals (LT, LTE), wherein said first intermediate signal (LT) is active if D < AIF during the recognition phase and said second intermediate signal is active if D <= MinIF during the learning phase;

   local category register means (450) connected to the input category bus (CAT-BUS) for storing the local category C assigned to the stored prototype vector as soon as as the neuron circuit is engaged;

   identification means (400) receiving the said intermediate signals, a feed-back signal (OR) transported on a feed-back bus (OR-BUS) representing the result of ORing all the local categories of the engaged neuron circuits, the input category signal (CAT), and the local category signal (C) to generate the local result signals (F, DEGOUT, UNC/FIRE.OK) on a local result bus (NR-BUS) that are the individual response of the neuron circuit to the input vector presentation during the recognition phase.

2. The neuron circuit architecture of claim 1 further including:

   daisy chain circuit means connected to the corresponding daisy chain circuits of the two adjacent neuron circuits in the neural network that are adapted to differentiate between the free and engaged neuron circuits of the neural network.

3. The neuron circuit architecture of claim 2 wherein the said daisy chain circuit means further identifies the first free, i.e. the ready to learn neuron circuit.

4. The neuron circuit architecture of claim 3 wherein the said daisy chain circuit means generates the memory control signal that is applied to the R/W memory means.

5. The neuron circuit block architecture of any above claim further including :

minimum determination means (500) receiving the local category signal C, the distance D calculated by the distance evaluator circuit and the feedback signal available on the feed-back bus (OR-BUS) that are adapted to determine the minimum distance (category) Dmin (Cmin) among all the distances (categories) calculated by all the neuron circuits of the neural network and to generate a corresponding local output signal (NOUT) on a local output bus (NOUT-BUS).

6. The neuron circuit architecture of any above claim further including:

an input context bus (CXT-BUS) for transporting the input context data (CXT);

local context register means (100) connected to said input context bus to store the local context data (Cxt) to be outputted on the local context bus (Cxt-BUS); and,

matching means (150) connected to said input context bus and local context bus for comparing the contents of the local context register means with the data appearing on the said input context bus to generate a neuron selection signal (NS) that is used to select or inhibit said neuron circuit during the recognition phase.

7. The neuron circuit architecture of any above claim wherein said distance evaluator means is adapted to calculate the distance D according to different norms that are user selectable via a norm data (No) transported on a local norm data bus (No-BUS).

8. The neuron circuit architecture of any above claim 4 to 7 further including:

pre-charge circuit means for pre-charging the input vector in the R/W memory means of the ready to learn neuron circuit during the recognition phase.

**Patentansprüche**

1. Eine Neuronalschaltungsarchitektur für ein neuronales Netzwerk (11(A)) bestehend aus einer Vielzahl von Neuronalschaltungen, die zur Identifizierung eines Eingabevektors (A) während der Erkennungsphase und zum Lernen eines Eingabevektors während der Lernphase ausgelegt ist, wobei die Neuronalschaltungsarchitektur lokale (oder neuronale) Ergebnissignale generiert, z.B. vom Feuer-Typ, umfassend:

einen Eingangsdatenbus (DATEN-BUS), der die Eingabevektordaten überträgt;

einen Einflussfeldbus (MaxIF/MinIF-BUS), der die maximalen (MaxIF)-Werte und die minimalen (MinIF)-Werte des Einflussfelds überträgt;

einen Eingangskategorie-Bus (CAT-BUS), der das Eingangskategorie-Signal (CAT) überträgt;

einen Adressen/Steuerbus (IADD/CTL-BUS), der die Adressen- und die Steuersignale überträgt, die für den ordnungsgemäßen Betrieb der Neuronalschaltung erforderlich sind;

ein an den Eingangs-Datenbus angeschlossenes Schreib-Lese-Speichermittel (250), das so ausgelegt ist, dass es den Prototypvektor speichert, sobald es unter der Steuerung eines Speichersteuersignals (RS) während der Lesephase belegt wird, und dann ein entsprechendes Signal auf einen Speicherausgangsbus (RAM-BUS) legt, sofern erforderlich;

ein mit dem Dateneingangs-Bus und dem Speicherausgangs-Bus verbundenes Abstandsbewertungsmittel (200), das ausgelegt ist, den Abstand zwischen einem Eingangsvektor (A) und dem gespeicherten Prototypvektor (B) zu berechnen und ein für den Abstand repräsentatives Signal D auf einem Abstandsbus (DIST-BUS) zu generieren;

ein mit dem Abstandsbus verbundenes IF-Registermittel (350), einen Einflussfeldbus zum Speichern oder Übertragen des augenblicklichen Einflussfeldwertes (AIF) des gespeicherten Prototypvektors B (der zwischen einer untere Grenze: MinIF, und einer oberen Grenze: MaxIF liegt), des berechneten Abstands D, oder des Minimumeinflusswertes (MinIF), um ein Signal (J) auf einem zweckgebundenen Bus (J-BUS) zu generieren;

ein Abstandsberechnungsmittel (300) zum Vergleichen des Abstands D mit dem vom IF-Registermittel ausgegebenen Signal zwecks Generieren erster und zweiter Zwischensignale (LT, LTE), von denen das erste Zwischensignal (LT) aktiviert wird, wenn während der Erkennungsphase D < AIF ist, und das zweite Zwischensignal aktiviert wird, wenn während der Lernphase D <= MinIF ist;

ein mit dem Eingangskategorie-Bus (CAT-BUS) verbundenes Lokalkategorie-Registermittel (450) zum Speichern der Lokalkategorie C, die dem gespeicherten Prototypvektor zugeordnet wird, sobald die Neuronalschaltung belegt wird;

ein Identifizierungsmittel (400), das die Zwischensignale, ein auf einem Rückkopplungsbus (OR-BUS) übertragenes Rückkopplungssignal (OR), das das Ergebnis der ODER-Verbindung aller Lokalkategorien der belegten Neuronalschaltungen repräsentiert, das Eingangskategoriesignal (CAT) und das Lokalkategoriesignal (C) zum Generieren der Lokalergebnissignale (F, DEGOUT, UNC/FIRE.OK) auf einem Lokalergebnisbus (NR-BUS) empfängt, die die einzelnen Antworten der Neuronalschaltung auf die Eingabevektor-Vorlage während der Erkennungsphase sind.

2.  Die Neuronalschaltungsarchitektur gemäß Anspruch 1, die ferner umfasst:

Prioritätsverkettungsmittel, die mit den entsprechenden Prioritätsverkettungsschaltungen der beiden anliegenden Neuronalschaltungen im Neuronalnetzwerk verbunden sind, die zum Unterscheiden zwischen freien und belegten Neuronalschaltungen des Neuronalnetzwerks ausgelegt sind.

3.  Die Neuronalschaltungsarchitektur gemäß Anspruch 2, in der das Prioritätsverkettungsschaltungsmittel ferner die erste freie, d.i. die zum Lernen bereite Neuronalschaltung identifiziert.

4.  Die Neuronalschaltungsarchitektur gemäß Anspruch 3, in der das Prioritätsverkettungsschaltungsmittel das Speichersteuersignal generiert, das an das Schreib-Lese-Speichermittel angelegt wird.

5.  Die Neuronalschaltungsblockarchitektur eines beliebigen der obigen Ansprüche, die ferner aufweist:

Minimumbestimmungsmittel (500), die das Lokalkategoriesignal C, den Abstand D, der von der Abstandsbewertungsschaltung berechnet wird, und das auf dem Rückkopplungsbus (OR-BUS) liegende Rückkopplungsmittel empfangen, die so ausgelegt sind, dass sie den Mindestabstand (Kategorie) Dmin (Cmin) unter allen Abständen (Kategorien) bestimmen, die von allen Neuronalschaltungen des Neuronalnetzwerks berechnet werden, und ein entsprechendes lokales Ausgangssignal (NOUT) auf einem lokalen Ausgangsbus (NOUT-BUS) generieren.

6.  Die Neuronalschaltungsarchitektur eines beliebigen der obigen Ansprüche, die ferner aufweist:

einen Eingangskontextbus (CXT-BUS) zum Befördern der Eingangskontextdaten (CXT);

Lokalkontext-Registermittel (100), die mit dem Eingangskontextbus verbunden sind, um die auszugebenden Lokalkontextdaten (Cxt) auf dem Lokalkontextbus (Ctx-BUS) zu speichern; und

Gleichheitsprüfungsmittel (150), die mit dem Eingangskontextbus und dem Lokalkontextbus verbunden sind, zum Vergleichen der Inhalte des Lokalkontext-Registermittels mit den Daten, die auf dem Eingangskontextbus auftreten, um ein Neuronalauswahlsignal (NS) zu generieren, das benutzt wird, um die Neuronalschaltung während der Erkennungsphase anzuwählen oder zu sperren.

7. Die Neuronalschaltungsarchitektur eines beliebigen der obigen Ansprüche, in dem das Abstandsbewertungsmittel ausgelegt ist zum Berechnen des Abstands D gemäß unterschiedlichen Normen, die vom Anwender auswählbar sind mittels Normdaten (No), die auf einem Lokalnormdatenbus (No-BUS) übertragen werden.

8. Die Neuronalschaltungsarchitektur eines beliebigen der obigen Ansprüche 4 bis 7, die ferner umfasst:

   Vor-Lade-Schaltungsmittel zum Vor-Laden des Eingabevektors in das Schreib-Lese-Speichermittel der während der Erkennungsphase lernbereiten Neuronalschaltung.

## Revendications

1. Architecture de circuit de neurone destinée à un réseau neuronal (11(A)) constitué d'une pluralité de circuits de neurones conçus pour l'identification d'un vecteur d'entrée (A) durant la phase de reconnaissance et pour l'apprentissage d'un vecteur d'entrée durant la phase d'apprentissage, l'architecture de circuit de neurone générant des signaux de résultats locaux (ou de neurones) par exemple du type déclenchement, comprenant :

   un bus de données d'entrée (DATA-BUS) qui transporte les données du vecteur d'entrée,

   un bus de champ d'influence (MaxIF/MinIF-BUS) qui transporte les valeurs maximum (MaxIF) et minimum (MinIF) du champ d'influence,

   un bus de catégorie d'entrée (CAT-BUS) qui transporte le signal de catégorie d'entrée (CAT),

   un bus d'adresse/commande (IADD/CTL-BUS) qui transporte les signaux d'adressage et de commande qui sont nécessaires au fonctionnement correct du circuit de neurone,

   un moyen de mémoire à lecture/écriture (250) relié audit bus de données d'entrée qui est conçu pour mémoriser le vecteur prototype dès qu'il est engagé durant la phase d'apprentissage, sous la commande d'un signal de commande de mémoire (RS) et ensuite pour fournir en sortie un signal correspondant sur un bus de sortie de mémoire (RAM-BUS) lorsque nécessaire,

   un moyen d'évaluation de distance (200) relié audit bus de données d'entrée et un bus de sortie de mémoire qui est conçu pour calculer la distance entre un vecteur d'entrée (A) et le vecteur prototype mémorisé (B) et pour générer un signal D qui est représentatif de ladite distance sur un bus de distance (DIST-BUS),

   un moyen de registre de champ IF (350) relié audit bus de distance, un bus de champ d'influence destiné à mémoriser ou à transmettre la valeur du champ d'influence réelle (AIF) du vecteur prototype mémorisé B (qui évolue entre une limite inférieure : MinIF et une limite supérieure : MaxIF), la distance calculée D, ou ladite valeur de champ d'influence minimum (MinIF) afin de générer un signal (J) sur un bus spécialisé (J-BUS),

   un moyen de comparaison de distance (300) destiné à comparer la distance D au signal fourni en sortie à partir du moyen de registre de champ IF de façon à générer des premier et second signaux intermédiaires (LT, LTE), dans lequel ledit premier signal intermédiaire (LT) est actif si D < AIF durant la phase de reconnaissance et ledit second signal intermédiaire est actif si D <= MinIF durant la phase d'apprentissage,

   un moyen de registre de catégorie locale (450) relié au bus de catégorie d'entrée (CAT-BUS) destiné à mémoriser la catégorie locale C affectée au vecteur de prototype mémorisé dès que le circuit de neurone est engagé,

   un moyen d'identification (400) recevant lesdits signaux intermédiaires, un signal de contre-réaction (OR) transporté sur un bus de contre-réaction (OR-BUS) représentant le résultat de l'application d'un OU logique à toutes les catégories locales des circuits de neurones engagés, le signal de catégorie d'entrée (CAT) et le signal de catégorie locale (C) afin de générer les signaux de résultats locaux (F, DEGOUT, UNC/FIRE.OK) sur un bus de résultat local (NR-BUS) qui représentent la réponse individuelle du circuit de neurone à la présentation du vecteur d'entrée durant la phase de reconnaissance.

2. Architecture de circuit de neurone selon la revendication 1, comprenant en outre :

des moyens de circuits en chaîne reliés aux circuits en chaîne correspondants des deux circuits de neurones adjacents dans le réseau neuronal qui sont conçus pour établir la différence entre les circuits de neurones libres et engagés du réseau neuronal.

3. Architecture de circuit de neurone selon la revendication 2, dans laquelle ledit moyen de circuit en chaîne identifie en outre le premier circuit libre, c'est-à-dire le circuit de neurone prêt à l'apprentissage.

4. Architecture de circuit de neurone selon la revendication 3, dans laquelle ledit moyen de circuit en chaîne génère le signal de commande de mémoire qui est appliqué au moyen de mémoire à lecture/écriture.

5. Architecture de blocs de circuits de neurones selon l'une quelconque des revendications précédentes comprenant :

un moyen de détermination de minimum (500) recevant le signal de catégorie locale C, la distance D calculée par le circuit évaluateur de distance et le signal de contre-réaction disponible sur le bus de contre-réaction (OR-BUS) qui sont conçus pour déterminer la distance minimum (catégorie) Dmin (Cmin) de même que toutes les distances (catégories) calculées par tous les circuits de neurones du réseau neuronal et pour générer un signal de sortie locale correspondant (NOUT) sur un bus de sortie locale (NOUT-BUS).

6. Architecture de circuit de neurone selon l'une quelconque des revendications ci-dessus, comprenant en outre :

un bus de contexte d'entrée (CXT-BUS) destiné à transporter les données du contexte d'entrée (CXT),

un moyen de registre de contexte local (100) relié audit bus de contexte d'entrée pour mémoriser les données du contexte local (Cxt) devant être fournies en sortie sur le bus de contexte local (Cxt-BUS), et

un moyen de mise en correspondance (150) relié audit bus de contexte d'entrée et au bus de contexte local afin de comparer le contenu du moyen de registre de contexte local aux données apparaissant sur ledit bus de contexte d'entrée afin de générer un signal de sélection de neurone (NS) qui est utilisé pour sélectionner ou inhiber ledit circuit de neurone durant la phase de reconnaissance.

7. Architecture de circuit de neurone selon l'une quelconque des revendications ci-dessus, dans laquelle ledit moyen d'évaluateur de distance est conçu pour calculer la distance D conformément à des normes différentes qui peuvent être sélectionnées par l'utilisateur par l'intermédiaire de données de norme (No) transportées sur un bus de données de norme locale (No-BUS).

8. Architecture de circuit de neurone selon l'une quelconque des revendications 4 à 7 ci-dessus, comprenant en outre :

un moyen de circuit de précharge destiné à précharger le vecteur d'entrée dans le moyen de mémoire à lecture/écriture du circuit de neurone prêt à un apprentissage durant la phase de reconnaissance.

FIG.1

FIG.3(A)

FIG.2(A)

FIG.2(B)

FIG.2(C)

FIG.2(D)

FIG.3(B)

FIG.4(A)

FIG.4(B)

FIG. 5

FIG.6

FIG.7

FIG.8

FIG.9

G-BUS

11" (#)    DR/RR    DR/RR    DR/RR

10"

ZISC
NEURON
CIRCUIT
# 1

ZISC
NEURON
CIRCUIT
# 2

ZISC
NEURON
CIRCUIT
# N

DC0-N

11"-N

11"-1    11"-2

DR*/RR    DR*/RR    DR*/RR

GDATA -BUS

COM*** -BUS

FIG.10

FIG.11

FIG.12

FIG.13

FIG.14(A)

27

```
                    ┌─────────────────────┐
                    │   DETERMINATION     │──── 40
                    │    OF C* & F*       │
                    └─────────────────────┘
                               │
                               ▼
                          ╱─────────╲
                        ╱    41       ╲
                      ╱   C = C*    ╲──── NO ──────────┐
                      ╲     ?       ╱                  │
                        ╲         ╱                    ▼
                          ╲─────╱              ┌──────────────┐──── 44
                            │                  │   ID* = 0    │
                           YES                 └──────────────┘
                            │                         │
                            ▼    42                    │
                    ┌─────────────────────┐            │
                    │      ID* = 1        │            │
                    └─────────────────────┘            │
                            │                          │
                            ▼                          │
                    ┌─────────────────────┐            │
                    │   READ CATEGORY     │──── 43     │
                    └─────────────────────┘            │
              45 ──────────○◄───────────────◄──────────┘
                            │
                            ▼
                    ┌─────────────────────┐──── 46
                    │   DETERMINATION OF  │
                    │    DMin (CMin)      │
                    │ SORTING OF DISTANCES │
                    │    ( CATEGORIES )    │
                    └─────────────────────┘
                            │
                            ●
                          ╱   ╲
                        ╱       ╲ ──── 47
                      ▼           ▼
                 ╭────────╮   ╭──────────╮
                 │  END   │   │ LEARNING │
                 ╰────────╯   ╰──────────╯
```

FIG.14(B)

47

START

48
CAT = C —YES→ UNC/FIRE.OK = 1   54

|NO

UNC/FIRE.OK = 0
D ——→ AIF REG.   49

50
D ≤ MinIF —NO→

|YES

1 ——→ DEG.REG   51

MinIF ——→ AIF REG   52

53
- - - NC/NN - - -

DETERMINATION
OF Dmin & UNC/FIRE.OK*   55

56
CAT = 0 —YES→

|NO

Dmin ——→ AIF REG.   57

58
Dmin ≤ MinIF —NO→

|YES

1 ——→ DEG.REG
MinIF ——→ AIF REG   59

60
- - - NC/NN - - -

61
UNC/FIRE.OK*
= 1 —YES→

|NO

CAT ——→ REG.450
NO/CXT ——→ REG.100   62

1 ——→ DAISY REG.   63

END

FIG.15

CXT-BUS ~       Cxt-BUS

CXT    7     7   Cxt

151

NOR      XOR    153

7    154

NOR

1      1

150

OR

1

NS

152

FIG.16

8

MAIN
NO/CXT
REGISTER   17    10

8

NO/CXT-BUS

8

11-1

CXT-BUS

7

Cxt-BUS

100     150

NS

11

11-N

FIG.17

FIG.18(A)

FIG.18(B)

FIG.18(C)

FIG.18

FIG.19

a7    b7           a1    aØ  bØ

213

$C_{gen}$ ← $C_{gen}$

205

214

$C_{out}$ ← $C_{out}$        $C_{in}$ • ← $C_{in}$

s7          s1   sØ  } S

FIG.20

FIG.22(A)

aØ    bØ

216

215.1

XOR

pØ       cØ

x | y

SEL  Cmd ← G

G=1   z=y
G=Ø   z=x

z

FIG.22(D)

x    y

SEL  Cmd ○← G

G=1   z=x
G=Ø   z=y

z

220.1

$P_1$    $c_1$          PØ   cØ

217.1

Cmd SEL       NAND

218         219

$c_{1-Ø}$       $f_{1-Ø}$

FIG.22(B)

$f_{3-2}$    $c_{3-2}$        $f_{1-Ø}$   $c_{1-Ø}$

Cmd SEL       NOR

221         222

$c_{3-Ø}$       $P_{3-Ø}$

FIG.22(C)

FIG.22

FIG.21

EP 0 694 852 B1

FIG.23

EP 0 694 852 B1

72

FIG. 24

FIG.25

**FIG.26**

START

FIRST BIT LINE ANALYSIS — 505

504

NO ← "0" FOUND? — 506

YES

FOLLOWING BIT LINE ANALYSIS

EXCLUDE COLUMNS AT 1 — 507

509

LAST BITLINE — 508

NO

YES

END

FIG.27

510-ki

EXCLINki

dki

511-ki

NOUTk-i

512-ki

ORk

EXCLOUTki

FIG.28(A)

510-ki

EXCLINki

dki

NOR — 513

511-ki

NOUTk-i

ORk

AND — 514

512-ki

OR — 515

EXCLOUTki

FIG.28(B)

FIG.28

FIG.29

FIG.30

EP 0 694 852 B1

78

FIG.31

FIG.32

FIG.33

● = CONNECTION

EP 0 694 852 B1

80

FIG. 34

FIG.35

(A)
$$\begin{vmatrix} OUT*1 \\ \bullet \\ OUT*k \\ \bullet \\ OUT*p \end{vmatrix} = \begin{vmatrix} NOUT1-1\ OR & \cdots & OR\ NOUT1-N \\ NOUTk-1\ OR & \cdots & OR\ NOUTk-N \\ NOUTp-1\ OR & \cdots & OR\ NOUTp-N \end{vmatrix}$$

(B)
$$\begin{vmatrix} OR1 \\ \bullet \\ ORk \\ \bullet \\ ORp \end{vmatrix} = \begin{vmatrix} OUT*1(1)\ OR & \cdots & OR\ OUT*1(8) \\ OUT*k(1)\ OR & \cdots & OR\ OUT*k(8) \\ OUT*p(1)\ OR & \cdots & OR\ OUT*p(8) \end{vmatrix}$$

(C)
$$\begin{vmatrix} \overline{OR1} = OUT**1 \\ \overline{ORk} = OUT**k \\ \overline{ORp} = OUT**p \end{vmatrix}, = \begin{vmatrix} \overline{OUT*1(1)}\ AND & \cdots & AND\ \overline{OUT*1(8)} \\ \overline{OUT*k(1)}\ AND & \cdots & AND\ \overline{OUT*k(8)} \\ \overline{OUT*p(1)}\ AND & \cdots & AND\ \overline{OUT*p(8)} \end{vmatrix}$$

FIG.36

82

FIG.37

FIG.38

FIG.39

FIG.40

FIG.41